(19) Europäisches Patentamt / European Patent Office / Office européen des brevets

(11) EP 4 546 467 A1

(12) EUROPEAN PATENT APPLICATION
published in accordance with Art. 153(4) EPC

(43) Date of publication:
30.04.2025 Bulletin 2025/18

(21) Application number: 23827197.7

(22) Date of filing: 20.06.2023

(51) International Patent Classification (IPC):
$H01M\ 4/62$ (2006.01)  $C08K\ 3/08$ (2006.01)
$C08K\ 3/10$ (2018.01)  $C08L\ 101/00$ (2006.01)
$C08L\ 101/02$ (2006.01)  $C08L\ 101/08$ (2006.01)
$H01M\ 4/13$ (2010.01)  $H01M\ 4/139$ (2010.01)
$H01M\ 10/052$ (2010.01)  $H01M\ 10/0562$ (2010.01)

(52) Cooperative Patent Classification (CPC):
C08F 20/18; C08F 220/06; C08K 3/08; C08K 3/10;
C08L 101/00; C08L 101/02; C08L 101/08;
H01M 4/13; H01M 4/139; H01M 4/62; H01M 4/622;
H01M 10/052; H01M 10/0525; H01M 10/056;
H01M 10/0562;                                    (Cont.)

(86) International application number:
PCT/JP2023/022773

(87) International publication number:
WO 2023/249014 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.06.2022  JP 2022100913
17.05.2023  JP 2023081754

(71) Applicant: FUJIFILM Corporation
Tokyo 106-8620 (JP)

(72) Inventor: NAGATA, Yuzo
Ashigarakami-gun, Kanagawa 258-8577 (JP)

(74) Representative: HGF
HGF Limited
1 City Walk
Leeds LS11 9DX (GB)

(54) **BINDER COMPOSITION FOR SECONDARY BATTERY, SOLID ELECTROLYTE-CONTAINING COMPOSITION FOR SECONDARY BATTERY, SHEET FOR ALL-SOLID-STATE SECONDARY BATTERY, AND ALL-SOLID-STATE SECONDARY BATTERY**

(57) Provided are a binder composition for a secondary battery, that contains a metal element-containing component having a particle diameter of 10 μm or less and a binder composed of a polymer containing less than 30% by mass of a constitutional component derived from an ethylenically unsaturated carboxylic acid in all the constitutional components of the polymer, in which the content of the metal element-containing component is $1.0 \times 10^{-3}$ to $1.0 \times 10^{4}$ ppm; a solid electrolyte-containing composition for a secondary battery, which contains the binder composition and an inorganic solid electrolyte, in which the content of the metal element-containing component is in a specific range; a sheet for an all-solid state secondary battery, which has a layer formed of the composition; and an all-solid state secondary battery.

FIG. 1

EP 4 546 467 A1

(52) Cooperative Patent Classification (CPC): (Cont.)
H01M 2300/0068; H01M 2300/0091; Y02E 60/10

**Description**

**BACKGROUND OF THE INVENTION**

1. Field of the Invention

The present invention relates to a binder composition for a secondary battery, a solid electrolyte-containing composition for a secondary battery, a sheet for an all-solid state secondary battery, and an all-solid state secondary battery.

2. Description of the Related Art

A non-aqueous electrolyte secondary battery (also referred to as a non-aqueous secondary battery) is a storage battery that includes a negative electrode, a positive electrode, and a non-aqueous solution-based electrolyte between the negative electrode and the positive electrode and enables charging and discharging by the reciprocal migration of specific metal ions such as lithium ions between both electrodes. As such a non-aqueous secondary battery, a non-aqueous electrolytic solution secondary battery which uses an organic electrolyte, and an all-solid state secondary battery which uses a solid electrolyte are used in a wide range of use applications. In particular, in the all-solid state secondary battery, all of the negative electrode, the electrolyte, and the positive electrode are solid, and thus safety and reliability which are considered as problems of the non-aqueous electrolytic solution secondary battery can be significantly improved. In addition, it is also said to be capable of extending the battery life. Furthermore, the all-solid state secondary battery can be provided to have a structure in which the electrodes and the solid electrolyte are directly disposed in series. Therefore, the all-solid state secondary battery makes it possible to highly increase the energy density as compared with a non-aqueous electrolytic solution secondary battery, and thus the application to an electric vehicle or a large-sized storage battery is expected.

In a non-aqueous electrolytic solution secondary battery and an all-solid state secondary battery, electrode layers (a negative electrode active material layer and a positive electrode active material layer), a solid electrolyte layer, and the like (collectively referred to as a constitutional layer in some cases) are usually formed using a composition (a constitutional layer forming material) containing raw material compounds and the like constituting each layer, such as an active material and an inorganic solid electrolyte, in consideration of improvement of productivity and the like. In a case where a constitutional layer is formed of these solid particles (active material, conductive auxiliary agent, inorganic solid electrolyte, and the like), the binder plays an important role in firmly binding the solid particles to each other and exhibiting desired battery characteristics. Therefore, various studies have been conducted on the binder itself or the binder composition. For example, a binder and a binder composition in which the mixed amount or content of metal impurities that cause a decrease in battery characteristics, occurrence of a short circuit, and the like is reduced have been studied.

Specifically, WO2010/032784A describes "a binder composition for a secondary battery in which a content of a particulate metal component having a particle diameter of 20 $\mu$m or more is 10 ppm or less", which is obtained by a specific manufacturing method including a particulate metal removing step of removing a particulate metal component. In addition, WO2020/090694A describes "a binder for a secondary battery electrode, which contains a crosslinked polymer having a carboxyl group or a salt thereof, in which the crosslinked polymer or the salt thereof contains 30% by mass or more and 100% by mass or less of a structural unit derived from an ethylenically unsaturated carboxylic acid monomer, and a polyvalent metal ion content of the crosslinked polymer or the salt thereof is 100 ppm or less". Furthermore, WO2016/103730A describes "a binder composition for a non-aqueous secondary battery positive electrode containing a first binding material, in which the binder composition contains iron, and at least one of ruthenium or rhodium, and a total content of the iron, the ruthenium, and the rhodium is $5 \times 10^{-3}$ parts by mass or less per 100 parts by mass of the first binding material". In addition, JP2013-157086A describes "a binder composition for manufacturing a positive electrode for a secondary battery, which contains a hydrogenated polymer obtained by hydrogenating a polymer including a conjugated diene monomer unit and a nitrile group-containing monomer unit, in which an amount of a platinum group element in the binder composition is $8 \times 10^{-4}$ parts by weight or less with respect to 100 parts by weight of the hydrogenated polymer included in the binder composition, and a Wallace plasticity of the hydrogenated polymer at 25°C is 30 to 97".

**SUMMARY OF THE INVENTION**

By the way, as described above, since the constitutional layers of the non-aqueous electrolytic solution secondary battery and the all-solid state secondary battery are formed of solid particles, the interface contact state between the solid particles is restricted, and as a result, the interface resistance is likely to increase. In addition, since the binder generally has low electron conductivity and ion conductivity, the resistance is further increased by containing the binder. Such an increase in the interface resistance causes a deterioration in the battery characteristics of the secondary battery, for example, an increase in the battery resistance (a decrease in the ion conductivity). In particular, in recent years, development for practical use of an all-solid state secondary battery has been rapidly progressing, and accordingly, a secondary battery in which a battery resistance is further reduced is required.

However, in WO2010/032784A, WO2020/090694A, WO2016/103730A, and JP2013-157086A, the reduction of the interface resistance and the battery resistance has not been studied at all.

An object of the present invention is to provide a binder composition for a secondary battery capable of further reducing a battery resistance of a secondary battery. In addition, another object of the present invention is to provide a solid electrolyte-containing composition for a secondary battery, which contains a binder composition for a secondary battery, and a sheet for an all-solid state secondary battery and an all-solid state secondary battery, which have a constitutional layer formed of the solid electrolyte-containing composition for a secondary battery.

As a result of various studies on a binder composition containing a binder that binds solid particles constituting a constitutional layer of a secondary battery (hereinafter, may be simply referred to as a binder composition), the present inventors have found that, in a case where a binder is constituted of a polymer having a constitutional component derived from an ethylenically unsaturated carboxylic acid in a content of less than 30% by mass in all constitutional components, and a metal element-containing component having a particle diameter set to 10 $\mu$m or less is used in combination with the binder in a proportion of $1.0 \times 10^{-3}$ to $1.0 \times 10^4$ ppm in the composition, the solid particles can be bound while ensuring direct interface contact between the solid particles by moderately aggregating the binder, and as a result, a constitutional layer in which an increase in resistance is highly suppressed can be formed. The present invention has been completed through further studies based on these findings.

That is, the above problems have been solved by the following means.

<1> A binder composition for a secondary battery, comprising a metal element-containing component having a particle diameter of 10 $\mu$m or less, and a polymer binder, in which a content of the metal element-containing component in the composition is $1.0 \times 10^{-3}$ to $1.0 \times 10^4$ ppm, and a polymer that forms the polymer binder contains less than 30% by mass of a constitutional component derived from an ethylenically unsaturated carboxylic acid in all constitutional components of the polymer.

<2> The binder composition for a secondary battery according to <1>, in which the metal element-containing component contains at least one metal element selected from Al, B, Ga, In, Si, or Ge.

<3> The binder composition for a secondary battery according to <1> or <2>, in which the polymer that forms the polymer binder contains a constitutional component having at least one polar functional group of the following group (a),

<polar functional group (a)>
a sulfonate group, a phosphate group, a phosphonate group, a hydroxy group, a carboxy group other than a carboxy group derived from the ethylenically unsaturated carboxylic acid, an oxetane group, an epoxy group, a dicarboxylic acid anhydride group, a thiol group, an ether group, a thioether group, a thioester group, a fluoroalkyl group, or a salt thereof.

<4> The binder composition for a secondary battery according to any one of <1> to <3>, in which the polymer that forms the polymer binder contains a carboxy group.

<5> The binder composition for a secondary battery according to any one of <1> to <4>, in which the polymer that forms the polymer binder contains 0.1% to 10 % by mass of a constitutional component having a carboxy group in all the constitutional components of the polymer.

<6> The binder composition for a secondary battery according to any one of <1> to <5>, in which a weight-average molecular weight of the polymer binder is $1.0 \times 10^4$ to $1.0 \times 10^6$.

<7> A solid electrolyte-containing composition for a secondary battery, comprising the binder composition for a secondary battery according to any one of <1> to <6>, and an inorganic solid electrolyte having an ion conductivity of a metal belonging to Group 1 or Group 2 in the periodic table, in which a content of a metal element-containing component in the solid electrolyte-containing composition for a secondary battery is $1.0 \times 10^{-3}$ to $1.0 \times 10^4$ ppm.

<8> The solid electrolyte-containing composition for a secondary battery according to <7>, further comprising an active material.

<9> The solid electrolyte-containing composition for a secondary battery according to <7> or <8>, further comprising a conductive auxiliary agent.

<10> A sheet for an all-solid state secondary battery, comprising a layer formed of the solid electrolyte-containing composition for a secondary battery according to any one of <7> to <9>.

<11> An all-solid state secondary battery comprising, in the following order, a positive electrode active material layer, a solid electrolyte layer, and a negative electrode active material layer, in which at least one layer of the positive electrode active material layer, the solid electrolyte layer, or the negative electrode active material layer is a layer formed of the solid electrolyte-containing composition for a secondary battery according to any one of <7> to <9>.
<12> An all-solid state secondary battery comprising, in the following order, a positive electrode active material layer, a solid electrolyte layer, and a negative electrode active material layer, in which at least one layer of the positive electrode active material layer or the negative electrode active material layer is an active material layer formed of the solid electrolyte-containing composition for a secondary battery according to <8> or <9>.

The binder composition for a secondary battery and the solid electrolyte-containing composition for a secondary battery according to the embodiment of the present invention are used as a material for forming a constitutional layer, thereby a constitutional layer in which an increase in resistance is highly suppressed can be formed, and a secondary battery exhibiting low resistance (high ion conductivity) can be realized. In addition, by incorporating the sheet for an all-solid state secondary battery as a constitutional layer of a secondary battery, a secondary battery exhibiting low resistance can be realized. Furthermore, the secondary battery according to the embodiment of the present invention exhibits low resistance.

The above-described and other characteristics and advantages of the present invention will be further clarified by the following description with appropriate reference to the accompanying drawing.

## BRIEF DESCRIPTION OF THE DRAWINGS

Fig. 1 is a longitudinal cross-sectional view schematically illustrating an all-solid state secondary battery according to a preferred embodiment of the present invention.
Fig. 2 is a longitudinal cross-sectional view schematically illustrating a coin-type all-solid state secondary battery produced in Examples.

## DESCRIPTION OF THE PREFERRED EMBODIMENTS

In the present invention, in a case where a numerical value range is shown to describe a content, physical properties, or the like of a component, any upper limit value and any lower limit value can be appropriately combined to obtain a specific numerical value range in a case where an upper limit value and a lower limit value of the numerical value range are described separately. On the other hand, in a case where a plurality of numerical value ranges represented by using "to" are set to make a description, the upper limit value and the lower limit value, which form each of the numerical value ranges, are not limited to a specific combination described before and after "to" as a specific numerical value range and can be set to a numerical value range obtained by appropriately combining the upper limit value and the lower limit value of each numerical value range. In the present invention, the numerical value range indicated by using "to" means a range including the numerical values before and after "to" as the lower limit value and the upper limit value, respectively.

In the present invention, an expression regarding a compound (for example, in a case where a compound is represented by an expression in which "compound" is attached to the end) is used to have a meaning including not only the compound itself but also a salt or an ion thereof. In addition, this expression has a meaning including a derivative obtained by modifying a part of the compound, for example, by introducing a substituent into the compound within a range where the effect of the present invention is not impaired.

In the present invention, (meth)acryl means one or both of acryl and methacryl.

A substituent, a linking group, or the like (hereinafter, referred to as "substituent or the like") is not specified in the present invention regarding whether to be substituted or unsubstituted may have an appropriate substituent. Accordingly, even in a case where a YYY group is simply described in the present invention, this YYY group includes not only an aspect having a substituent but also an aspect not having a substituent. The same shall be applied to a compound that is not specified in the present specification regarding whether to be substituted or unsubstituted. Examples of the preferred examples of the substituent include a substituent Z described later.

In the present invention, the polymer means a polymer; however, it has the same meaning as a so-called polymeric compound. In addition, a polymer binder (also simply referred to as a binder) means a binder composed of a polymer, and it includes a polymer itself and a binder composed (formed) to contain a polymer.

In the present invention, the main chain of each of the polymer and the polymerized chain refers to a linear molecular chain in which all the molecular chains that constitute the polymer or the polymerized chain other than the main chain can be conceived as a branched chain or a pendant group with respect to the main chain. Although it depends on the mass average molecular weight of the branched chain regarded as a branched chain or pendant group, the longest chain among the molecular chains that constitute the polymer or the polymerized chain is typically the main chain. However, the main chain does not include a terminal group that is provided in the terminal of the polymer or the polymerized chain. In addition, side chains of the polymer refer to branched chains other than the main chain and include a short chain and a long chain.

[Binder composition for secondary battery]

The binder composition for a secondary battery according to the embodiment of the present invention contains a metal element-containing component having a particle diameter of 10 $\mu$m or less in a specific content and a specific polymer binder.
By using the binder composition, as a binder that forms a constitutional layer, for a constitutional layer forming material, for example, a solid electrolyte-containing composition for a secondary battery, a constitutional layer in which an increase in resistance is highly suppressed can be formed, and a sheet for an all-solid state secondary battery, which has a constitutional layer having low resistance (high ion conductivity), a secondary battery exhibiting low resistance (high ion conductivity), and the like can be manufactured.
The above-described action effects of the binder composition according to the embodiment of the present invention are found as a result of various studies on the binder composition, and the details of the reason are not yet clear, but are considered as follows. That is, in the binder composition, the polymer binder interacts with the metal element-containing component (for example, electrostatic attraction, intermolecular force, coordination force, and the like) due to the coexistence of the metal element-containing component having a specific particle diameter at a specific content, thereby the aggregating property is enhanced. As a result, it is considered that the polymer binder forms aggregates of an moderate size that are moderately aggregated without becoming excessively large aggregates as the polymer binder precipitates, and in a case where the solid particles are bound, the aggregates can bind the solid particles while suppressing an increase in interface resistance by securing a direct contact area between the solid particles without inhibiting a direct contact state between the solid particles.
The binder composition according to the embodiment of the present invention is preferably a non-aqueous composition. In the present invention, the non-aqueous composition includes not only an aspect including no water but also a form in which a water content (also referred to as a "moisture content") is preferably 500 ppm or less. In the non-aqueous composition, the water content is more preferably 200 ppm or less, still more preferably 100 ppm or less, and particularly preferably 50 ppm or less. In a case where the binder composition is a non-aqueous composition, deterioration of the inorganic solid electrolyte in the solid electrolyte-containing composition for a secondary battery, which will be described later, can be suppressed. The water content refers to the amount of water (the mass proportion thereof to the binder composition) in the binder composition and specifically is determined as a value measured by Karl Fischer titration after carrying out filtering through a membrane filter having a pore size of 0.02 $\mu$m.
The binder composition according to the embodiment of the present invention may contain a polymer binder and a metal element-containing component, and may contain a raw material compound that forms a constitutional layer such as an inorganic solid electrolyte or an active material. However, since the binder composition according to the embodiment of the present invention is used as a material for preparing the solid electrolyte-containing composition for a secondary battery according to the embodiment of the present invention, which is a constitutional layer forming material, it is preferable that the binder composition does not contain the above-described raw material compound that forms a constitutional layer. In the present invention, the expression "the raw material compound is not contained" does not mean that the raw material compound that is inevitably contained is excluded, but means that the raw material compound may be contained within a range where the effect of the present invention is not impaired, for example, in a case where the content in the binder composition is 5% by mass or less.
The binder composition according to the embodiment of the present invention is preferably used as a constitutional layer forming material of a secondary battery, in particular, a material for preparing a solid electrolyte-containing composition for a secondary battery, and as a material for forming a constitutional layer of a sheet for an all-solid state secondary battery and an all-solid state secondary battery.
Hereinafter, the components that are included in the binder composition according to the embodiment of the present invention and components that may be included therein will be described.

<Metal element-containing component>

The binder composition according to the embodiment of the present invention contains a metal element-containing component having a particle diameter of 10 $\mu$m or less.
In the present invention, the metal element-containing component is only required to have characteristics of interacting with a polymer binder (a polar portion thereof) which will be described later, and examples thereof include a compound having a function of moderately promoting or forming self-aggregation of the polymer binder coexisting with the metal element-containing component. On the other hand, this metal element-containing component is used as a constitutional layer forming material of a secondary battery, but does not contain an active material, an inorganic solid electrolyte, a conductive auxiliary agent, a lithium salt, and the like.

Examples of such a metal element-containing component include a simple body of a metal element (a metal simple body), a compound containing one type or two or more types of metal elements, and the like.

In the present invention, the metal element includes a so-called metalloid element, and specifically includes each metal element belonging to Group 1 to Group 14 of the periodic table (excluding a hydrogen element) and further includes a metalloid element belonging to any of Group 13 to Group 17 of the periodic table. Examples of the metalloid element include each element such as boron, silicon, germanium, antimony, bismuth, selenium, and tellurium. The metal element contained in the metal element-containing component is not particularly limited, but is preferably a metal element and a metalloid element belonging to any of Group 2 to Group 14, more preferably a metal element and a metalloid element belonging to Group 13 or Group 14, and still more preferably one or two or more selected from each element of aluminum (Al), boron (B), gallium (Ga), indium (In), silicon (Si), and germanium (Ge).

The number of types of metal elements contained in the metal element-containing component is only required to be one or two or more, and the upper limit may be 30, but is preferably 1 to 4.

The metal element-containing component may be a component (compound) formed of only a metal element or may be a component (compound) formed of a metal element and another element. Examples of the component formed of a metal element and another element include an inorganic compound or an organic compound, which contains a metal element, and specific examples thereof include an oxide of a metal element, a halide of a metal element, a hydroxide of a metal element, an inorganic acid salt or an organic acid salt of a metal element, a metal element salt or an ester of boric acid, and the like, and further include an organometallic compound such as an alkylated metal or an arylated metal, and a metal alkoxide or a metal aryloxide.

The inorganic acid is not particularly limited, and examples thereof include hydrochloric acid, nitric acid, phosphoric acid, sulfuric acid, boric acid, silicic acid (including aluminosilicic acid), and the like. The organic acid is not particularly limited, and examples thereof include an organic carboxylic acid such as formic acid and acetic acid, an organic sulfonic acid such as paratoluenesulfonic acid, an organic phosphonic acid such as alkylphosphonic acid, phosphinic acid, and the like. In a case where the above-described oxide or the like contains two or more types of metal elements, the oxide or the like is also referred to as a composite oxide.

The metal element-containing component is preferably a component which is not a metal, such as a simple body or an alloy of a metal element, more preferably a component (compound) formed of a metal element and another element, still more preferably a (composite) oxide of a metal element, an inorganic acid salt or an organic acid salt of a metal element, a metal element salt of boric acid, an organometallic compound, or the like, and particularly preferably an oxide of a metal element, an aluminosilicate or an organic salt of a metal element, an organometallic compound, or the like, and it is most preferable that the metal element contained in these compounds includes one type or two or more types of the above-described preferred metal elements.

More specifically, examples of the compound containing an Al element include aluminum metal, aluminum oxide (alumina), aluminum hydroxide, trialkoxyaluminum, aluminosilicate, aluminum halide, and the like. Examples of the compound containing a B element include boric oxide, boron halide, alkylated boron, trialkyl borate, and the like. Examples of the compound containing a Ga element include a gallium metal, gallium oxide, trialkoxygallium, gallium halide, and the like. Examples of the compound containing an In element include indium metal, indium oxide, alkoxyindium, indium halide, and the like. Examples of the compound containing an Si element include silicon oxide (silica), alkoxy silicon, silicon halide, a siloxane compound, and the like. The siloxane compound may be a chain-like compound or a cyclic compound (cyclic siloxane compound). The siloxane compound generally refers to a compound having one or two or more siloxane units: -$Si(R_2)O$-units, and the number of siloxane units is appropriately determined. For example, in the cyclic siloxane compound, the number of the siloxane units can be 3 to 10, and is preferably 3 to 6. R in the siloxane unit may be an alkyl group, an aryl group, a heterocyclic group, an alkoxy group, an aryloxy group, a heterocyclic oxy group, or the like, but an alkyl group is preferable, and an alkyl group having 1 to 3 carbon atoms is more preferable. Two R's in one siloxane unit may be the same or different from each other, but are preferably the same. Each group that can be adopted as R is not particularly limited, and examples thereof include a corresponding group of the substituent Z which will be described later.

Specific examples of the metal element-containing component include compounds used in Examples which will be described later, but in the present invention, the metal element-containing component is not limited thereto. Among these, alumina, silica, and aluminosilicate of one type or two or more types of metal elements are preferable.

The metal element-containing component may exist as a metal simple body or a compound itself in a case of being coexisting with the polymer binder, for example, in a binder composition, a solid electrolyte-containing composition for a secondary battery, which will be described later, and a constitutional layer, or the metal element-containing component may be decomposed, dissociated, or the like, to exist as metal ions or the like.

In a case of being coexisting with the polymer binder, the metal element-containing component may be present in a particle shape, or may be present in a state of being dissolved in a dispersion medium or the like. In the present invention, in a case where the metal element-containing component is present in a dissolved state, the particle diameter thereof cannot be specified, but is set to "0 $\mu$m" for convenience. That is, the metal element-containing component having a particle diameter of 10 $\mu$m or less includes a particulate metal element-containing component having a particle diameter of

more than 0 $\mu$m and 10 $\mu$m or less and a metal element-containing component in a dissolved state having a particle diameter regarded as 0 $\mu$m. In the present invention, it is preferable that the metal element-containing component is present in a dissolved state. The fact that the metal element-containing component is present in a dissolved state can be confirmed by measuring the metal element-containing component using a light scattering-type particle size distribution analyzer and observing no particle size distribution (the presence of the particles cannot be confirmed).

In the binder composition, the particle diameter of the metal element-containing component is 10 $\mu$m or less. In a case where the particle diameter is 10 $\mu$m or less, it is possible to suppress the formation of excessively large aggregates (precipitation of the polymer binder) while increasing the aggregating property of the polymer binder, to reduce the area in contact with the solid particles, and to form a constitutional layer in which the solid particles are bound to each other by suppressing an increase in resistance. From the viewpoint that an increase in resistance can be further suppressed, the particle diameter of the metal element-containing component is preferably 6 $\mu$m or less, more preferably 3 $\mu$m or less, and still more preferably 1 $\mu$m or less. On the other hand, in a case where the metal element-containing component is present in a particle shape in the binder composition, the lower limit value of the particle diameter is preferably more than 0 $\mu$m.

The particle diameter of the metal element-containing component is set to a value of a particle diameter obtained by measuring particles obtained by filtering the binder composition using a magnetic filter or the like with an optical microscope.

The particle diameter of the metal element-containing component in the binder composition can be adjusted by an appropriate method, and it can be appropriately adjusted by preparing (changing), for example, the particle diameter of the metal element-containing component used in the preparation of the binder composition, the preparation conditions (mixing conditions and the like) of the binder composition, the content of the metal element-containing component, and the like.

The binder composition may contain one type or two types of metal element-containing components.

The content $C_{MB}$ of the metal element-containing component in the binder composition is $1.0 \times 10^{-3}$ to $1.0 \times 10^4$ ppm. In the present invention, ppm is in terms of mass. In a case where the content $C_{MB}$ of the metal element-containing component is in this range, it is possible to form a constitutional layer in which an increase in resistance is suppressed without excessively coating the solid particles while moderately increasing the aggregating property of the polymer binder. In addition, it is possible to suppress a decrease or loss of the battery function due to the existence of the metal element-containing component. From the viewpoint that an increase in resistance can be further suppressed while maintaining the battery function, the content $C_{MB}$ of the metal element-containing component is preferably $1.0 \times 10^{-1}$ to $1.0 \times 10^3$, more preferably 1.0 to $1.0 \times 10^3$, still more preferably 5 to $5.0 \times 10^2$ ppm, particularly preferably 10 to $1.0 \times 10^2$ ppm, and most preferably 10 to 50 ppm.

The content $C_{MB}$ of the metal element-containing component can be calculated from the used amount of the metal element-containing component in the preparation of the binder composition, and can also be calculated from the result of element analysis measured by inductively coupled plasma mass spectrometry (ICP-MS).

Needless to say, in a case where the metal element-containing component exist as a decomposed form or the like, the content $C_{MB}$ of the metal element-containing component is a total content including the content of the component existing as a decomposed form or the like.

In the binder composition, a ratio $[C_{MB}/C_{PB}]$ of the content $C_{MB}$ of the metal element-containing component to a content $C_{PB}$ of the polymer binder which will be described later is not particularly limited and is appropriately determined. For example, from the viewpoint that an increase in resistance can be effectively suppressed, this ratio $[C_{MB}/C_{PB}]$ can be set to $1.0 \times 10^{-8}$ to $1.0 \times 10^{-1}$, and is preferably $1.0 \times 10^{-7}$ to $1.0 \times 10^{-2}$, more preferably $1.0 \times 10^{-6}$ to $1.0 \times 10^{-3}$, still more preferably $5.0 \times 10^{-5}$ to $1.0 \times 10^{-3}$, particularly preferably $1.0 \times 10^{-4}$ to $1.0 \times 10^{-3}$, and most preferably $1.0 \times 10^{-4}$ to $5.0 \times 10^{-4}$.

In the binder composition, the metal element-containing component may include a metal element-containing component having a particle diameter of more than 10 $\mu$m as long as the effect of the present invention is not impaired, but it is preferable that the binder composition does not include a metal element-containing component having a particle diameter of more than 10 $\mu$m. In the present invention, the range in which the effect of the present invention is not impaired is not particularly limited, but for example, refers to a case where the content of the metal element-containing component having a particle diameter of more than 10 $\mu$m in the binder composition is $1.0 \times 10^{-1}$ ppm or less.

<Polymer binder>

The polymer binder contained in the binder composition according to the embodiment of the present invention is a polymer binder formed containing a polymer, in which this polymer (also referred to as a binder forming polymer) is a polymer having a constitutional component derived from an ethylenically unsaturated carboxylic acid in a content of less than 30% by mass in all the constitutional components of the polymer. The polymer binder formed of a polymer having the constitutional component MA derived from an ethylenically unsaturated carboxylic acid in the above-described content exhibits moderate aggregating properties by interacting with the coexisting metal element-containing component. As a result, in the binder composition according to the embodiment of the present invention, a constitutional layer can be formed while suppressing an increase in resistance. The binder forming polymer may have one type or two or more types of the constitutional component MA.

In the present invention, the "ethylenically unsaturated carboxylic acid" refers to (meth)acrylic acid, itaconic acid, crotonic acid, maleic acid, fumaric acid, a (meth)acrylamide alkyl carboxylic acid, an ethylenically unsaturated monomer having a carboxy group, or an alkali neutralized product thereof, and specific examples thereof include the "ethylenically unsaturated carboxylic acid monomer" described in paragraph [0036] of WO2020/090694A.

The content of the constitutional component MA in all the constitutional components of the binder forming polymer is only required to be less than 30% by mass, and from the viewpoint that an increase in resistance can be further suppressed, the content is preferably 0% to 20% by mass, more preferably 0.01% to 10% by mass, and still more preferably 0.1% to 5% by mass.

(Polar functional group-containing constitutional component MC)

The binder forming polymer preferably has one type or two or more types of constitutional components (also referred to as a polar functional group-containing constitutional component) MC having at least one polar functional group among the following group (a) of functional groups. In a case where the binder forming polymer has the polar functional group-containing constitutional component MC, the aggregating property of the polymer binder can be further increased, and the solid particles can be firmly bound.

The polar functional group-containing constitutional component MC is required to have at least one (one type of) polar functional group, and usually, it is preferable to have one to three types of polar functional groups. The number of polar functional groups contained in the binder forming polymer is not particularly limited and is appropriately determined depending on the number of polar functional groups contained in the polar functional group-containing constitutional component MC itself, the content of the polar functional group-containing constitutional component MC, the molecular weight of the binder forming polymer, and the like.

The polar functional group-containing constitutional component MC is required to have a polar functional group, and examples thereof include a constitutional component derived from a polycondensable compound having at least one (one type of) polar functional group among the following group (a) of functional groups. The polycondensable compound is, for example, preferably a compound that has a polycondensable group, a substituent having a polar functional group or the above-described polar functional group, and a linking group that appropriately links a polycondensable group and a substituent.

The polycondensable group is appropriately determined according to the main chain structure of the binder forming polymer. For example, in a case of a sequential polymerization polymer which will be described later, a condensable functional group is selected, and in a case of a chain polymerization polymer, a polymerizable group (an ethylenic unsaturated group) is selected.

The substituent before being substituted with a polar functional group is not particularly limited, and examples thereof include a group selected from the substituent Z which will be described later. Among these, an alkyl group is preferable, and an alkyl group having 1 to 6 carbon atoms is more preferable.

The linking group is not particularly limited; however, examples thereof include an alkylene group (preferably having 1 to 12 carbon atoms, more preferably 1 to 6 carbon atoms, and still more preferably having 1 to 3 carbon atoms), an alkenylene group (preferably having 2 to 6 carbon atoms and more preferably having 2 or 3 carbon atoms), an arylene group (preferably having 6 to 24 carbon atoms and more preferably having 6 to 10 carbon atoms), an oxygen atom, a sulfur atom, an imino group ($-NR^N-$: $R^N$ represents a hydrogen atom, an alkyl group having 1 to 6 carbon atoms or an aryl group having 6 to 10 carbon atoms), a carbonyl group, a phosphate linking group ($-O-P(OH)(O)-O-$), a phosphonate linking group ($-P)(OH)(O)-O-$), and a group involved in a combination thereof. The linking group is preferably an alkylene group, an arylene group, a carbonyl group, an oxygen atom, a sulfur atom, or an imino group, or a group involved in a combination thereof, more preferably an alkylene group, an arylene group, a carbonyl group, an oxygen atom, a sulfur atom, or an imino group, or a group involved in a combination thereof, and a $-CO-O-$ group is still more preferable.

The number of atoms that constitute the linking group is preferably 1 to 36, more preferably 1 to 24, and still more preferably 1 to 12. The number of linking atoms of the linking group is preferably 12 or less, more preferably 10 or less, and particularly preferably 8 or less. The lower limit thereof is 1 or more. The number of linking atoms refers to the minimum number of atoms linking predetermined structural moieties. For example, in a case of $-CO-O-$ group, the number of atoms that constitute the linking group is 3; however, the number of linking atoms is 2.

<Group (a) of functional groups>

a sulfonate group (a sulfo group), a phosphate group (a phosphoryl group), a phosphonate group, a carboxy group other than a carboxy group derived from the ethylenically unsaturated carboxylic acid, a hydroxy group, an oxetane group, an epoxy group, a dicarboxylic acid anhydride group, a thiol group (a sulfanyl group), an ether group, a thioether group, a thioester group, a fluoroalkyl group, and a salt thereof

The sulfonate group, the phosphate group, the phosphonate group, and the like, which are included in the group (a) of functional groups, are not particularly limited, but have the same meaning as the corresponding group of the substituent Z which will be described later.

The dicarboxylic acid anhydride group is not particularly limited, but includes a group obtained by removing one or more hydrogen atoms from a dicarboxylic acid anhydride, and a constitutional component itself obtained by copolymerizing a polymerizable dicarboxylic acid anhydride, and further includes a group obtained by reacting a dicarboxylic acid anhydride with an active hydrogen compound to cleave an anhydride group. The group obtained by removing one or more hydrogen atoms from a dicarboxylic acid anhydride is preferably a group obtained by removing one or more hydrogen atoms from a cyclic dicarboxylic acid anhydride. Examples the dicarboxylic acid anhydride include acyclic dicarboxylic acid anhydrides such as acetic acid anhydride, propionic acid anhydride, and benzoic acid anhydride; and cyclic dicarboxylic acid anhydrides such as maleic acid anhydride, phthalic acid anhydride, fumaric acid anhydride, succinic acid anhydride, itaconic acid anhydride, and the like. The polymerizable dicarboxylic acid anhydride is not particularly limited; however, examples thereof include a dicarboxylic acid anhydride having an unsaturated bond in the molecule, and a polymerizable cyclic dicarboxylic acid anhydride is preferable. Specific examples thereof include maleic acid anhydride, itaconic acid anhydride, and the like. The active hydrogen compound is not particularly limited as long as the active hydrogen compound is a compound that reacts with a dicarboxylic acid anhydride group, and examples thereof include an alcohol compound, an amine compound, a thiol compound, and the like. Provided that in a case where the group obtained by reacting the dicarboxylic acid anhydride with an active hydrogen compound to cleave the anhydride group corresponds to the above-described ethylenically unsaturated carboxylic acid, it is interpreted as the above-described ethylenically unsaturated carboxylic acid.

The ether group (-O-), the thioether group (-S-), and the thioester group (-CO-S-, -CS-O-, -CS-S-) respectively mean bonds shown in the parentheses. The terminal group bonded to this group is not particularly limited, and examples thereof include a group selected from the substituent Z which will be described later, examples of which include an alkyl group. It is noted that the ether group is included in a carboxy group, a hydroxy group, an oxetane group, an epoxy group, a dicarboxylic acid anhydride group, and the like, but -O- contained in these groups shall not be regarded as the ether group. The same applies to the thioether group.

The fluoroalkyl group is a group obtained by substituting at least one hydrogen atom of an alkyl group or cycloalkyl group with a fluorine atom, and it preferably has 1 to 20 carbon atoms, more preferably 2 to 15 carbon atoms, and still more preferably 3 to 10 carbon atoms. Regarding the number of fluorine atoms on the carbon atom, a part of the hydrogen atoms may be substituted, or all the hydrogen atoms may be substituted (a perfluoroalkyl group).

A group that can adopt a salt of a sulfonate group (a sulfo group), a phosphate group, a phosphonate group, a carboxy group, or the like may form a salt. Examples of the salt include salts of various metal salts, a salt of ammonium or amine, and the like.

From the viewpoints of improving the aggregating property of the polymer binder, further the adsorptivity (adhesiveness) with the solid particles, and the like, the polar functional group contained in the polar functional group-containing constitutional component MC is preferably a carboxy group other than a carboxy group derived from an ethylenically unsaturated carboxylic acid, a hydroxy group, a phosphate group, an epoxy group, a dicarboxylic acid anhydride group, or an ether group.

In a case where the polar functional group-containing constitutional component MC has two or more types of polar functional groups, the combination thereof is not particularly limited and can be appropriately determined. For example, a combination of any one of a carboxy group other than a carboxy group derived from an ethylenically unsaturated carboxylic acid, a sulfonate group, or a phosphonate group and any one of a hydroxy group, an oxetane group, an epoxy group, or an ether group is preferable, and a combination of a carboxy group other than a carboxy group derived from an ethylenically unsaturated carboxylic acid and a hydroxy group or an ether group is more preferable.

The polycondensable compound from which the polar functional group-containing constitutional component MC is derived is not particularly limited as long as it has the above-described polar functional group, and examples thereof include a compound obtained by introducing the above-described polar functional group into a raw material compound that constitutes a binder forming polymer. Examples thereof include a (meth)acrylic compound (M1) or a vinyl compound (M2), which will be described later, or a compound obtained by introducing the above-described polar functional group into this compound (M1) or (M2).

(Another constitutional component)

The binder forming polymer may have another constitutional component in addition to each of the above-described constitutional component. The other constitutional component is only required to be a constitutional component not corresponding to each of the above-described constitutional component, and examples thereof include constitutional components derived from a (meth)acrylic compound (M1) or a vinyl compound (M2), which will be described later. Among these, a constitutional component derived from an (meth)acrylic acid alkyl ester compound is preferable, and a constitutional component derived from an acrylic acid ester compound having a long-chain alkyl group is more preferable. The number of carbon atoms in the long-chain alkyl group can be set to, for example, 3 to 20, and it is preferably 4 to 16 and more preferably 6 to 14.

The binder forming polymer may have one type or two or more types of each of the constitutional components.

It is preferable that the binder forming polymer has a carboxy group, that is, has a constitutional component having a carboxy group, from the viewpoints that the aggregating property of the polymer binder can be further enhanced and also that the solid particles can be firmly bound. Here, the constitutional component having a carboxy group means a constitutional component having a carboxy group in the structure among the constitutional components constituting the binder forming polymer, and specifically, refers to a constitutional component having a carboxy group among the above-described constitutional component MA and the above-described polar functional group-containing constitutional component MC.

The (total) content of the constitutional component having a carboxy group in all the constitutional components of the binder forming polymer is appropriately determined in consideration of the content, the aggregating property, and the like of the constitutional component MA and the polar functional group-containing constitutional component MC. From the viewpoints that the aggregating property of the polymer binder can be further enhanced and also that the solid particles can be firmly bound, the (total) content is preferably 0.01% to 10% by mass, more preferably 0.1% to 10% by mass, still more preferably 0.1% to 5% by mass, and particularly preferably 0.2% to 3% by mass.

The content of each constitutional component in the binder forming polymer is not particularly limited except for the content of the above-described specific constitutional component, and is appropriately set in appropriate consideration of the physical properties of the entire polymer, and the like.

The content of the constitutional component in the binder forming polymer is set such that the total content of all the constitutional components is, for example, 100% by mass. In a case where the binder forming polymer includes a plurality of each constitutional component, the content of each constitutional component is the total content of the plurality of constitutional components.

The content of the polar functional group-containing constitutional component MC is not particularly limited, and can be appropriately determined with respect to the total content of all the constitutional components, for example, in consideration of the aggregating property of the polymer binder and furthermore, the adhesiveness (binding property) of the solid particles. In a case where the polar functional group-containing constitutional component MC has a carboxy group, the content of the polar functional group-containing constitutional component MC is determined in consideration of the content of the constitutional component having a carboxy group described above. The content of the polar functional group-containing constitutional component MC is, for example, preferably 0% to 20% by mass, more preferably 0.1% to 10% by mass, and still more preferably 1% to 8% by mass.

The content of the other constitutional components is not particularly limited, but can be set to 1% to 100% by mass, and is preferably 20% to 100% by mass, more preferably 40% to 100% by mass, still more preferably 60% to 100% by mass, and particularly preferably 80% to 100% by mass, with respect to the total content of all the constitutional components.

The binder forming polymer is not particularly limited as long as the binder forming polymer is a polymer containing the above-described constitutional component MA at the above-described content, and various known polymers can be used.

The primary structure (the bonding mode of the constitutional component) of the binder forming polymer is not particularly limited and any bonding mode such as a random structure, a block structure, an alternating structure, or a graft structure can be adopted.

Preferred examples of the binder forming polymer include a polymer having, in the main chain, a polymerized chain of at least one bond selected from a urethane bond, a urea bond, an amide bond, an imide bond, an ester bond, or a carbonate bond, or carbon-carbon double bonds, and a polymer having a polymerized chain of carbon-carbon double bonds in the main chain is more preferable.

The above bond is not particularly limited as long as it is contained in the main chain of the polymer, and it may have any aspect in which it is contained in the constitutional component (the repeating unit) and/or an aspect in which it is contained as a bond that connects different constitutional components to each other). In addition, the above-described bond contained in the main chain is not limited to one type, it may be two or more types, and it is preferably one to six types and more preferably one to four types. In this case, the bonding mode of the main chain is not particularly limited. The main chain may randomly have two or more types of bonds and may be a main chain that is segmented to a segment having a specific bond and a segment having another bond.

Examples of the polymer having a urethane bond, a urea bond, an amide bond, an imide bond, an ester bond, or a carbonate bond in the main chain among the above-described bonds include sequential polymerization (polycondensation, polyaddition, or addition condensation) polymers such as polyurethane, polyurea, polyamide, polyimide, polyester, and polycarbonate bond, and copolymers thereof.

In the present invention, the polymerized chain of carbon-carbon double bonds refers to a polymerized chain that is obtained by polymerizing carbon-carbon double bonds (ethylenic unsaturated groups), and specifically, it refers to a polymerized chain obtained by polymerizing (homopolymerizing or copolymerizing) a monomer having a carbon-carbon unsaturated bond.

Examples of the polymer having a polymerized chain of carbon-carbon double bonds in the main chain include chain polymerization polymers such as a fluoropolymer (a fluorine-containing polymer), a hydrocarbon polymer, a vinyl polymer, and a (meth)acrylic polymer, where a (meth)acrylic polymer is preferable.

Examples of the (meth)acrylic polymer include a polymer consisting of a (co)polymer containing 50% by mass or more of a constitutional component derived from a (meth)acrylic compound. In a case where each of the above-described constitutional components is a constitutional component derived from a (meth)acrylic compound, the content of the constitutional component derived from a (meth)acrylic compound also includes the content of these constitutional components. The content of the constitutional component derived from the (meth)acrylic compound is more preferably 60% by mass or more and still more preferably 70% by mass or more. The upper limit content can be set to 100% by mass, but it can also be set to 97% by mass or less. Furthermore, the (meth)acrylic polymer is also preferably a copolymer with the vinyl compound (M2) other than the (meth)acrylic compound (M1). In this case, the content of the constitutional component derived from the vinyl compound (M2) is 50% by mass or less, and it is preferably 3% to 40% by mass and more preferably 3% to 30% by mass.

Examples of the (meth)acrylic compound (M1) include a compound other than the compounds from which the above-described constitutional components MA and MC are derived, among a (meth)acrylic compound, a (meth)acrylic acid ester compound, a (meth)acrylamide compound, a (meth)acrylnitrile compound, and the like. Among them, a (meth) acrylic acid ester compound is preferable. Examples of the (meth)acrylic acid ester compound include a (meth)acrylic acid alkyl ester compound and a (meth)acrylic acid aryl ester compound, where a (meth)acrylic acid alkyl ester compound is preferable. The number of carbon atoms of the alkyl group that constitutes the (meth)acrylic acid alkyl ester compound is not particularly limited, but it can be set to, for example, 1 to 24, and from the viewpoints of adhesiveness and the like, it is preferably 3 to 20, more preferably 4 to 16, and still more preferably 6 to 14. The number of carbon atoms of the aryl group that constitutes the aryl ester is not particularly limited, but for example, it can be set to 6 to 24, and it is preferably 6 to 10 and more preferably 6. In the (meth)acrylamide compound, the nitrogen atom of the amide group may be substituted with an alkyl group or an aryl group.

The vinyl compound (M2) is not particularly limited. However, among the vinyl compounds that can be copolymerized with the (meth)acrylic compound (M1), a vinyl compound other than the vinyl compounds from which the constitutional components MA and MC is preferable, and examples thereof include aromatic vinyl compounds such as a styrene compound, a vinyl naphthalene compound, a vinyl carbazole compound, a vinylcarbazole compound, and a vinylpyridine compound and further include an allyl compound, a vinyl ether compound, a vinyl ester compound (for example, a vinyl acetate compound), a dialkyl itaconate compound, the above-described polymerizable cyclic dicarboxylic acid anhydride, and the like. Examples of the vinyl compound include the "vinyl monomer" described in JP2015-88486A.

The (meth)acrylic compound (M1) and the vinyl compound (M2) may have a substituent; however, an aspect in which the (meth)acrylic compound (M1) is unsubstituted is one of the preferred aspects. The substituent is not particularly limited, and examples thereof include a group selected from the substituent Z described later. However, a group other than the polar functional group included in the above-described group (a) of functional groups is preferable.

Examples of the hydrocarbon polymer include polyethylene, polypropylene, natural rubber, polybutadiene, polyisoprene, polystyrene, a styrene-butadiene copolymer, a styrene-based thermoplastic elastomer, polybutylene, an acrylonitrile-butadiene copolymer, or a hydrogenated polymer of these, as well as a copolymer with a copolymerizable compound such as the (meth)acrylic compound (M1) or the vinyl compounds (M2). The styrene-based thermoplastic elastomer or the hydride thereof is not particularly limited. However, examples thereof include a styrene-ethylene-butylene-styrene block copolymer (SEBS), a styrene-isoprene-styrene block copolymer (SIS), a hydrogenated SIS, a styrene-butadiene-styrene block copolymer (SBS), a hydrogenated SBS, a styrene-ethylene-ethylene-propylene-styrene block copolymer (SEEPS), a styrene-ethylene-propylene-styrene block copolymer (SEPS), a styrene-butadiene rubber (SBR), a hydrogenated a styrene-butadiene rubber (HSBR), and furthermore, a random copolymer corresponding to each of the above-described block copolymers such as SEBS.

The binder forming polymer may have a substituent. The substituent is not particularly limited, and preferred examples thereof include a group selected from the substituent Z. A group other than the polar functional group included in the above-described group (a) of functional groups is preferable.

- Substituent Z -

The examples are an alkyl group (preferably an alkyl group having 1 to 20 carbon atoms, for example, methyl, ethyl, isopropyl, t-butyl, pentyl, heptyl, 1-ethylpentyl, benzyl, 2-ethoxyethyl, and 1-carboxymethyl), an alkenyl group (preferably an alkenyl group having 2 to 20 carbon atoms, such as vinyl, allyl, and oleyl), an alkynyl group (preferably an alkynyl group having 2 to 20 carbon atoms, for example, ethynyl; however,adynyl, and phenylethynyl), a cycloalkyl group (preferably a cycloalkyl group having 3 to 20 carbon atoms, such as cyclopropyl, cyclopentyl, cyclohexyl, and 4-methylcyclohexyl; in the present invention, the alkyl group generally has a meaning including a cycloalkyl group therein in a case where being referred to, however, it will be described separately here), an aryl group (preferably an aryl group having 6 to 26 carbon atoms, such as phenyl, 1-naphthyl, 4-methoxyphenyl, 2-chlorophenyl, and 3-methylphenyl), an aralkyl group (preferably an aralkyl group having 7 to 23 carbon atoms, for example, benzyl or phenethyl), and a heterocyclic group (preferably a heterocyclic group having 2 to 20 carbon atoms and more preferably a 5- or 6-membered heterocyclic group having at least one oxygen atom, one sulfur atom, or one nitrogen atom. The heterocyclic group includes an aromatic heterocyclic group and an aliphatic heterocyclic group. Examples thereof include a tetrahydropyran ring group, a tetrahydrofuran ring group, 2-pyridyl, 4-pyridyl, 2-imidazolyl, 2-benzimidazolyl, 2-thiazolyl, 2-oxazolyl, and a pyrrolidone group), an alkoxy group (preferably an alkoxy group having 1 to 20 carbon atoms, for example, methoxy, ethoxy, isopropyloxy, or benzyloxy), an aryloxy group (preferably an aryloxy group having 6 to 26 carbon atoms, for example, phenoxy, 1-naphthyloxy, 3-methylphenoxy, or 4-methoxyphenoxy), a heterocyclic oxy group (a group in which an -O-group is bonded to the above-described heterocyclic group), an alkoxycarbonyl group (preferably an alkoxycarbonyl group having 2 to 20 carbon atoms, for example, ethoxycarbonyl, 2-ethylhexyloxycarbonyl, or dodecyloxycarbonyl), an aryloxycarbonyl group (preferably an aryloxycarbonyl group having 6 to 26 carbon atoms, for example, phenoxycarbonyl, 1-naphthyloxycarbonyl, 3-methylphenoxycarbonyl, or 4-methoxyphenoxycarbonyl), a heterocyclic oxycarbonyl group (a group in which an -O-CO-group is bonded to the above-described heterocyclic group), an amino group (preferably an amino group having 0 to 20 carbon atoms, an alkylamino group, or an arylamino group, for example, amino ($-NH_2$), N,N-dimethylamino, N,N-diethylamino, N-ethylamino, or anilino), a sulfamoyl group (preferably a sulfamoyl group having 0 to 20 carbon atoms, for example, N,N-dimethylsulfamoyl or N-phenylsulfamoyl), an acyl group (an alkylcarbonyl group, an alkenylcarbonyl group, an alkynylcarbonyl group, an arylcarbonyl group, or a heterocyclic carbonyl group, preferably an acyl group having 1 to 20 carbon atoms, for example, acetyl, propionyl, butyryl, octanoyl, hexadecanoyl, acryloyl, methacryloyl, crotonoyl, benzoyl, naphthoyl, or nicotinoyl), a group, an arylamino group (for example, amino ($-NH_2$), N,N-dimethylamino, N,N-diethylamino, N-ethylamino, or anilino), a sulfamoyl group (preferably a sulfamoyl group having 0 to 20 carbon atoms, for example, N,N-dimethylsulfamoyl or N-phenylsulfamoyl), an acyl group (an alkylcarbonyl group, an alkenylcarbonyl group, an alkynylcarbonyl group, an arylcarbonyl group, or a heterocyclic carbonyl group, preferably an acyl group having 1 to 20 carbon atoms, for example, acetyl, propionyl, butyryl, octanoyl, hexadecanoyl, acryloyl, methacryloyl, crotonoyl, benzoyl, naphthoyl, or nicotinoyl),an acyloxy group (an alkylcarbonyloxy group, an alkenylcarbonyloxy group, an alkynylcarbonyloxy group, or a heterocyclic carbonyloxy group, preferably an acyloxy group having 1 to 20 carbon atoms, for example, acetyloxy, propionyloxy, butyryloxy, octanoyloxy, hexadecanoyloxy, acryloyloxy, methacryloyloxy, crotonyloxy, or nicotinoyloxy), an arylcarbonyloxy group (preferably an arylcarbonyloxy group having 7 to 23 carbon atoms, for example, benzoxy or naphthoxy), a carbamoyl group (preferably a carbamoyl group having 1 to 20 carbon atoms, for example, N,N-dimethylcarbamoyl or N-phenylcarbamoyl), an acylamino group (preferably an acylamino group having 1 to 20 carbon atoms, for example, acetylamino or benzoylamino), an alkylthio group (preferably an alkylthio group having 1 to 20 carbon atoms, for example, methylthio, ethylthio, isopropylthio, or benzylthio), an arylthio group (preferably an arylthio group having 6 to 26 carbon atoms, for example, phenylthio, 1-naphthylthio, 3-methylphenylthio, or 4-methoxyphenylthio), a heterocyclic thio group (a group in which an -S- group is bonded to the above-described heterocyclic group), an alkylsulfonyl group (preferably an alkylsulfonyl group having 1 to 20 carbon atoms, for example, methylsulfonyl or ethylsulfonyl), an arylsulfonyl group (preferably an arylsulfonyl group having 6 to 22 carbon atoms, which is a group in which an -S- group is bonded to a group), an alkylsulfonyl group (preferably an alkylsulfonyl group having 1 to 20 carbon atoms, for example, methylsulfonyl or ethylsulfonyl), an arylsulfonyl group (preferably an arylsulfonyl group having 6 to 22 carbon atoms, which is a group in which an -S- group is bonded to a group), an alkylsulfonyl group (preferably an alkylsulfonyl group having 1 to 20 carbon atoms, for example, methylsulfonyl or ethylsulfonyl), an arylsulfonyl group (preferably an arylsulfonyl group having 6 to 22 carbon atoms, which is a group in which an -S- group is bonded to a group),Examples thereof include a benzene sulfonyl group, an alkylsilyl group (preferably an alkylsilyl group having 1 to 20 carbon atoms, for example, monomethylsilyl, dimethylsilyl, trimethylsilyl, or triethylsilyl), an arylsilyl group (preferably an arylsilyl group having 6 to 42 carbon atoms, for example, triphenylsilyl), an alkoxysilyl group (preferably an alkoxysilyl group having 1 to 20 carbon atoms, for example, monomethoxysilyl, dimethoxysilyl, trimethoxysilyl, or triethoxysilyl), an aryloxysilyl group (preferably an aryloxysilyl group having 6 to 42 carbon atoms, for example, triphenyloxysilyl), a phosphoryl group (preferably a phosphate group having 0 to 20 carbon atoms, for example, $-OP(=O)(R^P)_2$), a phosphonyl group (preferably a phosphonyl group having 0 to 20 carbon atoms, for example, $-P(=O)(R^P)_2$), a phosphinyl group (preferably a phosphinyl group having 0 to 20 carbon atoms, for example, $-P(R^P)_2$), a phosphonate group (preferably a phosphonate group having 0 to 20 carbon atoms, for example, $-PO(OR^P)_2$), a sulfo group (a sulfonate group), a carboxy group, a hydroxy group, a sulfanyl group, a cyano group, and a halogen atom (for example, a fluorine atom, a chlorine atom, a bromine atom, or an iodine atom). $R^P$ represents a hydrogen atom or a substituent (preferably a group selected from the substituent Z).

In addition, each group exemplified in the substituent Z may be further substituted with the substituent Z.

The alkyl group, the alkylene group, the alkenyl group, the alkenylene group, the alkynyl group, the alkynylene group, and/or the like may be cyclic or chained, may be linear or branched.

The binder forming polymer can be synthesized by selecting a raw material compound and polymerizing the raw material compound by a publicly known method.

The method of incorporating each polar functional group is not particularly limited, and examples thereof include a method of copolymerizing a compound having the above-described functional group, a method of using a polymerization initiator having (generating) the above-described polar functional group or a chain transfer agent, a method of using a polymeric reaction, an ene reaction or ene-thiol reaction with a double bond, and an atom transfer radical polymerization (ATRP) method using a copper catalyst. In addition, a polar functional group can be introduced by using a functional group that is present in the main chain, the side chain, or the terminal of the polymer, as a reaction point. For example, a functional group can be introduced by various reactions with a dicarboxylic acid anhydride group in a polymerized chain using a compound having a polar functional group.

Specific examples of the binder forming polymer include each of polymers synthesized in Examples; however, the present invention is not limited thereto.

- Physical properties, characteristics, or like of binder forming polymer or polymer binder -

The polymer binder or the binder forming polymer, which is used in the present invention, preferably has the following physical properties or characteristics.

From the viewpoint of the aggregating property of the polymer binder, the weight-average molecular weight of the binder forming polymer is preferably $1.0 \times 10^3$ to $1.0 \times 10^7$. The weight-average molecular weight of the binder forming polymer is preferably $1.0 \times 10^4$ or more, more preferably $3.0 \times 10^4$ or more, and still more preferably $1.0 \times 10^5$ or more. The upper limit is preferably $1.0 \times 10^7$ or less, more preferably $5.0 \times 10^6$ or less, still more preferably $1.0 \times 10^6$ or less, and particularly preferably $5.0 \times 10^5$ or less. The weight-average molecular weight of the binder forming polymer can be appropriately adjusted by changing the type, content, polymerization time, polymerization temperature, and the like of the polymerization initiator.

- Measurement of molecular weight -

In the present invention, unless specified otherwise, molecular weights of a polymerized chain such as a polymer refer to a weight-average molecular weight and number-average molecular weight in terms of standard polystyrene conversion, which are determined by gel permeation chromatography (GPC). The measuring method thereof includes, basically, a method in which conditions are set to Conditions 1 or Conditions 2 (preferential) described below. In this case, an appropriate eluent may be selected and used depending on the type of the polymer and the like.

(Condition 1)

Column: Connect two TOSOH TSKgel Super AWM-H (product name, manufactured by Tosoh Corporation)
Carrier: 10 mM LiBr/N-methylpyrrolidone
Measurement temperature: 40°C
Carrier flow rate: 1.0 ml/min
Sample concentration: 0.1% by mass
Detector: refractive index (RI) detector

(Condition 2)

Column: A column obtained by connecting TOSOH TSKgel Super HZM-H, TOSOH TSKgel Super HZ4000, and TOSOH TSKgel Super HZ2000 (all of which are product names, manufactured by Tosoh Corporation)
Carrier: tetrahydrofuran
Measurement temperature: 40°C
Carrier flow rate: 1.0 ml/min
Sample concentration: 0.1% by mass
Detector: refractive index (RI) detector

In a case where the binder composition contains a dispersion medium, the polymer binder may be present in a state of being dissolved in the dispersion medium (binder composition), or may be dispersed in the dispersion medium in a particle shape.

In the present invention, the description that the polymer binder is dissolved in the dispersion medium means that the polymer binder is dissolved in the dispersion medium in the binder composition, and it refers to that, for example, the solubility of the polymer binder in the following solubility measurement is 50% or more. The polymer binder is not limited to an aspect in which the whole polymer binder is dissolved in the dispersion medium in the binder composition, and it includes an aspect in which a part of the polymer binder is present in an insoluble state.

A measuring method for solubility is as follows. That is, a polymer binder (solid) of about 0.1 g is precisely weighed, and the precisely weighed mass is defined as W0. Next, the polymer binder and 10 g of the dispersion medium having the same composition as that of the dispersion medium contained in the polymer binder and the binder composition put into a container, and the resultant mixture is mixed with a mixing rotor (model number: VMR-5, manufactured by AS ONE Corporation) for 48 hours at a temperature of 25°C and a rotation speed of 100 rpm. Then, the insoluble substance is filtered from the solution, the obtained solid is subjected to vacuum drying at 120°C for 3 hours, and then the mass W1 of the insoluble substance is precisely weighed. Then, the solubility (%) in the dispersion medium is calculated according to the following expression, and the obtained value is defined as the solubility of the polymer binder in the dispersion medium.

$$\text{Solubility (\%)} = (W0 - W1)/W0 \times 100$$

In the present invention, the solubility of the polymer binder in the dispersion medium can be appropriately imparted according to the type of the polymer that forms the polymer binder, the composition of the polymer (the type and the content of the constitutional component), the weight-average molecular weight of the polymer, and the type or the content of the above-described polar functional group, as well as the combination with the dispersion medium, and the like.

The moisture concentration of the binder (the binder forming polymer) is preferably 100 ppm (in terms of mass) or less. In addition, as this binder, a polymer may be crystallized and dried, or a binder dispersion liquid may be used as it is.

It is preferable that the binder forming polymer is noncrystalline. In the present invention, the description that a polymer is "noncrystalline" typically refers to that no endothermic peak due to crystal melting is observed in a case where the measurement is carried out at the glass transition temperature.

The binder forming polymer may be a non-crosslinked polymer or a crosslinked polymer. In addition, in a case where the crosslinking of the polymer progresses due to heating or voltage application, the molecular weight may be higher than the above-described molecular weight. Preferably, the binder forming polymer has a weight-average molecular weight in the above-described range at the start of use of the all-solid state secondary battery.

The binder forming polymer, which is contained in the polymer binder, may be one type or two or more types. In addition, the polymer binder may contain another polymer as long as the action of the binder forming polymer is not impaired. As another polymer, a polymer that is generally used as a binder for an all-solid state secondary battery can be used without particular limitation.

The polymer binder contained in the binder composition may be one type or two or more types.

The content $C_{PB}$ of the polymer binder in the binder composition is not particularly limited, but from the viewpoints of bonding property and resistance, the content $C_{PB}$ is preferably 1% to 70% by mass, more preferably 5% to 50% by mass, still more preferably 8% to 40% by mass, and even still more preferably 8% to 20% by mass.

<Dispersion medium>

The binder composition preferably contains a dispersion medium. The dispersion medium is only required to be an organic compound that is in a liquid state in the use environment, examples thereof include various organic solvents, and specific examples thereof include an alcohol compound, an ether compound, an amide compound, an amine compound, a ketone compound, an aromatic hydrocarbon compound, an aliphatic hydrocarbon compound, a nitrile compound, an ester compound, and the like.

The dispersion medium may be a non-polar dispersion medium (a hydrophobic dispersion medium) or a polar dispersion medium (a hydrophilic dispersion medium); however, a non-polar dispersion medium is preferable from the viewpoint that excellent dispersibility can be exhibited. The non-polar dispersion medium generally refers to a dispersion medium having a property of a low affinity to water; however, in the present invention, examples thereof include an ester compound, a ketone compound, an ether compound, an aromatic hydrocarbon compound, and an aliphatic hydrocarbon compound.

Examples of the alcohol compound include methyl alcohol, ethyl alcohol, 1-propyl alcohol, 2-propyl alcohol, 2-butanol, ethylene glycol, propylene glycol, glycerin, 1,6-hexanediol, cyclohexanediol, sorbitol, xylitol, 2-methyl-2,4-pentanediol, 1,3-butanediol, and 1,4-butanediol.

Examples of the ether compound include an alkylene glycol (diethylene glycol, triethylene glycol, polyethylene glycol, dipropylene glycol, or the like), an alkylene glycol monoalkyl ether (ethylene glycol monomethyl ether, ethylene glycol monobutyl ether, diethylene glycol monomethyl ether, propylene glycol monomethyl ether, dipropylene glycol monomethyl ether, tripropylene glycol monomethyl ether, diethylene glycol monobutyl ether, or the like), alkylene glycol dialkyl ether (ethylene glycol dimethyl ether or the like), a dialkyl ether (dimethyl ether, diethyl ether, diisopropyl ether, dibutyl ether, or the like), and a cyclic ether (tetrahydrofuran, dioxane (including 1,2-, 1,3- or 1,4-isomer), or the like).

Examples of the amide compound include N,N-dimethylformamide, N-methyl-2-pyrrolidone, 2-pyrrolidinone, 1,3-dimethyl-2-imidazolidinone, ε-caprolactam, formamide, N-methylformamide, acetamide, N-methylacetamide, N,N-dimethylacetamide, N-methylpropanamide, and hexamethylphosphoric triamide.

Examples of the amine compound include triethylamine, diisopropylethylamine, and tributylamine.

Examples of the ketone compound include acetone, methyl ethyl ketone, methyl isobutyl ketone (MIBK), cyclopentanone, cyclohexanone, cycloheptanone, dipropyl ketone, dibutyl ketone, diisopropyl ketone, diisobutyl ketone (DIBK), isobutyl propyl ketone, sec-butyl propyl ketone, pentyl propyl ketone, and butyl propyl ketone.

Examples of the aromatic hydrocarbon compound include benzene, toluene, xylene, and perfluorotoluene.

Examples of the aliphatic hydrocarbon compound include hexane, heptane, octane, nonane, decane, dodecane, cyclohexane, methylcyclohexane, ethylcyclohexane, cycloheptane, cyclooctane, decalin, paraffin, gasoline, naphtha, kerosene, and light oil.

Examples of the nitrile compound include acetonitrile, propionitrile, and isobutyronitrile.

Examples of the ester compound include ethyl acetate, propyl acetate, propyl butyrate, butyl acetate, ethyl butyrate, isopropyl butyrate, butyl butyrate, isobutyl butyrate, butyl pentanoate, pentyl pentanoate, ethyl isobutyrate, propyl isobutyrate, isopropyl isobutyrate, isobutyl isobutyrate, propyl pivalate, isopropyl pivalate, butyl pivalate, and isobutyl pivalate.

In the present invention, among them, an ether compound, a ketone compound, an aromatic hydrocarbon compound, an aliphatic hydrocarbon compound, or an ester compound is preferable, and an ester compound, a ketone compound, an aromatic hydrocarbon compound, or an ether compound is more preferable.

The number of carbon atoms of the compound that constitutes the dispersion medium is not particularly limited, and it is preferably 2 to 30, more preferably 4 to 20, still more preferably 6 to 15, and particularly preferably 7 to 12.

The dispersion medium preferably has a boiling point of 50°C or more and more preferably 70°C or more at normal pressure (1 atm: 101,325 Pa). The upper limit thereof is preferably 250°C or less and more preferably 220°C or less.

The dispersion medium contained in the binder composition may be one type or two or more types. Examples of the dispersion medium including two or more types of dispersion media include xylene (a mixture of xylene isomers in which the mixing molar ratio between isomers is, ortho-isomer:para-isomer:meta-isomer = 1:5:2) and mixed xylene (a mixture of o-xylene, p-xylene, m-xylene, and ethylbenzene).

In the present invention, the content of the dispersion medium in the binder composition is not particularly limited and can be appropriately set. For example, the content of the dispersion medium in the binder composition is preferably 10% to 99% by mass, more preferably 30% to 95% by mass, and particularly preferably 40% to 90% by mass.

<Other components>

The binder composition may contain, in addition to the polymer binder and the metal element-containing component, various additives, various components appropriately contained in a material for forming a constitutional layer of a secondary battery, or the like, as the other components. The content of the other components in the binder composition is not particularly limited and is appropriately determined.

<Preparation of binder composition>

The binder composition according to the embodiment of the present invention can be prepared as a mixture by mixing a polymer binder, a metal element-containing component, preferably a dispersion medium, and further other components with, for example, various mixers that are typically used. In the present invention, the binder composition is usually prepared by actively mixing the metal element-containing component with the polymer binder. Provided that in a case where the content of the metal element-containing component in the prepared binder composition is excessive, the content of the metal element-containing component can also be adjusted by a general method, for example, a purification method.

The mixing method is not particularly limited, and it can be carried out using a publicly known mixer such as a ball mill, a beads mill, a planetary mixer, a blade mixer, a roll mill, a kneader, a disc mill, a self-rotation type mixer, or a narrow gap type disperser. The mixing conditions are not particularly limited either. For example, each of the above components may be mixed collectively or may be mixed sequentially. The mixing conditions are not particularly limited. The mixing temperature can be set to 15°C to 50°C. The mixing atmosphere may be any atmosphere such as atmospheric air, dry air (the dew point: -20°C or less), or inert gas (for example, an argon gas, a helium gas, or a nitrogen gas).

[Constitutional layer forming material]

The constitutional layer forming material according to the embodiment of the present invention is a composition containing the binder composition according to the embodiment of the present invention (or the above-described constitutional component thereof) as a polymer binder component. In a case where the constitutional layer forming material is used as a material that forms a constitutional layer of an all-solid state secondary battery, the constitutional layer forming material is referred to as a solid electrolyte-containing composition for an (all-solid state) secondary battery, and in a case where the constitutional layer forming material is used as a material for forming an electrode layer of a non-aqueous electrolytic solution secondary battery, the constitutional layer forming material is also referred to as an electrode composition for a non-aqueous electrolytic solution secondary battery.

The constitutional layer forming material according to the embodiment of the present invention contains, in addition to the binder composition according to the embodiment of the present invention, an appropriate component according to the use application or the like. For example, in a case of being a non-aqueous electrolytic solution secondary battery electrode composition, it contains the binder composition according to the embodiment of the present invention, an active material, and appropriately other components which will be described later, a dispersion medium, and the like. On the other hand, in a case of being a solid electrolyte-containing composition for a secondary battery, it contains the binder composition according to the embodiment of the present invention (or the above-described constitutional component thereof), an inorganic solid electrolyte having ion conductivity of a metal belonging to Group 1 or Group 2 in the periodic table, and appropriately an active material, a conductive auxiliary agent, a dispersion medium, and other components described later.

In the constitutional layer forming material, each component constituting the binder composition according to the embodiment of the present invention does not need to be integrally present as the binder composition, and each component may be independently (separately) present.

In addition, in the constitutional layer forming material, the polymer binder may be insoluble and be present in a solid state in a dispersion medium in the composition (including a dispersion medium of the binder composition, hereinafter, the same meaning applies unless otherwise specified), or may be dissolved therein. The description of being dissolved in a dispersion medium is synonymous with the description of being dissolved in the above-described dispersion medium.

Since the constitutional layer forming material according to the embodiment of the present invention contains a polymer binder and a predetermined amount of a metal element-containing component, a constitutional layer having low resistance can be formed, and a sheet for an all-solid state secondary battery, which has a constitutional layer having low resistance in which solid particles are firmly and closely attracted, and an all-solid state secondary battery having low resistance can be manufactured.

The constitutional layer forming material according to the embodiment of the present invention is preferably a slurry in which solid particles are dispersed in a dispersion medium.

On the other hand, the polymer binder functions as a binding agent that firmly binds solid particles to each other while maintaining a direct contact state in a constitutional layer formed of a constitutional layer forming material. Furthermore, it also functions as a binding agent that firmly binds the base material such as a collector and solid particles. In addition, in the constitutional layer forming material, the polymer binder may or may not have a function of binding the solid particles to each other.

<Solid electrolyte-containing composition for secondary battery>

The solid electrolyte-containing composition for a secondary battery according to the embodiment of the present invention is preferably a non-aqueous composition. In the present invention, the non-aqueous composition has the same meaning as the binder composition.

Since the solid electrolyte-containing composition for a secondary battery according to the embodiment of the present invention exhibits the above-described excellent characteristics, it can be used as a material that forms a sheet for a secondary battery (preferably, a sheet for an all-solid state secondary battery) and an electrode layer (preferably, a constitutional layer of an all-solid state secondary battery) of a secondary battery.

The solid electrolyte-containing composition for a secondary battery according to the embodiment of the present invention also includes an aspect in which an active material and the like are contained in addition to the inorganic solid electrolyte (the composition in this aspect may be referred to as the "electrode composition").

Hereinafter, components that are contained and components that can be contained in the solid electrolyte-containing composition for a secondary battery according to the embodiment of the present invention will be described.

(Binder composition)

The solid electrolyte-containing composition for a secondary battery according to the embodiment of the present invention contains the above-described binder composition. The content of the binder composition in the solid electrolyte-containing composition for a secondary battery can be appropriately determined in consideration of the content of the polymer binder which will be described later and the like, but is usually set to a proportion that is the content of the polymer binder which will be described later.

- Metal element-containing component -

The solid electrolyte-containing composition for a secondary battery according to the embodiment of the present invention contains one type or two or more types of metal element-containing components. This metal element-containing component is as described above, including the particle diameter and the like in the composition. The metal element-containing component contained in the solid electrolyte-containing composition for a secondary battery is usually derived from the above-described binder composition. In the present invention, to adjust (generally increase) the content of the metal element-containing component in the solid electrolyte-containing composition for a secondary battery, the above-described metal element-containing component used in the binder composition can be appropriately added and mixed with the binder composition in addition to the binder composition. The metal element-containing component to be added and mixed may be the same as or different from the metal element-containing component in the binder composition.

The content $C_{MS}$ of the metal element-containing component in the solid electrolyte-containing composition for a secondary battery is not particularly limited and is appropriately set according to the content in the binder composition, the used amount of the binder composition, and the like. Specifically, the content $C_{MS}$ of the metal element-containing component can be set to a range calculated by multiplying the above-described content $C_{MB}$ of the metal element-containing component in the binder composition by the above-described used amount of the binder composition in the solid electrolyte-containing composition for a secondary battery. From the viewpoint that an increase in resistance can be further suppressed while maintaining the battery function, the content $C_{MS}$ of the metal element-containing component in the solid electrolyte-containing composition for a secondary battery is preferably $1.0 \times 10^{-6}$ to $1.0 \times 10^4$ ppm, more preferably $1.0 \times 10^{-3}$ to $1.0 \times 10^4$ ppm, still more preferably $1.0 \times 10^{-3}$ to $1.0 \times 10^2$ ppm, even still more preferably $1.0 \times 10^{-2}$ to $1.0 \times 10$ ppm, particularly preferably $1.0 \times 10^{-2}$ to $1.0$ ppm, and most preferably $1.0 \times 10^{-2}$ to $3.0 \times 10^{-1}$ ppm. The content $C_{MS}$ can be measured or calculated in the same manner as the content $C_{MB}$.

In the solid electrolyte-containing composition for a secondary battery, a ratio $[C_{MS}/C_{PS}]$ of the content $C_{MS}$ of the metal element-containing component to the content $C_{PS}$ of the polymer binder is not particularly limited and is appropriately determined, and for example, it is preferably the same as the above-described ratio $[C_{MB}/C_{PB}]$.

- Polymer binder -

The solid electrolyte-containing composition for a secondary battery according to the embodiment of the present invention contains one type or two or more types of polymer binders derived from the above-described binder composition. The polymer binder is as described above. It is noted that in the present invention, the above-described polymer binder that is used in the binder composition can be appropriately added and mixed in addition to the binder composition. The polymer binder to be added and mixed may be the same as or different from the polymer binder in the binder composition.

The content $C_{PS}$ of the polymer binder in the solid electrolyte-containing composition for a secondary battery is not particularly limited. However, from the viewpoints of ion conductivity as well as binding properties, the content $C_{PS}$ is preferably 0.1% to 8.0% by mass, more preferably 0.2% to 4.0% by mass, and still more preferably 0.3% to 2.5% by mass. For the same reason, the content of the polymer binder in 100% by mass of the solid content of the solid electrolyte-containing composition for a secondary battery is preferably 0.1% to 10.0% by mass, more preferably 0.3% to 5.0% by mass, and still more preferably 0.4% to 3.0% by mass.

In the present invention, the mass ratio [(the mass of the inorganic solid electrolyte + the mass of the active material)/(the total mass of the polymer binder)] of the total mass (total amount) of the inorganic solid electrolyte and the active material to the mass of the polymer binder in the solid content of 100% by mass is preferably in a range of 1,000 to 1. Furthermore, this ratio is more preferably 500 to 2 and still more preferably 100 to 10.

(Inorganic solid electrolyte)

The solid electrolyte-containing composition for a secondary battery according to the embodiment of the present invention contains an inorganic solid electrolyte.

In the present invention, the inorganic solid electrolyte is an inorganic solid electrolyte, where the solid electrolyte refers to a solid-shaped electrolyte capable of migrating ions therein. The inorganic solid electrolyte is clearly distinguished from the organic solid electrolyte (the polymeric electrolyte such as polyethylene oxide (PEO) or the organic solid electrolyte salt such as lithium bis(trifluoromethanesulfonyl)imide (LiTFSI)) since it does not include any organic substance as a principal ion-conductive material. In addition, the inorganic solid electrolyte is solid in a steady state and thus, typically, is not dissociated or liberated into cations and anions. In terms of this fact, the inorganic solid electrolyte is also clearly distinguished from inorganic electrolyte salts of which cations and anions are dissociated or liberated in electrolytic solutions or polymers ($LiPF_6$, $LiBF_4$, lithium bis(fluorosulfonyl)imide (LiFSI), LiCl, and the like). The inorganic solid electrolyte is not particularly limited as long as it has an ion conductivity of a metal belonging to Group 1 or Group 2 in the periodic table and generally does not have electron conductivity.

As the inorganic solid electrolyte, a solid electrolyte material that is typically used for an all-solid state secondary battery can be appropriately selected and used. Examples of the inorganic solid electrolyte include (i) a sulfide-based inorganic solid electrolyte, (ii) an oxide-based inorganic solid electrolyte, (iii) a halide-based inorganic solid electrolyte, and (iv) a hydride-based inorganic solid electrolyte. The sulfide-based inorganic solid electrolytes are preferably used from the viewpoint that it is possible to form a more favorable interface between the active material and the inorganic solid electrolyte.

In a case where the all-solid state secondary battery according to the embodiment of the present invention is a lithium ion battery, the inorganic solid electrolyte preferably has a lithium ion conductivity.

(i) Sulfide-based inorganic solid electrolyte

The sulfide-based inorganic solid electrolyte is preferably an electrolyte that contains a sulfur atom, has an ion conductivity of a metal belonging to Group 1 or Group 2 in the periodic table, and has electron-insulating properties. The sulfide-based inorganic solid electrolytes are preferably inorganic solid electrolytes which contain, as elements, at least Li, S, and P and have a lithium ion conductivity, but the sulfide-based inorganic solid electrolytes may appropriately include elements other than Li, S, and P.

Examples of the sulfide-based inorganic solid electrolyte include an inorganic solid electrolyte having an ion conductivity of the lithium ion, which satisfies a composition represented by the following Formula (S1).

$$L_{a1}M_{b1}P_{c1}S_{d1}A_{e1} \qquad (S1)$$

In Formula (S1), L represents an element selected from Li, Na, or K and is preferably Li. M represents an element selected from B, Zn, Sn, Si, Cu, Ga, Sb, Al, or Ge. A represents an element selected from I, Br, Cl, or F. a1 to e1 represent the compositional ratios between the respective elements, and a1:b1:c1:d1:e1 satisfies 1 to 12:0 to 5:1:2 to 12:0 to 10. a1 is preferably 1 to 9 and more preferably 1.5 to 7.5. b1 is preferably 0 to 3 and more preferably 0 to 1. d1 is preferably 2.5 to 10 and more preferably 3.0 to 8.5. e1 is preferably 0 to 5 and more preferably 0 to 3.

The compositional ratios among the respective elements can be controlled by adjusting the amounts of raw material compounds blended to manufacture the sulfide-based inorganic solid electrolyte as described below.

The sulfide-based inorganic solid electrolyte may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two or more raw materials of, for example, lithium sulfide ($Li_2S$), phosphorus sulfide (for example, diphosphorus pentasulfide ($P_2S_5$)), a phosphorus single body, a sulfur single body, sodium sulfide, hydrogen sulfide, lithium halides (for example, LiI, LiBr, and LiCl), or sulfides of an element represented by M described above (for example, $SiS_2$, SnS, and $GeS_2$).

The ratio between $Li_2S$ and $P_2S_5$ in each of Li-P-S-based glass and Li-P-S-based glass ceramic is preferably 60:40 to 90: 10 and more preferably 68:32 to 78:22 in terms of the molar ratio between $Li_2S:P_2S_5$. In a case where the ratio between $Li_2S$ and $P_2S_5$ is set in the above-described range, it is possible to increase a lithium ion conductivity. Specifically, the lithium ion conductivity can be preferably set to $1 \times 10^{-4}$ S/cm or more and more preferably set to $1 \times 10^{-3}$ S/cm or more. The upper limit is not particularly limited; however, it is realistically $1 \times 10^{-1}$ S/cm or less.

As specific examples of the sulfide-based inorganic solid electrolytes, combination examples of raw materials will be described below. Examples thereof include $Li_2S$-$P_2S_5$, $Li_2S$-$P_2S_5$-LiCl, $Li_2S$-$P_2S_5$-$H_2S$, $Li_2S$-$P_2S_5$-$H_2S$-LiCl, $Li_2S$-LiI-$P_2S_5$, $Li_2S$-LiI-$Li_2O$-$P_2S_5$, $Li_2S$-LiBr-$P_2S_5$, $Li_2S$-$Li_2O$-$P_2S_5$, $Li_2S$-$Li_3PO_4$-$P_2S_5$, $Li_2S$-$P_2S_5$-$P_2O_5$, $Li_2S$-$P_2S_5$-$SiS_2$, $Li_2S$-$P_2S_5$-$SiS_2$-LiCl, $Li_2S$-$P_2S_5$-SnS, $Li_2S$-$P_2S_5$-$Al_2S_3$, $Li_2S$-$GeS_2$, $Li_2S$-$GeS_2$-ZnS, $Li_2S$-$Ga_2S_3$, $Li_2S$-$GeS_2$-$Ga_2S_3$, $Li_2S$-$GeS_2$-$P_2S_5$, $Li_2S$-$Ges2$-$Sb_2S_5$, $Li_2S$-$GeS_2$-$Al_2S_3$, $Li_2S$-$SiS_2$, $Li_2S$-$Al_2S_3$, $Li_2S$-$SiS_2$-$Al_2S_3$, $Li_2S$-$SiS_2$-$P_2S_5$, $Li_2S$-$Sis2$-$P_2S_5$-LiI, $Li_2S$-$SiS_2$-LiI, $Li_2S$-$SiS_2$-$Li_4SiO_4$, $Li_2S$-$SiS_2$-$Li_3PO_4$, and $Li_{10}GeP_2S_{12}$. The mixing ratio between the individual raw materials does not matter. Examples of the method of synthesizing a sulfide-based inorganic solid electrolyte material using the above-described raw material compositions include an amorphorization method. Examples of the amorphorization method include a mechanical milling method, a solution method, and a melting quenching method. This is because treatments at a normal temperature become possible, and it is possible to simplify manufacturing processes.

(ii) Oxide-based inorganic solid electrolyte

The oxide-based inorganic solid electrolyte is preferably an electrolyte that contains an oxygen atom, has an ion conductivity of a metal belonging to Group 1 or Group 2 in the periodic table, and has electron-insulating properties.

The ion conductivity of the oxide-based inorganic solid electrolyte is preferably $1 \times 10^{-6}$ S/cm or more, more preferably $5 \times 10^{-6}$ S/cm or more, and particularly preferably $1 \times 10^{-5}$ S/cm or more. The upper limit is not particularly limited, but it is practically $1 \times 10^{-1}$ S/cm or less.

Specific examples of the compound include $Li_{xa}La_{ya}TiO_3$ (LLT) [xa satisfies $0.3 \leq xa \leq 0.7$, and ya satisfies $0.3 \leq ya \leq 0.7$]; $Li_{xb}La_{yb}Zr_{zb}M^{bb}_{mb}O_{nb}$ ($M^{bb}$ is one or more elements selected from Al, Mg, Ca, Sr, V, Nb, Ta, Ti, Ge, In, and Sn, xb satisfies $5 \leq xb \leq 10$, yb satisfies $1 \leq yb \leq 4$, zb satisfies $1 \leq zb \leq 4$, mb satisfies $0 \leq mb \leq 2$, and nb satisfies $5 \leq nb \leq 20$); $Li_{xc}B_{yc}M^{cc}_{zc}O_{nc}$ ($M^{cc}$ is one or more elements selected from C, S, Al, Si, Ga, Ge, In, and Sn, xc satisfies $0 < xc \leq 5$, yc satisfies $0 < yc \leq 1$, zc satisfies $0 < zc \leq 1$, and nc satisfies $0 < nc \leq 6$); $Li_{xd}(Al, Ga)_{ya}(Ti, Ge)_{zd}Si_{ad}P_{md}O_{nd}$ (xd satisfies $1 \leq xd \leq 3$, yd satisfies $0 \leq yd \leq 1$, zd satisfies $0 \leq zd \leq 2$, ad satisfies $0 \leq ad \leq 1$, md satisfies $1 \leq md \leq 7$, and nd satisfies $3 \leq nd \leq 13$.); $Li_{(3-2xe)}M^{ee}_{xe}D^{ee}O$ (xe represents a number of 0 or more and 0.1 or less, and $M^{ee}$ represents a divalent metal atom, $D^{ee}$ represents a halogen atom or a combination of two or more halogen atoms); $Li_{xf}Si_{yf}O_{zf}$ (xf satisfies $1 \leq xf \leq 5$, yf satisfies $0 < yf \leq 3$, zf satisfies $1 \leq zf \leq 10$); $Li_{xg}S_{yg}O_{zg}$ (xg satisfies $1 \leq xg \leq 3$, yg satisfies $0 < yg \leq 2$, zg satisfies $1 \leq zg \leq 10$); $Li_3BO_3$; $Li_3BO_3$-$Li_2SO_4$; $Li_2O$-$B_2O_3$-$P_2O_5$,; $Li_2O$-$SiO_2$,; $Li_6BaLa_2Ta_2O_{12}$; $Li_3PO_{(4-3/2w)}N_w$ (w satisfies $w < 1$); $Li_{3.5}Zn_{0.25}GeO_4$ having a lithium super ionic conductor (LISICON)-type crystal structure; $La_{0.55}Li_{0.35}TiO_3$ having a perovskite-type crystal structure; $LiTi_2P_3O_{12}$ having a natrium super ionic conductor (NASICON)-type crystal structure; $Li_{1+xh+yn}(Al, Ga)_{xh}(Ti, Ge)_{2-xh}Si_{yh}P_{3-yh}O_{12}$ (xh satisfies $0 \leq xh \leq 1$, and yh satisfies $0 \leq yh \leq 1$); and $Li_7La_3Zr_2O_{12}$ (LLZ) having a garnet-type crystal structure.

In addition, a phosphorus compound containing Li, P, or O is also desirable. Examples thereof include lithium phosphate ($Li_3PO_4$); LiPON in which a part of oxygen elements in lithium phosphate are substituted with a nitrogen element; and $LiPOD^1$ ($D^1$ is preferably one or more elements selected from Ti, V, Cr, Mn, Fe, Co, Ni, Cu, Zr, Nb, Mo, Ru, Ag, Ta, W, Pt, and Au).

Furthermore, it is also possible to preferably use $LiA^1ON$ ($A^1$ is one or more elements selected from Si, B, Ge, Al, C, and Ga).

(iii) Halide-based inorganic solid electrolytes

The halide-based inorganic solid electrolyte is preferably a compound that contains a halogen atom, has an ion conductivity of a metal belonging to Group 1 or Group 2 in the periodic table, and has electron-insulating properties.

The halide-based inorganic solid electrolyte is not particularly limited; however, examples thereof include LiCl, LiBr, LiI, and compounds such as $Li_3YBr_6$ or $Li_3YCl_6$ described in ADVANCED MATERIALS, 2018, 30, 1803075. In particular, $Li_3YBr_6$ or $Li_3YCl_6$ is preferable.

(iv) Hydride-based inorganic solid electrolyte

The hydride-based inorganic solid electrolyte is preferably a compound that contains a hydrogen atom, has an ion conductivity of a metal belonging to Group 1 or Group 2 in the periodic table, and has electron-insulating properties.

The hydride-based inorganic solid electrolyte is not particularly limited; however, examples thereof include $LiBH_4$, $Li_4(BH_4)_3I$, and $3LiBH_4$-LiCl.

The inorganic solid electrolyte is preferably in a particle shape in the solid electrolyte-containing composition for a secondary battery. In this case, the particle diameter (the volume average particle diameter) of the inorganic solid electrolyte is not particularly limited; however, it is preferably 0.01 μm or more and more preferably 0.1 μm or more. The upper limit is preferably 100 μm or less and more preferably 50 μm or less.

The particle diameter of the inorganic solid electrolyte is measured according to the following procedure. Using water (heptane in a case where the inorganic solid electrolyte is unstable in water), the particles of the inorganic solid electrolyte are diluted in a 20 mL sample bottle to prepare 1% by mass of a dispersion liquid. The diluted dispersion liquid sample is irradiated with 1 kHz ultrasonic waves for 10 minutes and is then immediately used for testing. Data collection is carried out 50 times using this dispersion liquid sample, a laser diffraction/scattering-type particle size distribution analyzer LA-920 (product name, manufactured by Horiba Ltd.), and a quartz cell for measurement at a temperature of 25°C to obtain the volume average particle diameter. For other detailed conditions and the like, Japanese Industrial Standards (JIS) Z8828: 2013 "particle diameter Analysis-Dynamic Light Scattering" is referred to as necessary. Five samples per level are produced, and the average values therefrom are employed.

The method of adjusting the particle diameter is not particularly limited, and a publicly known method can be applied. Examples thereof include a method using a typical pulverizer or a classifier. As the pulverizer or a classifier, for example, a mortar, a ball mill, a sand mill, a vibration ball mill, a satellite ball mill, a planetary ball mill, a swirling airflow-type jet mill, or a sieve is suitably used. During pulverization, it is possible to carry out wet-type pulverization in which water or a dispersion medium such as methanol is allowed to be present together. In order to provide the desired particle diameter, classification is preferably carried out. The classification is not particularly limited and can be carried out using a sieve, a wind power classifier, or the like. Both the dry-type classification and the wet-type classification can be used.

The inorganic solid electrolyte contained in the solid electrolyte-containing composition for a secondary battery may be one type or two or more types.

The content of the inorganic solid electrolyte in the solid electrolyte-containing composition for a secondary battery is not particularly limited. However, from the viewpoint of binding properties as well as from the viewpoint of dispersion characteristics, it is preferably 50% by mass or more, more preferably 70% by mass or more, and still more preferably 90% by mass or more, in 100% by mass of the solid content. From the same viewpoint, the upper limit thereof is preferably 99.9% by mass or less, more preferably 99.5% by mass or less, and particularly preferably 99% by mass or less.

Provided that in a case where the solid electrolyte-containing composition for a secondary battery contains an active material described later, regarding the content of the inorganic solid electrolyte in the solid electrolyte-containing composition for a secondary battery, the total content of the active material and the inorganic solid electrolyte is preferably in the above-described range.

In the present invention, the solid content (solid component) refers to components that does not disappear by being volatilized or evaporated in a case where the solid electrolyte-containing composition for a secondary battery is subjected to drying treatment at 150°C for 6 hours in a nitrogen atmosphere at a pressure of 1 mmHg. Typically, the solid content refers to a constitutional component other than a dispersion medium described later.

(Active material)

The solid electrolyte-containing composition for a secondary battery according to the embodiment of the present invention preferably contains an active material capable of intercalating and deintercalating an ion of a metal belonging to Group 1 or Group 2 of the periodic table. Examples of the active material, which will be described later, include a positive electrode active material and a negative electrode active material.

In the present invention, the solid electrolyte-containing composition for a secondary battery, containing an active material (a positive electrode active material or a negative electrode active material) may be referred to as an electrode composition (a positive electrode composition or a negative electrode composition).

- Positive electrode active material -

The positive electrode active material is an active material that is capable of intercalating and deintercalating an ion of a metal belonging to Group 1 or Group 2 of the periodic table, and it is preferably one capable of reversibly intercalating and deintercalating a lithium ion. The above-described material is not particularly limited as long as the material has the above-described characteristics and may be a transition metal oxide or an element capable of being complexed with Li such as sulfur or the like.

Among the above, as the positive electrode active material, transition metal oxides are preferably used, and transition metal oxides having a transition metal element $M^a$ (one or more elements selected from Co, Ni, Fe, Mn, Cu, and V) are more preferable. In addition, an element $M^b$ (an element of Group 1 (Ia) of the metal periodic table other than lithium, an element of Group 2 (IIa), or an element such as Al, Ga, In, Ge, Sn, Pb, Sb, Bi, Si, P, or B) may be mixed into this transition metal oxide. The mixing amount thereof is preferably 0% to 30% by mole of the amount (100% by mole) of the transition metal element $M^a$. It is more preferable that the transition metal oxide is synthesized by mixing the above components such that a molar ratio Li/$M^a$ is 0.3 to 2.2.

Specific examples of the transition metal oxides include transition metal oxides having a bedded salt-type structure (MA), transition metal oxides having a spinel-type structure (MB), lithium-containing transition metal phosphoric acid compounds (MC), lithium-containing transition metal halogenated phosphoric acid compounds (MD), and lithium-containing transition metal silicate compounds (ME).

Specific examples of the transition metal oxides having a bedded salt-type structure (MA) include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Specific examples of the transition metal oxides having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$, iron pyrophosphates such as $LiFeP_2O_7$, and cobalt phosphates such as $LiCoPO_4$, and a monoclinic NASICON type vanadium phosphate salt such as $Li_3V_2(PO_4)_3$ (lithium vanadium phosphate).

Examples of the lithium-containing transition metal halogenated phosphoric acid compound (MD) include an iron

fluorophosphate such as $Li_2FePO_4F$, a manganese fluorophosphate such as $Li_2MnPO_4F$, and a cobalt fluorophosphate such as $Li_2CoPO_4F$.

Examples of the lithium-containing transition metal silicate compounds (ME) include $Li_2FeSiO_4$, $Li_2MnSiO_4$, and $Li_2CoSiO_4$.

In the present invention, the transition metal oxide having a bedded salt-type structure (MA) is preferable, and LCO or NMC is more preferable.

The shape of the positive electrode active material is not particularly limited, but it is preferable that the positive electrode active material has a particle shape in the solid electrolyte-containing composition for a secondary battery. In a case where the positive electrode active material has a particulate shape, the particle diameter (the volume average particle diameter) of the positive electrode active material is not particularly limited. For example, the particle diameter thereof can be set to 0.1 to 50 $\mu$m. The particle diameter of the positive electrode active material particle can be measured using the same method as that of the particle diameter of the inorganic solid electrolyte.

A positive electrode active material obtained using a baking method may be used after being washed with water, an acidic aqueous solution, an alkaline aqueous solution, or an organic solvent.

The positive electrode active material contained in the solid electrolyte-containing composition for a secondary battery according to the embodiment of the present invention may be one type or two or more types.

The content of the positive electrode active material in the solid electrolyte-containing composition for a secondary battery is not particularly limited; however, it is preferably 10% to 97% by mass, more preferably 30% to 95% by mass, still more preferably 40% to 93% by mass, and particularly preferably 50% to 90% by mass, in 100% by mass of the solid content.

- Negative electrode active material-

The negative electrode active material is an active material capable of intercalating and deintercalating an ion of a metal belonging to Group 1 or Group 2 of the periodic table, and it is preferably one capable of reversibly intercalating and deintercalating a lithium ion. The material is not particularly limited as long as it has the above-described characteristics, and examples thereof include a carbonaceous material, a metal oxide, a metal composite oxide, a lithium single body, a lithium alloy, and a negative electrode active material that is capable of an alloy (capable of being alloyed) with lithium. Among the above, a carbonaceous material, a metal composite oxide, or a lithium single body is preferably used from the viewpoint of reliability. An active material that is capable of being alloyed with lithium is preferable since the capacity of the all-solid state secondary battery can be increased.

The carbonaceous material that is used as the negative electrode active material is a material substantially consisting of carbon. Examples thereof include petroleum pitch, carbon black such as acetylene black (AB), graphite (natural graphite, artificial graphite such as vapor-grown graphite), and carbonaceous material obtained by baking a variety of synthetic resins such as polyacrylonitrile (PAN)-based resins or furfuryl alcohol resins. Furthermore, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, vitreous carbon fibers, and activated carbon fibers, mesophase microspheres, graphite whisker, and tabular graphite.

These carbonaceous materials can be classified into non-graphitizable carbonaceous materials (also referred to as "hard carbon") and graphitizable carbonaceous materials based on the graphitization degree. In addition, it is preferable that the carbonaceous material has the lattice spacing, density, and crystallite size described in JP1987-22066A (JP-S62-22066A), JP1990-6856A (JP-H2-6856A), and JP1991-45473A (JP-H3-45473A). The carbonaceous material is not necessarily a single material and, for example, may be a mixture of natural graphite and artificial graphite described in JP1993-90844A (JP-H5-90844A) or graphite having a coating layer described in JP1994-4516A (JP-H6-4516A).

As the carbonaceous material, hard carbon or graphite is preferably used, and graphite is more preferably used.

The oxide of a metal or a metalloid element that is applied as the negative electrode active material is not particularly limited as long as it is an oxide capable of intercalating and deintercalating lithium, and examples thereof include an oxide of a metal element (metal oxide), a composite oxide of a metal element or a composite oxide of a metal element and a metalloid element (collectively referred to as "metal composite oxide), and an oxide of a metalloid element (a metalloid oxide). The oxides are preferably noncrystalline oxides, and preferred examples thereof include chalcogenides which are reaction products between metal elements and elements in Group 16 of the periodic table. In the present invention, the metalloid element refers to an element having intermediate properties between those of a metal element and a non-metalloid element. Typically, the metalloid elements include six elements including boron, silicon, germanium, arsenic, antimony, and tellurium, and further include three elements including selenium, polonium, and astatine. In addition, "noncrystalline" represents an oxide having a broad scattering band with an apex in a range of 20° to 40° in terms of $2\theta$ value in case of being measured by an X-ray diffraction method using $CuK\alpha$ rays, and the oxide may have a crystalline diffraction line. The highest intensity in a crystalline diffraction line observed in a range of 40° to 70° in terms of $2\theta$ value is preferably 100 times or less and more preferably 5 times or less with respect to the intensity of a diffraction line at the apex in a broad scattering band observed in a range of 20° to 40° in terms of $2\theta$ value, and it is particularly preferable that the oxide does not have a crystalline diffraction line.

In the compound group consisting of the noncrystalline oxides and the chalcogenides, noncrystalline oxides of metalloid elements and chalcogenides are more preferable, and (composite) oxides consisting of one element or a combination of two or more elements selected from elements (for example, Al, Ga, Si, Sn, Ge, Pb, Sb, and Bi) belonging to Groups 13 (IIIB) to 15 (VB) in the periodic table or chalcogenides are particularly preferable. Specific examples of the preferred noncrystalline oxide and chalcogenide preferably include $Ga_2O_3$, $GeO$, $PbO$, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, $GeS$, $PbS$, $PbS_2$, $Sb_2S_3$, and $Sb_2S_5$.

Suitable examples of the negative electrode active material which can be used in combination with a noncrystalline oxide containing Sn, Si, or Ge as a major component include a carbonaceous material capable of intercalating and/or deintercalating lithium ions or lithium metal, a lithium single body, a lithium alloy, and a negative electrode active material that is capable of being alloyed with lithium.

It is preferable that an oxide of a metal or a metalloid element, in particular, a metal (composite) oxide and the chalcogenide contain at least one of titanium or lithium as the constitutional component from the viewpoint of high current density charging and discharging characteristics. Examples of the metal composite oxide (lithium composite metal oxide) including lithium include a composite oxide of lithium oxide and the above metal (composite) oxide or the above chalcogenide, and specifically, $Li_2SnO_2$.

As the negative electrode active material, for example, a metal oxide (titanium oxide) having a titanium element is also preferable. Specifically, $Li_4Ti_5O_{12}$ (lithium titanium oxide [LTO]) is preferable since the volume variation during the intercalation and deintercalation of lithium ions is small, and thus the high-speed charging and discharging characteristics are excellent, and the deterioration of electrodes is suppressed, whereby it becomes possible to improve the life of the lithium ion secondary battery.

The lithium alloy as the negative electrode active material is not particularly limited as long as it is typically used as a negative electrode active material for a secondary battery, and examples thereof include a lithium aluminum alloy, and specifically, a lithium aluminum alloy, using lithium as a base metal, to which 10% by mass of aluminum is added.

The negative electrode active material capable of forming an alloy with lithium is not particularly limited as long as it is typically used as a negative electrode active material for a secondary battery. Examples of such an active material include a (negative electrode) active material (an alloy or the like) having a silicon element or a tin element and a metal such as Al or In, a negative electrode active material (a silicon element-containing active material) having a silicon element capable of exhibiting high battery capacity is preferable, and a silicon element-containing active material in which the content of the silicon element is 50% by mole or more with respect to all the constitutional elements is more preferable.

In general, a negative electrode including the negative electrode active material (for example, a Si negative electrode including a silicon element-containing active material or an Sn negative electrode containing an active material containing a tin element) can intercalate a larger amount of Li ions than a carbon negative electrode (for example, graphite or acetylene black). That is, the amount of Li ions intercalated per unit mass increases. As a result, the battery capacity (the energy density) can be increased. As a result, there is an advantage in that the battery driving duration can be extended.

Examples of the silicon element-containing active material include a silicon-containing alloy (for example, $LaSi_2$, $VSi_2$, La-Si, Gd-Si, or Ni-Si) including a silicon material such as Si or SiOx ($0 < x \leq 1$) and titanium, vanadium, chromium, manganese, nickel, copper, lanthanum, or the like or a structured active material thereof (for example, $LaSi_2/Si$), and an active material such as $SnSiO_3$ or $SnSiS_3$ including silicon element and tin element. It is noted that in addition, since SiOx itself can be used as a negative electrode active material (a metalloid oxide) and Si is produced along with the operation of an all-solid state secondary battery, SiOx can be used as a negative electrode active material (or a precursor material thereof) capable of being alloyed with lithium.

Examples of the negative electrode active material including the tin element include Sn, SnO, $SnO_2$, SnS, $SnS_2$, and the above-described active material including silicon element and tin element. In addition, a composite oxide with lithium oxide, for example, $Li_2SnO_2$ can also be used.

In the present invention, the above-described negative electrode active material can be used without any particular limitation. From the viewpoint of battery capacity, a preferred aspect as the negative electrode active material is a negative electrode active material that is capable of being alloyed with lithium. Among them, the silicon material or the silicon-containing alloy (the alloy containing a silicon element) described above is more preferable, and it is more preferable to include a negative electrode active material containing silicon (Si) or a silicon-containing alloy.

The chemical formulae of the compounds obtained by the above baking method can be calculated using an inductively coupled plasma (ICP) emission spectroscopy as a measuring method from the mass difference of powder before and after baking as a convenient method.

The shape of the negative electrode active material is not particularly limited, but it is preferable that the negative electrode active material has a particle shape in the solid electrolyte-containing composition for a secondary battery. In a case where the negative electrode active material has a particulate shape, the particle diameter of the negative electrode active material is not particularly limited; however, it is preferably 0.1 to 60 $\mu$m. The particle diameter of the negative electrode active material particle can be measured using the same method as that of the particle diameter of the inorganic solid electrolyte.

The negative electrode active material contained in the solid electrolyte-containing composition for a secondary battery according to the embodiment of the present invention may be one type or two or more types.

The content of the negative electrode active material in the solid electrolyte-containing composition for a secondary battery is not particularly limited, and it is preferably 10% to 90% by mass, more preferably 20% to 85% by mass, still more preferably 30% to 80% by mass, and even still more preferably 40% to 75% by mass, in 100% by mass of the solid content.

In the present invention, in a case where a negative electrode active material layer is formed by charging a secondary battery, ions of a metal belonging to Group 1 or Group 2 in the periodic table, generated in the all-solid state secondary battery, can be used instead of the negative electrode active material. By bonding the ions to electrons and precipitating a metal, a negative electrode active material layer can be formed.

- Coating of active material -

The surfaces of the positive electrode active material and the negative electrode active material may be subjected to surface coating with another metal oxide. Examples of the surface coating agent include metal oxides and the like containing Ti, Nb, Ta, W, Zr, Al, Si, or Li. Specific examples thereof include titanium oxide spinel, tantalum-based oxides, niobium-based oxides, and lithium niobate-based compounds, and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, and $B_2O_3$.

In addition, the surface of the electrode containing the positive electrode active material or negative electrode active material may be subjected to a surface treatment with sulfur or phosphorus.

Furthermore, the particle surface of the positive electrode active material or negative electrode active material may be subjected to a surface treatment with an actinic ray or an active gas (plasma or the like) before and after the surface coating.

(Conductive auxiliary agent)

The solid electrolyte-containing composition for a secondary battery according to the embodiment of the present invention may contain a conductive auxiliary agent.

The conductive auxiliary agent is not particularly limited, and conductive auxiliary agents that are known as ordinary conductive auxiliary agents can be used. It may be, for example, graphite such as natural graphite and artificial graphite, carbon black such as acetylene black, Ketjen black, and furnace black, amorphous carbon such as needle cokes, carbon fibers such as a vapor-grown carbon fiber and a carbon nanotube, or a carbonaceous material such as graphene or fullerene, which are electron-conductive materials, and it may be also a metal powder or metal fiber of copper, nickel, or the like. A conductive polymer such as polyaniline, polypyrrole, polythiophene, polyacetylene, or a polyphenylene derivative may also be used.

In the present invention, in a case where the active material is used in combination with the conductive auxiliary agent, among the above-described conductive auxiliary agents, a conductive auxiliary agent that does not intercalate and deintercalate ions (preferably Li ions) of a metal belonging to Group 1 or Group 2 in the periodic table and does not function as an active material at the time of charging and discharging of the battery is classified as the conductive auxiliary agent. Therefore, among the conductive auxiliary agents, a conductive auxiliary agent that can function as the active material in the active material layer at the time of charging and discharging of the battery is classified as an active material but not as a conductive auxiliary agent. Whether or not the conductive auxiliary agent functions as the active material at the time of charging and discharging of a battery is not unambiguously determined but is determined by the combination with the active material.

The conductive auxiliary agent is preferably in a particle shape in the solid electrolyte-containing composition for a secondary battery. In a case where the conductive auxiliary agent has a particulate shape, the particle diameter (volume average particle diameter) of the conductive auxiliary agent is not particularly limited; however, it is, for example, preferably 0.02 to 1.0 $\mu$m and more preferably 0.03 to 0.5 $\mu$m. The particle diameter of the conductive auxiliary agent can be measured using the same method as that of the particle diameter of the inorganic solid electrolyte.

The solid electrolyte-containing composition for a secondary battery may contain one type or two or more types of conductive auxiliary agents.

In a case where the solid electrolyte-containing composition for a secondary battery according to the embodiment of the present invention contains the conductive auxiliary agent, the content of the conductive auxiliary agent in the solid electrolyte-containing composition for a secondary battery is preferably 0% to 10% by mass and more preferably 1% to 5% by mass with respect to 100% by mass of the solid content.

(Dispersion medium)

The solid electrolyte-containing composition for a secondary battery according to the embodiment of the present invention may contain a dispersion medium.

Examples of the dispersion medium contained in the solid electrolyte-containing composition for a secondary battery include a dispersion medium derived from the binder composition, a dispersion medium used in the preparation of the solid electrolyte-containing composition for a secondary battery, and the like. Such a dispersion medium is a dispersion medium that disperses or dissolves each of the above-described components and is only required to be an organic compound that is in a liquid state in a use environment, examples thereof include the above-described organic solvent described in the binder composition, and preferred examples thereof are also the same. The dispersion medium used in the preparation of the solid electrolyte-containing composition for a secondary battery may be the same as or different from the dispersion medium in the binder composition.

The dispersion medium contained in the solid electrolyte-containing composition for a secondary battery may be one type or two or more types.

The content of the dispersion medium in the solid electrolyte-containing composition for a secondary battery is not particularly limited and can be appropriately set. For example, the content of the dispersion medium in the solid electrolyte-containing composition for a secondary battery is preferably 20% to 80% by mass, more preferably 30% to 70% by mass, and particularly preferably 40% to 60% by mass.

(Lithium salt)

It is also preferable that the solid electrolyte-containing composition for a secondary battery according to the embodiment of the present invention contains a lithium salt (supporting electrolyte). Generally, the lithium salt is preferably a lithium salt that is used for this kind of product and is not particularly limited. For example, lithium salts described in paragraphs 0082 to 0085 of JP2015-088486A are preferable. **In** a case where the solid electrolyte-containing composition for a secondary battery according to the embodiment of the present invention contains a lithium salt, the content of the lithium salt is preferably 0.1 part by mass or more and more preferably 5 parts by mass or more with respect to 100 parts by mass of the solid electrolyte. The upper limit thereof is preferably 50 parts by mass or less and more preferably 20 parts by mass or less.

(Dispersing agent)

Since the above-described polymer binder functions as a dispersing agent as well, the solid electrolyte-containing composition for a secondary battery according to the embodiment of the present invention may not contain a dispersing agent other than this polymer binder, but it may contain a dispersing agent. As the dispersing agent, a dispersing agent that is generally used for an all-solid state secondary battery can be appropriately selected and used. In general, a compound intended for particle adsorption and steric repulsion and/or electrostatic repulsion is suitably used.

(Other additives)

As components other than the respective components described above, the solid electrolyte-containing composition for a secondary battery according to the embodiment of the present invention may appropriately contain an ionic liquid, a thickener, a crosslinking agent (an agent causing a crosslinking reaction by radical polymerization, condensation polymerization, or ring-opening polymerization), a polymerization initiator (an agent that generates an acid or a radical by heat or light), an antifoaming agent, a leveling agent, a dehydrating agent, or an antioxidant. The ionic liquid is contained in order to further improve the ion conductivity, and the publicly known one in the related art can be used without particular limitation. In addition, a polymer other than the binder forming polymer described above, a typically used binding agent, or the like may be contained.

<Preparation of constitutional layer forming material>

The constitutional layer forming material according to the embodiment of the present invention can be prepared as a mixture, preferably as a slurry, by mixing the above-described binder composition and each of the above-described components depending on the use application by using, for example, the above-described mixer. In addition, the constitutional layer forming material can also be prepared without preparing the above-described binder composition, and for example, the above-described polymer binder, the above-described metal element-containing component, and each of the above-described components depending to the use application can be also mixed at a ratio such that the contents thereof in the constitutional layer forming material are each a predetermined content, thereby the constitutional layer forming material can be prepared. The mixing conditions are not particularly limited, and examples thereof include the mixing conditions in the preparation of the binder composition described above. It is noted that since the inorganic solid electrolyte easily reacts with moisture, the mixing is preferably carried out under dry air or in an inert gas.

[Sheet for non-aqueous secondary battery]

A sheet for a non-aqueous secondary battery can be produced by using the constitutional layer forming material according to the embodiment of the present invention. This sheet for a non-aqueous secondary battery is a sheet-shaped molded body that is capable of forming an electrode layer of a non-aqueous secondary battery, and it includes various aspects depending on the use application thereof.

Hereinafter, a sheet for an all-solid state secondary battery, which is one suitable form of the sheet for a non-aqueous secondary battery, will be described; however, the following content regarding the sheet for an all-solid state secondary battery can be applied to the sheet for a non-aqueous secondary battery.

<Sheet for all-solid state secondary battery>

A sheet for an all-solid state secondary battery according to the embodiment of the present invention is a sheet-shaped molded body with which a constitutional layer of an all-solid state secondary battery can be formed, and it includes various aspects depending on the use application thereof. Examples of thereof include a sheet that is preferably used in a solid electrolyte layer (also referred to as a solid electrolyte sheet for an all-solid state secondary battery) and a sheet that is preferably used in an electrode or a laminate of an electrode and a solid electrolyte layer (an electrode sheet for an all-solid state secondary battery). In the present invention, the variety of sheets described above will be collectively referred to as a sheet for an all-solid state secondary battery.

In the present invention, each layer that constitutes a sheet for an all-solid state secondary battery may have a monolayer structure or a multilayer structure.

In the sheet for an all-solid state secondary battery, the solid electrolyte layer or the active material layer is formed of the solid electrolyte-containing composition for a secondary battery according to the embodiment of the present invention. The constitutional layer formed of the solid electrolyte-containing composition for a secondary battery according to the embodiment of the present invention is formed of a component derived from the solid electrolyte-containing composition for a secondary battery, and is usually firmly adhered (bound) in a state where the solid particles (the inorganic solid electrolyte, the conductive auxiliary agent, and the active material) and the polymer binder are mixed with each other. In addition, it is preferable that the polymer binder interacts with the metal element-containing component to aggregate.

In a case where the sheet for an all-solid state secondary battery is incorporated into an all-solid state secondary battery as it is or by appropriately peeling off a base material, the lower resistance of the all-solid state secondary battery can be realized.

The solid electrolyte sheet for an all-solid state secondary battery according to the embodiment of the present invention is only required to be a sheet having a solid electrolyte layer, and it may be a sheet in which a solid electrolyte layer is formed on a base material or may be a sheet (a sheet from which the base material has been peeled off) that is formed of a solid electrolyte layer without including a base material. The solid electrolyte sheet for an all-solid state secondary battery may include another layer in addition to the solid electrolyte layer. Examples of the other layer include a protective layer (a stripping sheet), a collector, and a coating layer. The solid electrolyte layer included in the solid electrolyte sheet for all-solid state secondary battery is preferably formed of the solid electrolyte-containing composition for a secondary battery according to the embodiment of the present invention. The content of each component in the solid electrolyte layer is not particularly limited, but it preferably has the same meaning as the content of each component in the solid content of the solid electrolyte-containing composition for a secondary battery according to the embodiment of the present invention. The layer thickness of each layer that constitutes the solid electrolyte sheet for an all-solid state secondary battery is the same as the layer thickness of each layer described later in the all-solid state secondary battery.

The base material is not particularly limited as long as it can support the solid electrolyte layer, and examples thereof include a sheet body (plate-shaped body) formed of materials described later regarding the collector, an organic material, an inorganic material, or the like. Examples of the organic materials include various polymers, and specific examples thereof include polyethylene terephthalate, polypropylene, polyethylene, and cellulose. Examples of the inorganic materials include glass and ceramic.

The electrode sheet for an all-solid state secondary battery according to the embodiment of the present invention (simply also referred to as an "electrode sheet") is only required to be an electrode sheet including an active material layer, and it may be a sheet in which an active material layer is formed on a base material (collector) or may be a sheet (a sheet from which the base material has been peeled off) that is formed of an active material layer without including a base material. The electrode sheet is typically a sheet including the collector and the active material layer, and examples of an aspect thereof include an aspect including the collector, the active material layer, and the solid electrolyte layer in this order and an aspect including the collector, the active material layer, the solid electrolyte layer, and the active material layer in this order. It is preferable that the active material layer and appropriately the solid electrolyte layer which are contained in the electrode sheet are formed of the solid electrolyte-containing composition for a secondary battery according to the embodiment of the present invention. The content of each component in the solid electrolyte layer or the active material layer is not particularly limited, but it preferably has the same meaning as the content of each component in the solid content of the solid electrolyte-containing composition for a secondary battery according to the embodiment of the present invention. The layer thickness of each of the layers forming the electrode sheet according to the embodiment of the present invention is the same as the layer thickness of each of the layers described below regarding the all-solid state secondary battery. The electrode sheet may include the above-described other layer.

It is noted that in a case where the solid electrolyte layer or the active material layer is not formed of the solid electrolyte-containing composition for a secondary battery according to the embodiment of the present invention, it is formed of a general constitutional layer forming material.

In the sheet for an all-solid-state secondary battery according to the embodiment of the present invention, at least one layer of the constitutional layer is formed of the solid electrolyte-containing composition for a secondary battery according to the embodiment of the present invention. Therefore, the sheet for an all-solid state secondary battery according to the embodiment of the present invention includes a constitutional layer in which solid particles are firmly bound while an increase in the interface resistance of the solid particles is suppressed. Therefore, in a case where this constitutional layer is incorporated into an all-solid state secondary battery, the lower resistance (higher conductivity) of the all-solid state secondary battery can be realized. The sheet for an all-solid state secondary battery according to the embodiment of the present invention is suitably used as a sheet-shaped member that is incorporated as a constitutional layer of an all-solid state secondary battery.

[Manufacturing method for sheet for all-solid state secondary battery]

A manufacturing method for a sheet for an all-solid state secondary battery according to the embodiment of the present invention is not particularly limited and can be manufactured by forming the above-described constitutional layer using the solid electrolyte-containing composition for a secondary battery according to the embodiment of the present invention. Examples thereof include a method in which the film formation (the coating and drying) is carried out preferably on a base material or a collector (the other layer may be interposed) to form a layer (a coated and dried layer) consisting of a solid electrolyte-containing composition for a secondary battery. This method makes it possible to produce a sheet for an all-solid state secondary battery having a base material or a collector and having a coated and dried layer. Here, the coated and dried layer refers to a layer formed by coating the solid electrolyte-containing composition for a secondary battery according to the embodiment of the present invention and drying the dispersion medium and the organic solvent (that is, a layer formed using the solid electrolyte-containing composition for a secondary battery according to the embodiment of the present invention and constituted of a composition in which the dispersion medium and the organic solvent have been removed from the solid electrolyte-containing composition for a secondary battery according to the embodiment of the present invention). In the constitutional layer and the coated and dried layer, the dispersion medium and the organic solvent may remain within a range where the effect of the present invention is not impaired, and the residual amount thereof, for example, in each of the layers may be 3% by mass or less.

In the manufacturing method for a sheet for an all-solid state secondary battery according to the embodiment of the present invention, each of the steps such as coating and drying will be described in the following manufacturing method for an all-solid state secondary battery.

In the manufacturing method for a sheet for an all-solid state secondary battery according to the embodiment of the present invention, the coated and dried layer obtained as described above can be pressurized. The pressurizing condition and the like will be described later in the section of the manufacturing method for an all-solid state secondary battery.

In addition, in the manufacturing method for a sheet for an all-solid state secondary battery according to the embodiment of the present invention, the base material, the protective layer (particularly stripping sheet), or the like can also be stripped.

[Non-aqueous secondary battery]

The non-aqueous secondary battery according to the embodiment of the present invention includes a positive electrode active material layer, a negative electrode active material layer facing the positive electrode active material layer, and an electrolyte layer disposed between the positive electrode active material layer and the negative electrode active material layer. The non-aqueous secondary battery according to the embodiment of the present invention is not particularly limited in the configuration as long as it has a solid electrolyte layer between the positive electrode active material layer and the negative electrode active material layer, and for example, a publicly known configuration for a non-aqueous secondary battery can be employed.

<All-solid state secondary battery>

Hereinafter, the all-solid state secondary battery which is a preferred form of the non-aqueous secondary battery will be described.

The all-solid state secondary battery according to the embodiment of the present invention includes a positive electrode active material layer, a negative electrode active material layer facing the positive electrode active material layer, and a solid electrolyte layer disposed between the positive electrode active material layer and the negative electrode active material layer. The all-solid state secondary battery according to the embodiment of the present invention is not particularly limited in the configuration as long as it has a solid electrolyte layer between the positive electrode active material layer and the negative electrode active material layer, and for example, a publicly known configuration that relates to an all-solid state secondary battery can be employed. The positive electrode active material layer is preferably formed on a positive electrode collector to constitute a positive electrode. The negative electrode active material layer is preferably formed on a negative electrode collector to configure a negative electrode. In the present invention, each constitutional layer (including a collector and the like) that constitutes an all-solid state secondary battery may have a monolayer structure or a multilayer structure.

It is preferable that at least one of the solid electrolyte layer, the negative electrode active material layer, or the positive electrode active material layer is formed of the solid electrolyte-containing composition for a secondary battery according to the embodiment of the present invention. In addition, an aspect in which the solid electrolyte layer and any one of the negative electrode active material layer or the positive electrode active material layer are both formed of the solid electrolyte-containing composition for a secondary battery according to the embodiment of the present invention is also one of the preferred aspects. An aspect in which both the negative electrode active material layer and the positive electrode active material layer are formed of the solid electrolyte-containing composition for a secondary battery according to the embodiment of the present invention is also one of the other preferred aspects. In addition, it is preferable that any one of the negative electrode (a laminate of a negative electrode collector and a negative electrode collector) and the positive electrode (a laminate of a positive electrode collector and a positive electrode collector) is formed of the electrode sheet for an all-solid state secondary battery according to the embodiment of the present invention, and an aspect in which both of them are formed of the electrode sheet for an all-solid state secondary battery according to the embodiment of the present invention is also one of the preferred aspects. In the present invention, an aspect in which all of the layers are formed of the solid electrolyte-containing composition for a secondary battery according to the aspect of the present invention is also one of the preferred aspects.

In the present invention, forming the constitutional layer of the all-solid state secondary battery by using the solid electrolyte-containing composition for a secondary battery according to the embodiment of the present invention includes an aspect in which the constitutional layer is formed by using the sheet for an all-solid state secondary battery according to the embodiment of the present invention (however, in a case where a layer other than the layer formed of the solid electrolyte-containing composition for a secondary battery according to the embodiment of the present invention is provided, a sheet from which this layer is removed). In a case where the active material layer or the solid electrolyte layer is not formed of the solid electrolyte-containing composition for a secondary battery according to the embodiment of the present invention, a known material in the related art can be used.

In the present invention, each constitutional layer (including a collector and the like) that constitutes an all-solid state secondary battery may have a monolayer structure or a multilayer structure.

<Positive electrode active material layer, solid electrolyte layer, and negative electrode active material layer>

In the solid electrolyte layer or active material layer formed of the solid electrolyte-containing composition for a secondary battery according to the embodiment of the present invention, the types of components to be contained and the contents thereof are preferably the same as the solid content of the solid electrolyte-containing composition for a secondary battery according to the embodiment of the present invention.

The thickness of each of the negative electrode active material layer, the solid electrolyte layer, and the positive electrode active material layer is not particularly limited. In case of taking a dimension of a general all-solid state secondary battery into account, the thickness of each of the layers is preferably 10 to 1,000 $\mu$m and more preferably 20 $\mu$m or more and less than 500 $\mu$m. In the all-solid state secondary battery according to the embodiment of the present invention, the thickness of any one of the layers is still more preferably 50 $\mu$m or more and less than 500 $\mu$m.

<Collector>

Each of the positive electrode active material layer and the negative electrode active material layer may include a collector on the side opposite to the solid electrolyte layer. The positive electrode collector and the negative electrode collector are preferably an electron conductor. In the present invention, any one of the positive electrode collector or the negative electrode collector, or collectively both of them may be simply referred to as the collector.

As a material that forms the positive electrode collector, not only aluminum, an aluminum alloy, stainless steel, nickel, or titanium but also a material (a material on which a thin film has been formed) obtained by treating the surface of aluminum or stainless steel with carbon, nickel, titanium, or silver is preferable. Among the above, aluminum or an aluminum alloy is more preferable.

As a material that forms the negative electrode collector, aluminum, copper, a copper alloy, stainless steel, nickel, titanium, or the like, and further, a material obtained by treating the surface of aluminum, copper, a copper alloy, or stainless steel with carbon, nickel, titanium, or silver is preferable, and aluminum, copper, a copper alloy, or stainless steel is more preferable.

Regarding the shape of the collector, a film sheet shape is typically used; however, it is also possible to use a collector having a shape a net shape or a punched shape, or a collector of a lath body, a porous body, a foaming body, a molded body of a fiber group, or the like.

The thickness of the collector is not particularly limited, but it is preferably 1 to 500 $\mu$m. In addition, protrusions and recesses are preferably provided on the surface of the collector by carrying out a surface treatment.

<Other configurations>

In the present invention, a functional layer, a functional member, or the like may be appropriately interposed or disposed between or on the outside of the respective layers of the negative electrode collector, the negative electrode active material layer, the solid electrolyte layer, the positive electrode active material layer, and the positive electrode collector.

<Housing>

Depending on the use application, the all-solid state secondary battery according to the embodiment of the present invention may be used as the all-solid state secondary battery having the above-described structure as it is but is preferably sealed in an appropriate housing to be used in the form of a dry cell. The housing may be a metallic housing or a resin (plastic) housing. In a case where a metallic housing is used, examples thereof include an aluminum alloy housing and a stainless steel housing. It is preferable that the metallic housing is classified into a positive electrode-side housing and a negative electrode-side housing and that the positive electrode-side housing and the negative electrode-side housing are electrically connected to the positive electrode collector and the negative electrode collector, respectively. The positive electrode-side housing and the negative electrode-side housing are preferably integrated by being joined together through a gasket for short circuit prevention.

<Preferred embodiment of all-solid state secondary battery>

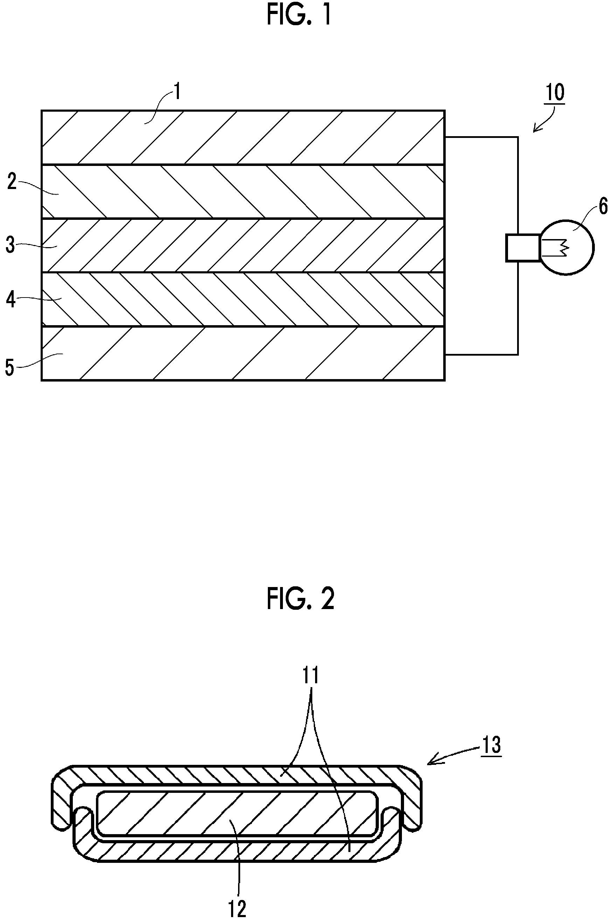

Hereinafter, the all-solid state secondary battery according to the preferred embodiment of the present invention will be described with reference to Fig. 1; however, the present invention is not limited thereto.

Fig. 1 is a cross-sectional view schematically illustrating an all-solid state secondary battery (a lithium ion secondary battery) according to a preferred embodiment of the present invention. In a case of being seen from the negative electrode side, an all-solid state secondary battery 10 of the present embodiment includes a negative electrode collector 1, a negative electrode active material layer 2, a solid electrolyte layer 3, a positive electrode active material layer 4, and a positive electrode collector 5 in this order. The respective layers are in contact with each other, and thus structures thereof are adjacent. In a case in which the above-described structure is employed, during charging, electrons ($e^-$) are supplied to the negative electrode side, and lithium ions ($Li^+$) are accumulated on the negative electrode side. On the other hand, during discharging, the lithium ions ($Li^+$) accumulated in the negative electrode return to the positive electrode side, and electrons are supplied to an operation portion 6. In an example illustrated in the drawing, an electric bulb is employed as a model at the operation portion 6 and is lit by discharging.

In a case where the all-solid state secondary battery having a layer configuration illustrated in Fig. 1 is placed in a 2032-type coin case 11, the all-solid state secondary battery will be referred to as a laminate 12 for an all-solid state secondary battery, and a battery produced by placing this laminate 12 for an all-solid state secondary battery in a 2032-type coin case 11 will be referred to as a (coin-type) all-solid state secondary battery 13, whereby both batteries may be distinctively referred to in some cases.

(Positive electrode active material layer, solid electrolyte layer, and negative electrode active material layer)

In the all-solid state secondary battery 10, all of the positive electrode active material layer, the solid electrolyte layer, and the negative electrode active material layer are formed of the solid electrolyte-containing composition for a secondary battery of the embodiment of the present invention. The types of the inorganic solid electrolyte and the polymer binder, and metal element-containing component which are contained in the positive electrode active material layer 4, the solid electrolyte layer 3, and the negative electrode active material layer 2 may be the same or different from each other. In addition, the types of the conductive auxiliary agents contained in the positive electrode active material layer 4 and the negative electrode active material layer 2 may be the same or different from each other.

In the present invention, any one of the positive electrode active material layer and the negative electrode active material layer, or collectively both of them may be simply referred to as the active material layer or the electrode active material layer. In addition, in the present invention, any one of the positive electrode active material and the negative electrode active material, or collectively both of them may be simply referred to as an active material or an electrode active material.

The solid electrolyte layer contains an inorganic solid electrolyte having an ion conductivity of a metal belonging to Group 1 or Group 2 in the periodic table, the above-described polymer binder, the above-described metal element-containing component, any component described above, and the like within a range where the effect of the present invention is not impaired, and it generally does not contain a positive electrode active material and/or a negative electrode active material.

The positive electrode active material layer contains an inorganic solid electrolyte having an ion conductivity of a metal belonging to Group 1 or Group 2 in the periodic table, the above-described polymer binder, the above-described metal element-containing component, a positive electrode active material, preferably a conductive auxiliary agent, and any component described above and the like within a range where the effect of the present invention is not impaired.

The negative electrode active material layer contains an inorganic solid electrolyte having an ion conductivity of a metal belonging to Group 1 or Group 2 in the periodic table, the above-described polymer binder, the above-described metal element-containing component, a negative electrode active material, preferably a conductive auxiliary agent, and any component described above and the like within a range where the effect of the present invention is not impaired.

**In** the all-solid state secondary battery 10, the negative electrode active material layer can be a lithium metal layer. Examples of the lithium metal layer include a layer formed by depositing or molding a lithium metal powder, a lithium foil, and a lithium vapor deposition film. The thickness of the lithium metal layer can be, for example, 1 to 500 $\mu$m regardless of the above thickness of the above negative electrode active material layer.

In the present invention, in a case where the constitutional layer is formed of the solid electrolyte-containing composition for a secondary battery according to the embodiment of the present invention, it is possible to realize an all-solid state secondary battery having low resistance. In addition, since the all-solid state secondary battery according to the embodiment of the present invention exhibits low resistance, a large current can be taken out.

(Collector)

The positive electrode collector 5 and the negative electrode collector 1 are as described above.

In a case where the all-solid state secondary battery 10 has a constitutional layer other than the constitutional layer formed of the solid electrolyte-containing composition for a secondary battery according to the embodiment of the present invention, a layer formed of a known constitutional layer forming material can also be applied.

In addition, each layer may be composed of a single layer or multiple layers.

[Manufacture of non-aqueous secondary battery]

The non-aqueous secondary battery can be manufactured according to a conventional method by using the constitutional layer forming material according to the embodiment of the present invention.

For example, the all-solid state secondary battery can be manufactured by forming each of the layers described above using the solid electrolyte-containing composition for a secondary battery according to the embodiment of the present invention or the like. Specifically, the all-solid state secondary battery according to the embodiment of the present invention can be manufactured by carrying out a method (a manufacturing method for a sheet for an all-solid state secondary battery according to the embodiment of the present invention) which includes (is carried out through) a step of coating an appropriate base material (for example, a metal foil which serves as a collector) with the solid electrolyte-containing composition for a secondary battery according to the embodiment of the present invention and forming a coating film (forming a film).

More specifically, a positive electrode composition containing a positive electrode active material is applied and dried as a positive electrode material onto a metal foil which is a positive electrode collector, to form a positive electrode active material layer, thereby producing a positive electrode sheet for an all-solid state secondary battery. Next, the solid electrolyte-containing composition for forming a solid electrolyte layer is applied and dried onto the positive electrode active material layer to form the solid electrolyte layer. Furthermore, the negative electrode composition containing a negative electrode active material as a negative electrode material is applied and dried onto the solid electrolyte layer to form a negative electrode active material layer. A negative electrode collector (a metal foil) is overlaid on the negative electrode active material layer, whereby it is possible to obtain an all-solid state secondary battery having a structure in which the solid electrolyte layer is sandwiched between the positive electrode active material layer and the negative electrode active material layer. A desired all-solid state secondary battery can also be manufactured by sealing the all-solid state secondary battery in a housing.

In addition, it is also possible to manufacture an all-solid state secondary battery by carrying out the forming method of each layer in reverse order to form a negative electrode active material layer, a solid electrolyte layer, and a positive electrode active material layer on a negative electrode collector and superposing a positive electrode collector thereon.

As another method, the following method can be exemplified. That is, the positive electrode sheet for an all-solid state secondary battery is produced as described above. In addition, a negative electrode composition which contains a negative electrode active material and serves as a negative electrode material is applied and dried onto a metal foil which is a negative electrode collector, to form a negative electrode active material layer, thereby producing a negative electrode sheet for an all-solid state secondary battery. Next, a solid electrolyte layer is formed on the active material layer in any one of these sheets as described above. Furthermore, the other one of the positive electrode sheet for an all-solid state secondary battery and the negative electrode sheet for an all-solid state secondary battery is laminated on the solid electrolyte layer such that the solid electrolyte layer and the active material layer come into contact with each other. In this manner, an all-solid state secondary battery can be manufactured.

As still another method, for example, the following method can be used. That is, the positive electrode sheet for an all-solid state secondary battery and the negative electrode sheet for an all-solid state secondary battery are prepared as described above. In addition, separately from the positive electrode sheet for an all-solid state secondary battery and the negative electrode sheet for an all-solid state secondary battery, a solid electrolyte-containing composition is applied onto a base material, thereby manufacturing a solid electrolyte sheet for an all-solid state secondary battery constituted of a solid electrolyte layer. Furthermore, the positive electrode sheet for an all-solid state secondary battery and the negative electrode sheet for an all-solid state secondary battery are laminated such that the solid electrolyte layer removed from the base material is sandwiched therebetween. In this manner, an all-solid state secondary battery can be manufactured.

Furthermore, a positive electrode sheet for an all-solid state secondary battery, a negative electrode sheet for an all-solid state secondary battery, and a solid electrolyte sheet for an all-solid state secondary battery are produced as described above. Next, the positive electrode sheet for an all-solid state secondary battery or negative electrode sheet for an all-solid state secondary battery, and the solid electrolyte sheet for an all-solid state secondary battery are overlaid and pressurized into a state where the positive electrode active material layer or the negative electrode active material layer is brought into contact with the solid electrolyte layer. In this way, the solid electrolyte layer is transferred to the positive electrode sheet for an all-solid state secondary battery or the negative electrode sheet for an all-solid state secondary battery. Then, the solid electrolyte layer from which the base material of the solid electrolyte sheet for an all-solid state secondary battery has been peeled off and the negative electrode sheet for an all-solid state secondary battery or positive electrode sheet for an all-solid state secondary battery are overlaid and pressurized (into a state where the negative electrode active material layer or positive electrode active material layer is brought into contact with the solid electrolyte layer). In this way, an all-solid state secondary battery can be manufactured. The pressurizing method and the pressurizing conditions in this method are not particularly limited, and a method and pressurizing conditions described in the pressurization step, which will be described later, can be applied.

The solid electrolyte layer or the like can also be formed by, for example, forming a solid electrolyte-containing composition or the like on a base material or an active material layer by pressurization molding under pressurizing conditions described later.

In the above-described manufacturing method, the solid electrolyte-containing composition for a secondary battery according to the embodiment of the present invention is only required to be used for any of the solid electrolyte-containing composition, the positive electrode composition, and the negative electrode composition, and the solid electrolyte-containing composition for a secondary battery according to the embodiment of the present invention can be used for all the compositions.

In a case where the solid electrolyte layer or the active material layer is formed of a composition other than the solid electrolyte-containing composition for a secondary battery according to the embodiment of the present invention, examples thereof include a typically used composition. In addition, the negative electrode active material layer can also be formed by binding ions of a metal belonging to Group 1 or Group 2 in the periodic table, which are accumulated on a negative electrode collector during initialization described later or during charging for use, without forming the negative electrode active material layer during the manufacturing of the all-solid state secondary battery to electrons and precipitating the ions on a negative electrode collector the like as a metal.

<Formation (film formation) of each layer>

The coating method for a constitutional layer forming material is not particularly limited and can be appropriately selected. Examples thereof include coating (preferably wet-type coating), spray coating, spin coating, dip coating, slit coating, stripe coating, and bar coating. The coating temperature is not particularly limited, and examples the range thereof include a temperature range of usually room temperature (for example, 15°C to 30°C) under non-heating.

In this case, the solid electrolyte-containing composition for a secondary battery may be dried after being applied each time or may be dried after being applied multiple times. The drying temperature is not particularly limited. The lower limit is preferably 30°C or more, more preferably 60°C or more, and still more preferably 80°C or more. The upper limit thereof is preferably 300°C or less, more preferably 250°C or less, and still more preferably 200°C or less. In a case where the solid electrolyte composition is heated in the above-described temperature range, the dispersion medium and the organic solvent can be removed to make the composition enter a solid state (coated and dried layer). This temperature range is preferable since the temperature is not excessively increased and each member of the non-aqueous secondary battery is not impaired. As a result, excellent overall performance is exhibited in the non-aqueous secondary battery, and it is possible to obtain good binding properties and good ion conductivity.

After applying the constitutional layer forming material, it is preferable to pressurize each layer or the non-aqueous secondary battery after superimposing the constitutional layers or producing the non-aqueous secondary battery. In addition, each of the layers is also preferably pressurized together in a state of being laminated. Examples of the pressurizing methods include a method using a hydraulic cylinder press machine. The pressurizing force is not particularly limited; however, it is generally preferably in a range of 5 to 1,500 MPa.

In addition, the applied constitutional layer forming material may be heated while being pressurized. The heating temperature is not particularly limited but is generally in a range of 30°C to 300°C. The press can also be applied at a temperature higher than the glass transition temperature of the inorganic solid electrolyte. It is also possible to carry out the press at a temperature higher than the glass transition temperature of the polymer contained in the polymer binder. However, in general, the temperature does not exceed the melting point of this polymer.

The pressurization may be carried out in a state where the coating solvent or dispersion medium and the organic solvent have been dried in advance or in a state where the solvent, or the dispersion medium and the organic solvent remain.

It is noted that respective compositions may be applied at the same time, and the application, the drying, and the pressing may be carried out simultaneously and/or sequentially. Each of the compositions may be applied onto each of the separate base materials and then laminated by carrying out the transfer.

The atmosphere in the film forming method (coating, drying, and pressurization (under heating) is not particularly limited and may be any atmosphere such as atmospheric air, dry air (the dew point: -20°C or less), or inert gas (for example, an argon gas, a helium gas, or a nitrogen gas).

The pressurization time may be a short time (for example, within several hours) under the application of a high pressure or a long time (one day or longer) under the application of an intermediate pressure. In case of members other than the sheet for an all-solid state secondary battery, for example, the all-solid state secondary battery, it is also possible to use a restraining tool (screw fastening pressure or the like) of the all-solid state secondary battery in order to continuously apply an intermediate pressure. The pressing pressure may be a pressure that is uniform or varies with respect to a portion under pressure such as a sheet surface. The pressing pressure may be changed according to the area or the film thickness of the portion under pressure. In addition, the pressure may also be variable stepwise for the same portion. A pressing surface may be flat or roughened.

<Initialization>

It is preferable that the non-aqueous secondary battery manufactured as described above is subjected to initialization after the manufacturing or before the use. The initialization is not particularly limited, and it is possible to initialize the non-aqueous secondary battery by, for example, carrying out initial charging and discharging in a state where the pressing pressure is increased and then releasing the pressure until it reaches a general working pressure of the non-aqueous secondary battery.

[Use application of non-aqueous secondary battery]

The non-aqueous secondary battery according to the embodiment of the present invention can be applied to a variety of usages. The application aspect thereof is not particularly limited, and in a case of being mounted in an electronic apparatus, examples thereof include a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, and a backup power supply. Additionally, examples of consumer usages include automobiles (electric vehicles and the like), electric vehicles, motors, lighting equipment, toys, game devices, road conditioners, watches, strobes, cameras, medical devices (pacemakers, hearing aids, and shoulder massage devices, and the like). Furthermore, the all-solid state secondary battery can be used for a variety of military usages and universe usages. In addition, the all-solid state secondary battery can also be combined with a solar battery.

Examples

Hereinafter, the present invention will be described in more detail based on Examples; however, the present invention is not limited thereto be interpreted. "Parts" and "%" that represent compositions in the following Examples are in terms of mass unless particularly otherwise described. In the present invention, "room temperature" means 25°C.

[Example 1]

In Example 1, various compositions and each sheet for an all-solid state secondary battery were prepared or produced, an all-solid state secondary battery was manufactured, and the battery characteristics of the all-solid state secondary battery were evaluated.

1. Synthesis of polymer and preparation of binder composition

The polymers P1 to P24, P27 to P33, and T1 to T5 shown in Tables 1-1 and 1-2 (collectively referred to as Table 1) were synthesized as follows.

[Synthesis Example P1] Synthesis of polymer P1

To a 100 mL graduated cylinder, 10 g of lauryl acrylate (manufactured by Tokyo Chemical Industry Co., Ltd.) and 1 g of a polymerization initiator V-601 (product name, manufactured by FUJIFILM Wako Pure Chemical Corporation) were added and dissolved in 10 g of butyl butyrate to prepare a monomer solution.
To a 300 mL three-neck flask, 30 g of butyl butyrate was added and stirred at 80°C, and then the above-described monomer solution was added dropwise thereto over 2 hours. After the completion of the dropwise addition, the solution was heated to 90°C and stirred for 2 hours. The obtained polymerization solution was poured into 100 g of methanol, stirred for 10 minutes, and allowed to stand for 10 minutes. The precipitate obtained after removing the supernatant was dissolved in 15 g of butyl butyrate and heated at 30 hPa and 60°C for 1 hour to distill off methanol.
In this way, a polymer P1 was synthesized, and a solution P1 (concentration of 40% by mass) of this polymer was obtained.

[Synthesis Examples P2 to P24, P28 to P32, and T1 to T5] Synthesis of polymers P2 to P24, P28 to P32, and T1 to T5

Polymers P2 to P24, P28 to P32, and T1 to T5 were synthesized in the same manner as in Synthesis Example P1, except that in Synthesis Example P1, a compound from which each constitutional component was derived was used such that the polymers P2 to P24, P28 to P32, and T1 to T5 had the composition (the type and the content of the constitutional component) shown in Table 1 below, and the amount of the polymerization initiator was appropriately adjusted such that the appropriate weight-average molecular weight shown in Table 1 was obtained, thereby solutions P2 to P24, P28 to P32, and T1 to T5 (all of which had a concentration of 40% by mass) of each polymer were obtained.
It is noted that the polymer P11 was a monomethyl ester obtained by reacting an acid anhydride group in a constitutional component derived from maleic acid with methanol to be cleaved.

[Synthesis Example P27] Synthesis of polymer P27

Into an autoclave, 500 parts of n-butyl acrylate, 200 parts of styrene, 5 parts of methacrylic acid, 10 parts of divinylbenzene, 25 parts of polyoxyethylene lauryl ether (manufactured by Kao Corporation, EMULGEN 108) as an emulsifier, 1,500 parts of ion exchange water, and 15 parts of azobisbutyronitrile as a polymerization initiator were charged and the mixture was sufficiently stirred. Next, the mixture was heated to 80°C and polymerized. Then, after the polymerization was started, the polymerization reaction was stopped by cooling, and then the solvent was replaced with butyl butyrate to synthesize a polymer P27, thereby latex P27 (concentration of 30% by mass, referred to as "Latex A" in Table 1) of this polymer particles was obtained.

In this latex P27, the content of the constitutional component MA derived from methacrylic acid was 0.7% by mass.

[Preparation Examples S-1 to S-24, S-27 to S-32, and T-1 to T-5] Preparation of binder compositions S-1 to S-24, S-27 to S-32, and T-1 to T-5

At room temperature, the metal element-containing components shown in Table 1 were added to the polymer solutions P1 to P24, P27 to P32, and T1 to T5 synthesized in the Synthesis Examples P1 to P24, P27 to P32, and T1 to T5 at the proportion of the contents $C_{MB}$ shown in Table 1, and the contents of the dispersion medium shown in Table 1 were appropriately adjusted and mixed such that the concentration of the solid content of the polymer was the content shown in the column of "Content $C_{PB}$" in the column of "Polymer binder" in Table 1, thereby preparing each of the binder compositions S-1 to S-24, S-27 to S-32, and T-1 to T-5.

The prepared binder composition T-1 does not contain a metal element-containing component having a particle diameter of 10 μm or less.

[Preparation Examples S-25, S-26, and S-33] Preparation of binder compositions S-25, S-26, and S-33

At room temperature, polyester A (polycaprolactone, manufactured by Aldrich), polycarbonate A (polypropylene carbonate, manufactured by Aldric), or a SEBS copolymer (SEPTON 8004, manufactured by Kuraray Co., Ltd., referred to as "SEBS" in Table 1) as the polymer P33, and a metal element-containing component shown in Table 1-2 were mixed using an appropriate dispersion medium shown in Table 1-2 such that the concentration of the solid content of the polymer was the content shown in the column of "Content $C_{PB}$" in the column of "Polymer binder" in Table 1-2, and the content of the metal element-containing component was the content $C_{MB}$ shown in Table 1-2, thereby each of binder compositions S-25, S-26, and S-33 were prepared.

The details of each binder composition are shown in Table 1.

The type, content, and weight-average molecular weight (measured value according to the above-described method) of the constitutional components constituting each of the synthesized polymers are shown in the column of "Polymer binder" in Table 1. In addition, the "Content $C_{PB}$" in the column of "Polymer binder" in Table 1 indicates the content (concentration of solid contents) of the polymer binder in the binder composition. The unit of "Content" in Table 1 is % by mass except for the content $C_{MB}$, but is omitted in Table 1.

In addition, "HMCTS" in the column of "Metal element-containing component" in Table 1 represents hexamethylcyclotrisiloxane. The column of "State" in the same column shows the state of the metal element-containing component in the binder composition (dissolved (referred to as "Dissolved" in Table 1) or insoluble and dispersed in a particle shape (referred to as "Particles" in Table 1)) as a result of confirming by the above-described method. In a case where the metal element-containing component was present in the form of particles, the particle diameter thereof was also described together. In the binder compositions S-1 to S-15, S-18 to S-28, S-33, T-3, and T-4, each metal element-containing component having a particle diameter of 0.1 μm was used, but the binder compositions S-14 and S-15 were not dissolved because of a large content thereof, and were present in a particle shape in which the particle diameter was maintained. In addition, in the binder compositions S-16, S-29, T-2, and T-5, alumina having a particle diameter shown in Table 1 was used (in the binder composition T-2, since the particle diameter was large, the content was small, but the alumina was present in a particle shape without being dissolved, on the other hand, in S-29 and T-5, the content was high, and thus the alumina was not dissolved and were present in a particle shape in which the particle diameter was maintained. In the binder compositions S-30 to S-32, the hexamethylcyclotrisiloxane used was dissolved in the composition.

Furthermore, the ratio [$C_{MB}/C_{PB}$] of the content $C_{MB}$ of the metal element-containing component to the content $C_{PB}$ of the polymer binder in each of the binder compositions was calculated and shown in the column of "Ratio [$C_{MB}/C_{PB}$]" in Table 1.

It is noted that all the binder compositions using the polymer solution were water-insoluble compositions, and the polymer binder was dissolved in the dispersion

[Table 1-1]

| No. | Polymer | Polymer binder | | | | | | | | | | Dispersion medium | | Metal element component | | | |
|---|---|---|---|---|---|---|---|---|---|---|---|---|---|---|---|---|---|
| | | Constitutional component A | | Constitutional component MA | | Constitutional component MC | | Weight-average molecular weight | Content $C_{PB}$ | | Content | | Content $C_{MB}$ (ppm) | Ratio $[C_{MB}/C_{PB}]$ | State |
| | | | Conten | | Content | | Content | | | | | | | | | |
| S-1 | P1 | Lauryl acrylate | 100 | - | - | - | - | $3.0 \times 10^4$ | 10 | Butyl butyrate | Remainder | Alumina | 10 | 0.00010 | Dissolved |
| S-2 | P2 | Lauryl acrylate | 99.5 | Acrylic acid | 0.5 | - | - | $3.1 \times 10^4$ | 10 | Butyl butyrate | Remainder | Alumina | 10 | 0.00010 | Dissolved |
| S-3 | P3 | Lauryl acrylate | 97 | Acrylic acid | 3 | - | - | $3.2 \times 10^4$ | 10 | Butyl butyrate | Remainder | Alumina | 10 | 0.00010 | Dissolved |
| S-4 | P4 | Lauryl acrylate | 90 | Acrylic acid | 10 | - | - | $3.3 \times 10^4$ | 10 | Butyl butyrate | Remainder | Alumina | 10 | 0.00010 | Dissolved |
| S-5 | P5 | Lauryl acrylate | 97 | Acrylic acid | 3 | - | - | $7.0 \times 10^3$ | 10 | Butyl butyrate | Remainder | Alumina | 10 | 0.00010 | Dissolved |
| S-6 | P6 | Lauryl acrylate | 97 | Acrylic acid | 3 | - | - | $1.0 \times 10^5$ | 10 | Butyl butyrate | Remainder | Alumina | 10 | 0.00010 | Dissolved |
| S-7 | P7 | Lauryl acrylate | 97 | Acrylic acid | 3 | | - | $1.1 \times 10^6$ | 10 | Butyl butyrate | Remainder | Alumina | 10 | 0.00010 | Dissolved |
| S-8 | P8 | Lauryl acrylate | 97 | - | - | Glycidyl methacrylate | 3 | $2.9 \times 10^4$ | 10 | Butyl butyrate | Remainder | Alumina | 10 | 0.00010 | Dissolved |
| S-9 | P9 | Lauryl acrylate | 97 | - | - | Hydroxyethyl acrylate | 3 | $3.1 \times 10^4$ | 10 | Butyl butyrate | Remainder | Alumina | 10 | 0.00010 | Dissolved |
| S-10 | P10 | Lauryl acrylate | 97 | - | - | Methoxyethyl acrylate | 3 | $3.2 \times 10^4$ | 10 | Butyl butyrate | Remainder | Alumina | 10 | 0.00010 | Dissolved |
| S-11 | P11 | Lauryl acrylate | 97 | - | - | Maleic acid anhydride | 3 | $2.9 \times 10^4$ | 10 | Butyl butyrate | Remainder | AAlumina | 10 | 0.00010 | Dissolved |
| S-12 | P12. | Lauryl acrylate | 97 | | - | Phosmer M | 3 | $3.1 \times 10^4$ | 10 | Butyl butyrate | Remainder | Alumina | 10 | 0.00010 | Dissolved |
| S-28 | P28 | Lauryl acrylate | 97 | Acrylic acid | 3 | - | - | $3.2 \times 10^4$ | 10 | Butyl butyrate | Remainder | Alumina | $1.0 \times 10^{-2}$ | 0.00000010 | Dissolved |
| S-13 | P13 | Lauryl acrylate | 97 | Acrylic acid | 3 | - | - | $3.2. \times 10^4$ | 10 | Butyl butyrate | Remainder | Alumina | 1.0 | 0.000010 | Dissolved |

| No. | Polymer | Polymer binder | | | | | | | | Dispersion medium | | Metal element component | | | |
|---|---|---|---|---|---|---|---|---|---|---|---|---|---|---|---|
| | | Constitutional component A | | Constitutional component MA | | Constitutional component MC | | Weight-average molecular weight | Content $C_{PB}$ | | Content | | Content $C_{MB}$ (ppm) | Ratio $[C_{MB}/C_{PB}]$ | State |
| | | | Conten | | Content | | Content | | | | | | | | |
| S-14 | P14 | Lauryl acrylate | 97 | Acrylic acid | 3 | - | - | $3.2 \times 10^4$ | 10 | Butyl butyrate | Remainder | Alumina | $1.0 \times 10^2$ | 0.0010 | Particle (0.1 um) |
| S-15 | P15 | Lauryl acrylate | 97 | Acrylic acid | 3 | - | - | $3.2 \times 10^4$ | 10 | Butyl butyrate | Remainder | Alumina | $1.0 \times 10^3$ | 0.010 | Particle (0.1 um) |
| S-16 | P16 | Lauryl acrylate | 97 | Acrylic acid | 3 | | - | $3.2 \times 10^4$ | 10 | Butyl butyrate | Remainder | Alumina | $1.0 \times 10^2$ | 0.0010 | Particle (10 um) |
| S-29 | P29 | Lauryl acrylate | 97 | Acrylic acid | 3 | - | - | $3.2 \times 10^4$ | 10 | Butyl butyrate | Remainder | Alumina | $1.0 \times 10^4$ | 0.10 | Particle (10 um) |

[Table 1-2]

| No. | Polymer | Polymer binder Constitutional component A | | Constitutional component MA | | Constitutional component MC | | Weight-average molecular weight | Content $C_{PB}$ | Dispersion medium | Content | Metal element-containing component | Content $C_{MB}$ (ppm) | Ratio [$C_{MB}/C_{PB}$] | State |
|---|---|---|---|---|---|---|---|---|---|---|---|---|---|---|---|
| | | | Content | | Content | | Content | | | | | | | | |
| S-17 | P17 | Lauryl acrylate | 97 | Acrylic acid | 3 | | - | $3.2 \times 10^4$ | 10 | Butyl butyrate | Remainder | Triethyl borate | 10 | 0.00010 | Dissolved |
| S-18 | P18 | Lauryl acrylate | 97 | Acrylic acid | 3 | | - | $3.2 \times 10^4$ | 10 | Butyl butyrate | Remainder | Gallium oxide | 10 | 0.00010 | Dissolved |
| S-19 | P19 | Lauryl acrylate | 97 | Acrylic acid | 3 | | - | $3.2 \times 10^4$ | 10 | Butyl butyrate | Remainder | Indium oxide | 10 | 0.00010 | Dissolved |
| S-20 | P20 | Lauryl acrylate | 97 | Acrylic acid | 3 | | - | $3.2 \times 10^4$ | 10 | Butyl butyrate | Remainder | Silica | 10 | 0.00010 | Dissolved |
| S-30 | P30 | Lauryl acrylate | 97 | Acrylic acid | 3 | | - | $3.2 \times 10^4$ | 10 | Butyl butyrate | Remainder | HMCTS | 10 | 0.00010 | Dissolved |
| S-31 1 | P31 | Lauryl acrylate | 97 | Acrylic acid | 3 | | - | $3.2. \times 10^4$ | 10 | Butyl butyrate | Remainder | HMCTS | 0.10 | 0.0000010 | Dissolved |
| 5-32 | P32 | Lauryl acrylate | 97 | Acrylic acid | 3 | | - | $3.2 \times 10^4$ | 10 | Butyl butyrate | Remainder | HMCTS | $1.0 \times 10^2$ | 0.0010 | Dissolved |
| S-21 | P21 | Lauryl acrylate | 97 | Acrylic acid | 3 | | - | $3.2 \times 10^4$ | 10 | Butyl butyrate | Remainder | Germanium oxide | 10 | 0.00010 | Dissolved |
| S-22 | P22 | Lauryl acrylate | 97 | Acrylic acid | 3 | | - | $3.2 \times 10^4$ | 10 | Toluene | Remainder | Alumina | 10 | 0.00010 | Dissolved |
| S-23 | P23 | Lauryl acrylate | 97 | Acrylic acid | 3 | | - | $3.2 \times 10^4$ | 10 | Xylene | Remainder | Alumina | 10 | 0.00010 | Dissolved |
| S-24 | P24 | Lauryl acrylate | 97 | Acrylic acid | 3 | | - | $3.2 \times 10^4$ | 10 | Ethyl butyrate | Remainder | Alumina | 10 | 0.00010 | Dissolved |
| S-25 | - | Polyester A | 100 | - | - | | - | $3.2 \times 10^4$ | 10 | Ethyl butyrate | Remainder | Alumina | 10 | 0.00010 | Dissolved |
| S-26 | - | Polycarbonate A | 100 | - | - | | - | $3.2 \times 10^4$ | 10 | Ethyl butyrate | Remainder | Alumina | 10 | 0.00010 | Dissolved |
| S-27 | P27 | Latex A | 100 | - | - | | - | $3.2 \times 10^4$ | 10 | Ethyl butyrate | Remainder | Alumina | 10 | 0.00010 | Dissolved |

(continued)

| No. | Polymer | Polymer binder | | | | | | | | | Dispersion medium | | Metal element-containing component | | | |
| | | Constitutional component A | | Constitutional component MA | | Constitutional component MC | | Weight-average molecular weight | Content $C_{PB}$ | | Content | | Content $C_{MB}$ (ppm) | Ratio $[(C_{MB}/C_{PB}]$ | State |
| | | | Content | | Content | | Content | | | | | | | | |
| S-33 | P33 | SEBS | 100 | - | - | | - | $3.2 \times 10^4$ | 10 | Ethyl butyrate | Remainder | Alumina | 10 | 0.00010 | Dissolved |
| T-1 | T1 | Lauryl acrylate | 100 | - | - | - | - | $3.0 \times 10^4$ | 10 | Butyl butyrate | Remainder | - | - | - | - |
| T-2 | T2 | Lauryl acrylate | 100 | - | - | - | - | $3.0 \times 10^4$ | 10 | Butyl butyrate | Remainder | Alumina | 10 | 0.00010 | Particle (45 um) |
| T-3 | T3 | Lauryl acrylate | 65 | Acrylic acid | 35 | - | - | $3.4 \times 10^4$ | 10 | Butyl butyrate | Remainder | Alumina | 10 | 0.00010 | Dissolved |
| T-4 | T4 | Lauryl acrylate | 97 | Acrylic acid | 3 | - | - | $3.2 \times 10^4$ | 10 | Butyl butyrate | Remainder | Alumina | $1.0 \times 10^{-4}$ | 0.0000000010 | Dissolved |
| T-5 | T5 | Lauryl acrylate | 97 | Acrylic acid | 3 | - | - | $3.2 \times 10^4$ | 10 | Butyl butyrate | Remainder | Alumina | $1.0 \times 10^5$ | 1.0 | Particle (10 um) |

<Abbreviations in table>

In the table, "-" in the column of the constitutional component indicates that the constitutional component does not have a corresponding constitutional component.

The constitutional component A, MA, and MC respectively indicate the other constitutional components, the constitutional component MA, and the polar functional group-containing constitutional component MC, which are described above. However, in the binder compositions S-25 to S-27 and S-33, each polymer is shown in the column of the constitutional component A for convenience.

Phosmer M is 2-(methacryloyloxy)ethyl phosphate (manufactured by Uni-chemical Co., Ltd.).

2. Synthesis of sulfide-based inorganic solid electrolyte

[Synthesis Example A]

A sulfide-based inorganic solid electrolyte was synthesized with reference to a non-patent document of T. Ohtomo, A. Hayashi, M. Tatsumisago, Y. Tsuchida, S. Hama, K. Kawamoto, Journal of Power Sources, 233, (2013), pp. 231 to 235 and A. Hayashi, S. Hama, H. Morimoto, M. Tatsumisago, T. Minami, Chem. Lett., (2001), pp. 872 and 873.

Specifically, in a globe box in an argon atmosphere (dew point: -70°C), lithium sulfide ($Li_2S$, manufactured by Sigma-Aldrich Co., LLC Co., LLC Co., LLC, purity: > 99.98%) (2.42 g) and diphosphorus pentasulfide ($P_2S_5$, manufactured by Sigma-Aldrich Co., LLC Co., LLC Co., LLC, purity: > 99%) (3.90 g) each were weighed, put into an agate mortar, and mixed using an agate pestle for five minutes. The mixing ratio between $Li_2S$ and $P_2S_5$ ($Li_2S:P_2S_5$) was set to 75:25 in terms of molar ratio.

Next, 66 g of zirconia beads having a diameter of 5 mm were put into a 45 mL container made of zirconia (manufactured by Fritsch Japan Co., Ltd.), the entire amount of the mixture of the above lithium sulfide and the diphosphorus pentasulfide was put thereinto, and the container was completely sealed in an argon atmosphere. The container was set in a planetary ball mill P-7 (product name, manufactured by FRITSCH), mechanical milling was carried out at a temperature of 25°C and a rotation speed of 510 rpm for 20 hours, thereby obtaining a yellow powder (6.20 g) of a sulfide-based inorganic solid electrolyte (Li-P-S-based glass, hereinafter, may be denoted as LPS). The particle diameter of the Li-P-S-based glass was 15 $\mu$m.

3. Preparation of solid electrolyte-containing composition for secondary battery

Each of the solid electrolyte-containing compositions for a secondary battery shown in Tables 2-1 to 2-4 (collectively referred to as Table 2) was prepared as follows using the binder composition prepared above.

<Preparation of inorganic solid electrolyte-containing composition>

60 g of zirconia beads having a diameter of 5 mm was put Into a 45 mL zirconia container (manufactured by Fritsch Japan Co., Ltd.), and 7.88 g of the LPS synthesized in Synthesis Example A, 0.12 g (solid content mass) of the binder composition shown in Table 2-1 or Table 2-4, and 12 g (total amount) of the dispersion medium (including the dispersion medium derived from the binder composition) shown in Table 2-1 or Table 2-4 were put thereinto. Then, this container was set in a planetary ball mill P-7 (product name). Mixing was carried out at a temperature of 25°C and a rotation speed of 150 rpm for 10 minutes to prepare each of inorganic solid electrolyte-containing compositions (slurries) K-1 to K-33 and Kc11 to Kc15.

<Preparation of positive electrode composition>

60 g of zirconia beads having a diameter of 5 mm was put into a 45 mL zirconia container (manufactured by Fritsch Japan Co., Ltd.), and 4.58 g of LPS synthesized in Synthesis Example A and 12.00 g (total amount) of a dispersion medium (including an organic solvent derived from the binder composition) shown in Table 2-2 or Table 2-4 were put thereinto. Then, the container was set in a planetary ball mill P-7 (product name), and stirring was carried out at 25°C and a rotation speed of 200 rpm for 30 minutes. Next, into this container, 3.2 g of NMC (manufactured by Sigma-Aldrich Co., LLC) as the positive electrode active material, 0.14 g of acetylene black (AB) as the conductive auxiliary agent, and 0.08 g (in terms of solid content mass) of the binder composition shown in Table 2-2 or Table 2-4 were put. The container was set in a planetary ball mill P-7 (product name), and mixing was continued for 30 minutes at a temperature of 25°C and a rotation speed of 200 rpm to prepare each of positive electrode compositions (slurries) PK-1 to PK-33 and PKc21 to PKc25.

<Preparation of negative electrode composition>

60 g of zirconia beads having a diameter of 5 mm was put Into a 45 mL zirconia container (manufactured by Fritsch Japan Co., Ltd.), and 3.6 g of the LPS synthesized in Synthesis Example A, 0.08 g (solid content mass) of the binder composition shown in Table 2-3 or Table 2-4, and 12 g (total amount) of the dispersion medium (including the organic solvent derived from the binder composition) shown in Table 2-3 or Table 2-4 were put thereinto. Then, the container was set in a planetary ball mill P-7 (product name) and the components were mixed for 60 minutes at a temperature of 25°C and a rotation speed of 300 rpm. Next, 4.0 g of silicon (Si) as the negative electrode active material and 0.32 g of VGCF (manufactured by Showa Denko K.K.) as the conductive auxiliary agent were put into the container. Similarly, the container was subsequently set in a planetary ball mill P-7 (product name), and mixing was carried out at 25°C for 10 minutes at a rotation speed of 100 rpm to prepare each of negative electrode compositions (slurries) NK-1 to NK-33 and NKc21 to NKc25.

In Table 2, the composition content is the content (% by mass) with respect to the total mass of each of the compositions, and the solid content is the content (% by mass) with respect to 100% by mass of the solid content of each of the compositions. The unit is omitted in the table. It is noted that "Composition content" of the dispersion medium in Table 2 indicates the total amount of the content of the dispersion medium and the content of the organic solvent derived from the binder composition. In addition, the content $C_{MS}$ of the metal element-containing component in each of the prepared compositions was calculated and shown in the column of "Content $C_{MS}$" in Table 2.

Each of the prepared compositions was a non-aqueous composition, and the polymer binder dissolved in the binder composition was also dissolved in the dispersion medium in each of the prepared compositions. In addition, the metal element-containing component was dissolved in each of the compositions using the binder compositions S-1 to S-33 and T-3 to T-5, but the metal element-containing component was present as particles having a particle diameter maintained in each of the compositions using the binder composition T-2.

[Table 2-1]

Inorganic solid electrolyte-containing composition

| No. | \multicolumn{3}{Inorganic solid electrolyte} | | | \multicolumn{4}{Binder composition} | | | | Dispersion medium | | Active material | | Conductive auxiliary agent | | Note |
|---|---|---|---|---|---|---|---|---|---|---|---|---|---|---|---|
| | | Composition content | Solid content | | Composition content | Solid content | Content $C_{MS}$ | Composition | content | Composition content | Solid content | Composition content | Solid content | |
| K-1 | LPS | 39.4 | 98.5 | S-1 | 0.6 | 1.5 | 0.060 | Butyl butyrate | 60.0 | - | - | - | - | Present invention |
| K-2 | LPS | 39.4 | 98.5 | S-2 | 0.6 | 1.5 | 0.060 | Butyl butyrate | 60.0 | - | - | - | - | Present invention |
| K-3 | LPS | 39.4 | 98.5 | S-3 | 0.6 | 1.5 | 0.060 | Butyl butyrate | 60.0 | - | - | - | - | Present invention |
| K-4 | LPS | 39.4 | 98.5 | S-4 | 0.6 | 1.5 | 0.060 | Butyl butyrate | 60.0 | - | - | - | - | Present invention |
| K-5 | LPS | 39.4 | 98.5 | S-5 | 0.6 | 1.5 | 0.060 | Butyl butyrate | 60.0 | - | - | - | - | Present invention |
| K-6 | LPS | 39.4 | 98.5 | S-6 | 0.6 | 1.5 | 0.060 | Butyl butyrate | 60.0 | - | - | - | - | Present invention |
| K-7 | LPS | 39.4 | 98.5 | S-7 | 0.6 | 1.5 | 0.060 | Butyl butyrate | 60.0 | - | - | - | - | Present invention |
| K-8 | LPS | 39.4 | 98.5 | S-8 | 0.6 | 1.5 | 0.060 | Butyl butyrate | 60.0 | - | - | - | - | Present invention |
| K-9 | LPS | 39.4 | 98.5 | S-9 | 0.6 | 1.5 | 0.060 | Butyl butyrate | 60.0 | - | - | - | - | Present invention |
| K-10 | LPS | 39.4 | 98.5 | S-10 | 0.6 | 1.5 | 0.060 | Butyl butyrate | 60.0 | - | - | - | - | Present invention |
| K-11 | LPS | 39.4 | 98.5 | S-11 | 0.6 | 1.5 | 0.060 | Butyl butyrate | 60.0 | - | - | - | - | Present invention |
| K-12 | LPS | 39.4 | 98.5 | S-12 | 0.6 | 1.5 | 0.060 | Butyl butyrate | 60.0 | - | - | - | - | Present invention |
| K-28 | LPS | 39.4 | 98.5 | S-28 | 0.6 | 1.5 | 0.000060 | Butyl butyrate | 60.0 | | | | | Present invention |
| K-13 | LPS | 39.4 | 98.5 | S-13 | 0.6 | 1.5 | 0.0060 | Butyl butyrate | 60.0 | - | - | - | - | Present invention |
| K-14 | LPS | 39.4 | 98.5 | S-14 | 0.6 | 1.5 | 0.60 | Butyl butyrate | 60.0 | - | - | - | - | Present invention |
| K-15 | LPS | 39.4 | 98.5 | S-15 | 0.6 | 1.5 | 6.0 | Butyl butyrate | 60.0 | - | - | - | - | Present invention |
| K-16 | LPS | 39.4 | 98.5 | S-16 | 0.6 | 1.5 | 0.60 | Butyl butyrate | 60.0 | - | - | - | - | Present invention |
| K-29 | LPS | 39.4 | 98.5 | S-29 | 0.6 | 1.5 | 60 | Butyl butyrate | 60.0 | | | | | Present invention |
| K-17 | LPS | 39.4 | 98.5 | S-17 | 0.6 | 1.5 | 0.060 | Butyl butyrate | 60.0 | - | - | - | - | Present invention |
| K-18 | LPS | 39.4 | 98.5 | S-18 | 0.6 | 1.5 | 0.060 | Butyl butyrate | 60.0 | - | - | - | - | Present invention |
| K-19 | LPS | 39.4 | 98.5 | S-19 | 0.6 | 1.5 | 0.060 | Butyl butyrate | 60.0 | - | - | - | - | Present invention |
| K-20 | LPS | 39.4 | 98.5 | S-20 | 0.6 | 1.5 | 0.060 | Butyl butyrate | 60.0 | - | - | - | - | Present invention |
| K-30 | LPS | 39.4 | 98.5 | S-30 | 0.6 | 1.5 | 0.060 | Butyl butyrate | 60.0 | - | - | - | - | Present invention |
| K-31 | LPS | 39.4 | 98.5 | S-31 | 0.6 | 1.5 | 0.00060 | Butyl butyrate | 60.0 | | | | | Present invention |
| K-32 | LPS | 39.4 | 98.5 | S-32 | 0.6 | 1.5 | 0.600 | Butyl butyrate | 60.0 | | | | | Present invention |
| K-21 | LPS | 39.4 | 98.5 | S-21 | 0.6 | 1.5 | 0.060 | Butyl butyrate | 60.0 | - | - | - | - | Present invention |
| K-22 | LPS | 39.4 | 98.5 | S-22 | 0.6 | 1.5 | 0.060 | Toluene | 60.0 | - | - | - | - | Present invention |
| K-23 | LPS | 39.4 | 98.5 | S-23 | 0.6 | 1.5 | 0.060 | Xylene | 60.0 | - | - | - | - | Present invention |
| K-24 | LPS | 39.4 | 98.5 | S-24 | 0.6 | 1.5 | 0.060 | Butyl butyrate | 60.0 | - | - | - | - | Present invention |
| K-25 | LPS | 39.4 | 98.5 | S-25 | 0.6 | 1.5 | 0.060 | Butyl butyrate | 60.0 | - | - | - | - | Present invention |
| K-26 | LPS | 39.4 | 98.5 | S-26 | 0.6 | 1.5 | 0.060 | Butyl butyrate | 60.0 | - | - | - | - | Present invention |
| K-27 | LPS | 39.4 | 98.5 | S-27 | 0.6 | 1.5 | 0.060 | Butyl butyrate | 60.0 | - | - | - | - | Present invention |
| K-33 | LPS | 39.4 | 98.5 | S-33 | 0.6 | 1.5 | 0.060 | Butyl butyrate | 60.0 | - | - | - | - | Present invention |

41

[Table 2-2]

EP 4 546 467 A1

42

Positive electrode composition

| No. | Inorganic solid electrolyte | | | Binder composition | | | | Dispersion medium | | Active material | | | Conductive auxiliary agent | | | Note |
|---|---|---|---|---|---|---|---|---|---|---|---|---|---|---|---|---|
| | | Composition content | Solid content | | Composition content | Solid content | Content $C_{MS}$ | | Composition content | | Composition content | Solid content | | Composition content | Solid content | |
| PK-1 | LPS | 22.9 | 57.2 | S-1 | 0.4 | 1.0 | 0.040 | Butyl butyrate | 60.0 | NMC | 16.0 | 40.0 | AB | 0.7 | 1.8 | Present invention |
| PK-2 | LPS | 22.9 | 57.2 | S-2 | 0.4 | 1.0 | 0.040 | Butyl butyrate | 60.0 | NMC | 16.0 | 40.0 | AB | 0.7 | 1.8 | Present invention |
| PK-3 | LPS | 22.9 | 57.2 | S-3 | 0.4 | 1.0 | 0.040 | Butyl butyrate | 60.0 | NMC | 16.0 | 40.0 | AB | 0.7 | 1.8 | Present invention |
| PK-4 | LPS | 22.9 | 57.2 | S-4 | 0.4 | 1.0 | 0.040 | Butyl butyrate | 60.0 | NMC | 16.0 | 40.0 | AB | 0.7 | 1.8 | Present invention |
| PK-5 | LPS | 22.9 | 57.2 | S-5 | 0.4 | 1.0 | 0.040 | Butyl butyrate | 60.0 | NMC | 16.0 | 40.0 | AB | 0.7 | 1.8 | Present invention |
| PK-6 | LPS | 22.9 | 57.2 | S-6 | 0.4 | 1.0 | 0.040 | Butyl butyrate | 60.0 | NMC | 16.0 | 40.0 | AB | 0.7 | 1.8 | Present invention |
| PK-7 | LPS | 22.9 | 57.2 | S-7 | 0.4 | 1.0 | 0.040 | Butyl butyrate | 60.0 | NMC | 16.0 | 40.0 | AB | 0.7 | 1.8 | Present invention |
| PK-8 | LPS | 22.9 | 57.2 | S-8 | 0.4 | 1.0 | 0.040 | Butyl butyrate | 60.0 | NMC | 16.0 | 40.0 | AB | 0.7 | 1.8 | Present invention |
| PK-9 | LPS | 22.9 | 57.2 | S-9 | 0.4 | 1.0 | 0.040 | Butyl butyrate | 60.0 | NMC | 16.0 | 40.0 | AB | 0.7 | 1.8 | Present invention |
| PK-10 | LPS | 22.9 | 57.2 | S-10 | 0.4 | 1.0 | 0.040 | Butyl butyrate | 60.0 | NMC | 16.0 | 40.0 | AB | 0.7 | 1.8 | Present invention |
| PK-11 | LPS | 22.9 | 57.2 | S-11 | 0.4 | 1.0 | 0.040 | Butyl butyrate | 60.0 | NMC | 16.0 | 40.0 | AB | 0.7 | 1.8 | Present invention |
| PK-12 | LPS | 22.9 | 57.2 | S-12 | 0.4 | 1.0 | 0.040 | Butyl butyrate | 60.0 | NMC | 16.0 | 40.0 | AB | 0.7 | 1.8 | Present invention |
| PK-28 | LPS | 22.9 | 57.2 | S-28 | 0.4 | 1.0 | 0.000040 | Butyl butyrate | 60.0 | NMC | 16.0 | 40.0 | AB | 0.7 | 1.8 | Present invention |
| PK-13 | LPS | 22.9 | 57.2 | S-13 | 0.4 | 1.0 | 0.0040 | Butyl butyrate | 60.0 | NMC | 16.0 | 40.0 | AB | 0.7 | 1.8 | Present invention |
| PK-14 | LPS | 22.9 | 57.2 | S-14 | 0.4 | 1.0 | 0.40 | Butyl butyrate | 60.0 | NMC | 16.0 | 40.0 | AB | 0.7 | 1.8 | Present invention |
| PK-15 | LPS | 22.9 | 57.2 | S-15 | 0.4 | 1.0 | 4.0 | Butyl butyrate | 60.0 | NMC | 16.0 | 40.0 | AB | 0.7 | 1.8 | Present invention |
| PK-16 | LPS | 22.9 | 57.2 | S-16 | 0.4 | 1.0 | 0.40 | Butyl butyrate | 60.0 | NMC | 16.0 | 40.0 | AB | 0.7 | 1.8 | Present invention |
| PK-29 | LPS | 22.9 | 57.2 | S-29 | 0.4 | 1.0 | 40 | Butyl butyrate | 60.0 | NMC | 16.0 | 40.0 | AB | 0.7 | 1.8 | Present invention |
| PK-17 | LPS | 22.9 | 57.2 | S-17 | 0.4 | 1.0 | 0.040 | Butyl butyrate | 60.0 | NMC | 16.0 | 40.0 | AB | 0.7 | 1.8 | Present invention |
| PK-18 | LPS | 22.9 | 57.2 | S-18 | 0.4 | 1.0 | 0.040 | Butyl butyrate | 60.0 | NMC | 16.0 | 40.0 | AB | 0.7 | 1.8 | Present invention |
| PK-19 | LPS | 22.9 | 57.2 | S-19 | 0.4 | 1.0 | 0.040 | Butyl butyrate | 60.0 | NMC | 16.0 | 40.0 | AB | 0.7 | 1.8 | Present invention |
| PK-20 | LPS | 22.9 | 57.2 | S-20 | 0.4 | 1.0 | 0.040 | Butyl butyrate | 60.0 | NMC | 16.0 | 40.0 | AB | 0.7 | 1.8 | Present invention |
| PK-30 | LPS | 22.9 | 57.2 | S-30 | 0.4 | 1.0 | 0.040 | Butyl butyrate | 60.0 | NMC | 16.0 | 40.0 | AB | 0.7 | 1.8 | Present invention |
| PK-31 | LPS | 22.9 | 57.2 | S-31 | 0.4 | 1.0 | 0.00040 | Butyl butyrate | 60.0 | NMC | 16.0 | 40.0 | AB | 0.7 | 1.8 | Present invention |
| PK-32 | LPS | 22.9 | 57.2 | S-32 | 0.4 | 1.0 | 0.40 | Butyl butyrate | 60.0 | NMC | 16.0 | 40.0 | AB | 0.7 | 1.8 | Present invention |
| PK-21 | LPS | 22.9 | 57.2 | S-21 | 0.4 | 1.0 | 0.040 | Butyl butyrate | 60.0 | NMC | 16.0 | 40.0 | AB | 0.7 | 1.8 | Present invention |
| PK-22 | LPS | 22.9 | 57.2 | S-22 | 0.4 | 1.0 | 0.040 | Toluene | 60.0 | NMC | 16.0 | 40.0 | AB | 0.7 | 1.8 | Present invention |
| PK-23 | LPS | 22.9 | 57.2 | S-23 | 0.4 | 1.0 | 0.040 | Xylene | 60.0 | NMC | 16.0 | 40.0 | AB | 0.7 | 1.8 | Present invention |
| PK-24 | LPS | 22.9 | 57.2 | S-24 | 0.4 | 1.0 | 0.040 | Butyl butyrate | 60.0 | NMC | 16.0 | 40.0 | AB | 0.7 | 1.8 | Present invention |
| PK-25 | LPS | 22.9 | 57.2 | S-25 | 0.4 | 1.0 | 0.040 | Butyl butyrate | 60.0 | NMC | 16.0 | 40.0 | AB | 0.7 | 1.8 | Present invention |
| PK-26 | LPS | 22.9 | 57.2 | S-26 | 0.4 | 1.0 | 0.040 | Butyl butyrate | 60.0 | NMC | 16.0 | 40.0 | AB | 0.7 | 1.8 | Present invention |
| PK-27 | LPS | 22.9 | 57.2 | S-27 | 0.4 | 1.0 | 0.040 | Butyl butyrate | 60.0 | NMC | 16.0 | 40.0 | AB | 0.7 | 1.8 | Present invention |
| PK-33 | LPS | 22.9 | 57.2 | S-33 | 0.4 | 1.0 | 0.040 | Butyl butyrate | 60.0 | NMC | 16.0 | 40.0 | AB | 0.7 | 1.8 | Present invention |

[Table 2-3]

| No. | Inorganic solid electrolyte | | | Binder composition | | | | Dispersion medium | | Active material | | | Conductive auxiliary agent | | | Note |
|---|---|---|---|---|---|---|---|---|---|---|---|---|---|---|---|---|
| | | Composition content | Solid content | | Composition content | Solid content | Content $C_{MS}$ | | Composition content | | Composition content | Solid content | | Composition content | Solid content | |
| NK-1 | LPS | 18.0 | 45.0 | S-1 | 0.4 | 1.0 | 0.040 | Butyl butyrate | 60.0 | Si | 20.0 | 50.0 | VGCF | 1.6 | 4.0 | Present invention |
| NK-2 | LPS | 18.0 | 45.0 | S-2 | 0.4 | 1.0 | 0.040 | Butyl butyrate | 60.0 | Si | 20.0 | 50.0 | VGCF | 1.6 | 4.0 | Present invention |
| NK-3 | LPS | 18.0 | 45.0 | S-3 | 0.4 | 1.0 | 0.040 | Butyl butyrate | 60.0 | Si | 20.0 | 50.0 | VGCF | 1.6 | 4.0 | Present invention |
| NK-4 | LPS | 18.0 | 45.0 | S-4 | 0.4 | 1.0 | 0.040 | Butyl butyrate | 60.0 | Si | 20.0 | 50.0 | VGCF | 1.6 | 4.0 | Present invention |
| NK-5 | LPS | 18.0 | 45.0 | S-5 | 0.4 | 1.0 | 0.040 | Butyl butyrate | 60.0 | Si | 20.0 | 50.0 | VGCF | 1.6 | 4.0 | Present invention |
| NK-6 | LPS | 18.0 | 45.0 | S-6 | 0.4 | 1.0 | 0.040 | Butyl butyrate | 60.0 | Si | 20.0 | 50.0 | VGCF | 1.6 | 4.0 | Present invention |
| NK-7 | LPS | 18.0 | 45.0 | S-7 | 0.4 | 1.0 | 0.040 | Butyl butyrate | 60.0 | Si | 20.0 | 50.0 | VGCF | 1.6 | 4.0 | Present invention |
| NK-8 | LPS | 18.0 | 45.0 | S-8 | 0.4 | 1.0 | 0.040 | Butyl butyrate | 60.0 | Si | 20.0 | 50.0 | VGCF | 1.6 | 4.0 | Present invention |
| NK-9 | LPS | 18.0 | 45.0 | S-9 | 0.4 | 1.0 | 0.040 | Butyl butyrate | 60.0 | Si | 20.0 | 50.0 | VGCF | 1.6 | 4.0 | Present invention |
| NK-10 | LPS | 18.0 | 45.0 | S-10 | 0.4 | 1.0 | 0.040 | Butyl butyrate | 60.0 | Si | 20.0 | 50.0 | VGCF | 1.6 | 4.0 | Present invention |
| NK-11 | LPS | 18.0 | 45.0 | S-11 | 0.4 | 1.0 | 0.040 | Butyl butyrate | 60.0 | Si | 20.0 | 50.0 | VGCF | 1.6 | 4.0 | Present invention |
| NK-12 | LPS | 18.0 | 45.0 | S-12 | 0.4 | 1.0 | 0.040 | Butyl butyrate | 60.0 | Si | 20.0 | 50.0 | VGCF | 1.6 | 4.0 | Present invention |
| NK-28 | LPS | 18.0 | 45.0 | S-28 | 0.4 | 1.0 | 0.000040 | Butyl butyrate | 60.0 | Si | 20.0 | 50.0 | VGCF | 1.6 | 4.0 | Present invention |
| NK-13 | LPS | 18.0 | 45.0 | S-13 | 0.4 | 1.0 | 0.0040 | Butyl butyrate | 60.0 | Si | 20.0 | 50.0 | VGCF | 1.6 | 4.0 | Present invention |
| NK-14 | LPS | 18.0 | 45.0 | S-14 | 0.4 | 1.0 | 0.40 | Butyl butyrate | 60.0 | Si | 20.0 | 50.0 | VGCF | 1.6 | 4.0 | Present invention |
| NK-15 | LPS | 18.0 | 45.0 | S-15 | 0.4 | 1.0 | 4.0 | Butyl butyrate | 60.0 | Si | 20.0 | 50.0 | VGCF | 1.6 | 4.0 | Present invention |
| NK-16 | LPS | 18.0 | 45.0 | S-16 | 0.4 | 1.0 | 0.40 | Butyl butyrate | 60.0 | Si | 20.0 | 50.0 | VGCF | 1.6 | 4.0 | Present invention |
| NK-29 | LPS | 18.0 | 45.0 | S-29 | 0.4 | 1.0 | 40 | Butyl butyrate | 60.0 | Si | 20.0 | 50.0 | VGCF | 1.6 | 4.0 | Present invention |
| NK-17 | LPS | 18.0 | 45.0 | S-17 | 0.4 | 1.0 | 0.040 | Butyl butyrate | 60.0 | Si | 20.0 | 50.0 | VGCF | 1.6 | 4.0 | Present invention |
| NK-18 | LPS | 18.0 | 45.0 | S-18 | 0.4 | 1.0 | 0.040 | Butyl butyrate | 60.0 | Si | 20.0 | 50.0 | VGCF | 1.6 | 4.0 | Present invention |
| NK-19 | LPS | 18.0 | 45.0 | S-19 | 0.4 | 1.0 | 0.040 | Butyl butyrate | 60.0 | Si | 20.0 | 50.0 | VGCF | 1.6 | 4.0 | Present invention |
| NK-20 | LPS | 18.0 | 45.0 | S-20 | 0.4 | 1.0 | 0.040 | Butyl butyrate | 60.0 | Si | 20.0 | 50.0 | VGCF | 1.6 | 4.0 | Present invention |
| NK-30 | LPS | 18.0 | 45.0 | S-30 | 0.4 | 1.0 | 0.040 | Butyl butyrate | 60.0 | Si | 20.0 | 50.0 | VGCF | 1.6 | 4.0 | Present invention |
| NK-31 | LPS | 18.0 | 45.0 | S-31 | 0.4 | 1.0 | 0.00040 | Butyl butyrate | 60.0 | Si | 20.0 | 50.0 | VGCF | 1.6 | 4.0 | Present invention |
| NK-32 | LPS | 18.0 | 45.0 | S-32 | 0.4 | 1.0 | 0.40 | Butyl butyrate | 60.0 | Si | 20.0 | 50.0 | VGCF | 1.6 | 4.0 | Present invention |
| NK-21 | LPS | 18.0 | 45.0 | S-21 | 0.4 | 1.0 | 0.040 | Butyl butyrate | 60.0 | Si | 20.0 | 50.0 | VGCF | 1.6 | 4.0 | Present invention |
| NK-22 | LPS | 18.0 | 45.0 | S-22 | 0.4 | 1.0 | 0.040 | Toluene | 60.0 | Si | 20.0 | 50.0 | VGCF | 1.6 | 4.0 | Present invention |
| NK-23 | LPS | 18.0 | 45.0 | S-23 | 0.4 | 1.0 | 0.040 | Xylene | 60.0 | Si | 20.0 | 50.0 | VGCF | 1.6 | 4.0 | Present invention |
| NK-24 | LPS | 18.0 | 45.0 | S-24 | 0.4 | 1.0 | 0.040 | Butyl butyrate | 60.0 | Si | 20.0 | 50.0 | VGCF | 1.6 | 4.0 | Present invention |
| NK-25 | LPS | 18.0 | 45.0 | S-25 | 0.4 | 1.0 | 0.040 | Butyl butyrate | 60.0 | Si | 20.0 | 50.0 | VGCF | 1.6 | 4.0 | Present invention |
| NK-26 | LPS | 18.0 | 45.0 | S-26 | 0.4 | 1.0 | 0.040 | Butyl butyrate | 60.0 | Si | 20.0 | 50.0 | VGCF | 1.6 | 4.0 | Present invention |
| NK-27 | LPS | 18.0 | 45.0 | S-27 | 0.4 | 1.0 | 0.040 | Butyl butyrate | 60.0 | Si | 20.0 | 50.0 | VGCF | 1.6 | 4.0 | Present invention |
| NK-33 | LPS | 18.0 | 45.0 | S-33 | 0.4 | 1.0 | 0.040 | Butyl butyrate | 60.0 | Si | 20.0 | 50.0 | VGCF | 1.6 | 4.0 | Present invention |

Negative electrode composition

43

[Table 2-4]

| | No. | Inorganic solid electrolyte | | | Binder composition | | | | Dispersion medium | | Active material | | | Conductive auxiliary agent | | | Note |
|---|---|---|---|---|---|---|---|---|---|---|---|---|---|---|---|---|---|
| | | | Composition content | Solid content | | Composition content | Solid content | Content $C_{MS}$ | | Composition content | | Composition content | Solid content | | Composition content | Solid content | |
| Inorganic solid electrolyte-containing composition | Kc11 | LPS | 39.4 | 98.5 | T-1 | 0.6 | 1.5 | - | Butyl butyrate | 60.0 | - | - | - | - | - | - | Comparative Example |
| | Kc12 | LPS | 39.4 | 98.5 | T-2 | 0.6 | 1.5 | 0.060 | Butyl butyrate | 60.0 | - | - | - | - | - | - | Comparative Example |
| | Kc13 | LPS | 39.4 | 98.5 | T-3 | 0.6 | 1.5 | 0.060 | Butyl butyrate | 60.0 | - | - | - | - | - | - | Comparative Example |
| | Kc14 | LPS | 39.4 | 98.5 | T-4 | 0.6 | 1.5 | 0.000000060 | Butyl butyrate | 60.0 | - | - | - | - | - | - | Comparative Example |
| | Kc15 | LPS | 39.4 | 98.5 | T-5 | 0.6 | 1.5 | $6.0 \times 10^2$ | Butyl butyrate | 60.0 | - | - | - | - | - | - | Comparative Example |
| Positive electrode composition | PKc21 | LPS | 22.9 | 57.2 | T-1 | 0.4 | 1.0 | - | Butyl butyrate | 60.0 | NMC | 16.0 | 40.0 | AB | 0.7 | 1.8 | Comparative Example |
| | PKc22 | LPS | 22.9 | 57.2 | T-2 | 0.4 | 1.0 | 0.040 | Butyl butyrate | 60.0 | NMC | 16.0 | 40.0 | AB | 0.7 | 1.8 | Comparative Example |
| | PKc23 | LPS | 22.9 | 57.2 | T-3 | 0.4 | 1.0 | 0.040 | Butyl butyrate | 60.0 | NMC | 16.0 | 40.0 | AB | 0.7 | 1.8 | Comparative Example |
| | PKc24 | LPS | 22.9 | 57.2 | T-4 | 0.4 | 1.0 | 0.000000040 | Butyl butyrate | 60.0 | NMC | 16.0 | 40.0 | AB | 0.7 | 1.8 | Comparative Example |
| | PKc25 | LPS | 22.9 | 57.2 | T-5 | 0.4 | 1.0 | $4.0 \times 10^2$ | Butyl butyrate | 60.0 | NMC | 16.0 | 40.0 | AB | 0.7 | 1.8 | Comparative Example |
| Negative electrode composition | NKc21 | LPS | 18.0 | 45.0 | T-1 | 0.4 | 1.0 | - | Butyl butyrate | 60.0 | Si | 20.0 | 50.0 | VGCF | 1.6 | 4.0 | Comparative Example |
| | NKc22 | LPS | 18.0 | 45.0 | T-2 | 0.4 | 1.0 | 0.040 | Butyl butyrate | 60.0 | Si | 20.0 | 50.0 | VGCF | 1.6 | 4.0 | Comparative Example |
| | NKc23 | LPS | 18.0 | 45.0 | T-3 | 0.4 | 1.0 | 0.040 | Butyl butyrate | 60.0 | Si | 20.0 | 50.0 | VGCF | 1.6 | 4.0 | Comparative Example |
| | NKc24 | LPS | 18.0 | 45.0 | T-4 | 0.4 | 1.0 | 0.000000040 | Butyl butyrate | 60.0 | Si | 20.0 | 50.0 | VGCF | 1.6 | 4.0 | Comparative Example |
| | NKc25 | LPS | 18.0 | 45.0 | T-5 | 0.4 | 1.0 | $4.0 \times 10^2$ | Butyl butyrate | 60.0 | Si | 20.0 | 50.0 | VGCF | 1.6 | 4.0 | Comparative Example |

<Abbreviations in table>

LPS: LPS synthesized in Synthesis Example A
NMC: $LiNi_{1/3}Co_{1/3}Mn_{1/3}O_2$
Si: Silicon (APS of 1 to 5 $\mu$m, manufactured by Alfa Aesar)
AB: Acetylene black
VGCF: Carbon nanofiber

4. Production of sheet for all-solid state secondary battery

A sheet for an all-solid state secondary battery was prepared as follows.

<Production of solid electrolyte sheet for all-solid state secondary battery>

Each of the inorganic solid electrolyte-containing compositions shown in the column of "Solid electrolyte composition No." of Table 3-1 or Table 3-4 obtained as described above was applied onto an aluminum foil having a thickness of 20 $\mu$m using a baker type applicator (product name: SA-201, manufactured by Tester Sangyo Co., Ltd.) and heated at 80°C for 2 hours to dry (to remove the dispersion medium) the inorganic solid electrolyte-containing composition. Then, using a heat press machine, the inorganic solid electrolyte-containing composition which had been dried at a temperature of 120°C and a pressure of 40 MPa for 10 seconds was heated and pressurized to produce each of solid electrolyte sheets 101 to 133, and c11 to c15 for an all-solid state secondary battery (in Table 3-1 and Table 3-4, it is described as "Solid electrolyte sheet"). The film thickness of the solid electrolyte layer was 40 $\mu$m.

<Production of positive electrode sheet for all-solid state secondary battery>

Each of the positive electrode compositions obtained as described above, which is shown in the column of "Electrode composition No." in Table 3-2 or Table 3-4, was applied onto an aluminum foil having a thickness of 20 $\mu$m by using a baker type applicator (product name: SA-201), heating was carried out at 80°C for 1 hour, and then heating was further carried out at 110°C for 1 hour to dry (to remove the dispersion medium) the positive electrode composition. Then, using a heat press machine, the dried positive electrode composition was pressurized (10 MPa, 1 minute) at 25°C to produce each of positive electrode sheets 201 to 233, and c21 to c25 for an all-solid state secondary battery, having a positive electrode active material layer having a film thickness of 70 $\mu$m (in Table 3-2 and Table 3-4, it is described as "Positive electrode sheet").

<Production of negative electrode sheet for all-solid state secondary battery>

Each of the compositions for a negative electrode obtained as described above, which is shown in the column of "Electrode composition No." of Table 3-3 or Table 3-4, was applied onto a copper foil having a thickness of 20 $\mu$m by using a baker type applicator (product name: SA-201), heating was carried out at 80°C for 1 hour, and then heating was further carried out at 110°C for 1 hour to dry (to remove the dispersion medium) the negative electrode composition. Then, using a heat press machine, the dried negative electrode composition was pressurized (10 MPa, 1 minute) at 25°C to produce each of negative electrode sheets 301 to 333, and c31 to c35 for an all-solid state secondary battery, having a negative electrode active material layer having a film thickness of 60 $\mu$m (in Table 3-3 and Table 3-4, it is described as "Negative electrode sheet").

[Table 3-1]

| Sheet No. | Solid electrolyte composition No. | Binder composition No. | Note 1 | Note 2 |
|---|---|---|---|---|
| 101 | K-1 | S-1 | | Present invention |
| 102 | K-2 | S-2 | | Present invention |
| 103 | K-3 | S-3 | | Present invention |
| 104 | K-4 | S-4 | | Present invention |
| 105 | K-5 | S-5 | | Present invention |

(continued)

| Sheet No. | Solid electrolyte composition No. | Binder composition No. | Note 1 | Note 2 |
|---|---|---|---|---|
| 106 | K-6 | S-6 | | Present invention |
| 107 | K-7 | S-7 | | Present invention |
| 108 | K-8 | S-8 | | Present invention |
| 109 | K-9 | S-9 | | Present invention |
| 110 | K-10 | S-10 | | Present invention |
| 111 | K-11 | S-11 | | Present invention |
| 112 | K-12 | S-12 | | Present invention |
| 128 | K-28 | S-28 | | Present invention |
| 113 | K-13 | S-13 | | Present invention |
| 114 | K-14 | S-14 | | Present invention |
| 115 | K-15 | S-15 | Solid electrolyte sheet | Present invention |
| 116 | K-16 | S-16 | | Present invention |
| 129 | K-29 | S-29 | | Present invention |
| 117 | K-17 | S-17 | | Present invention |
| 118 | K-18 | S-18 | | Present invention |
| 119 | K-19 | S-19 | | Present invention |
| 120 | K-20 | S-20 | | Present invention |
| 130 | K-30 | S-30 | | Present invention |
| 131 | K-31 | S-31 | | Present invention |
| 132 | K-32 | S-32 | | Present invention |
| 121 | K-21 | S-21 | | Present invention |
| 122 | K-22 | S-22 | | Present invention |
| 123 | K-23 | S-23 | | Present invention |
| 124 | K-24 | S-24 | | Present invention |
| 125 | K-25 | S-25 | | Present invention |
| 126 | K-26 | S-26 | | Present invention |
| 127 | K-27 | S-27 | | Present invention |
| 133 | K-33 | S-33 | | Present invention |

[Table 3-2]

| Sheet No. | Electrode composition No. | Binder composition No. | Note 1 | Note 2 |
|---|---|---|---|---|
| 201 | PK-1 | S-1 | | Present invention |
| 202 | PK-2 | S-2 | | Present invention |
| 203 | PK-3 | S-3 | | Present invention |
| 204 | PK-4 | S-4 | | Present invention |
| 205 | PK-5 | S-5 | | Present invention |
| 206 | PK-6 | S-6 | | Present invention |
| 207 | PK-7 | S-7 | | Present invention |
| 208 | PK-8 | S-8 | | Present invention |

(continued)

| Sheet No. | Electrode composition No. | Binder composition No. | Note 1 | Note 2 |
|---|---|---|---|---|
| 209 | PK-9 | S-9 | | Present invention |
| 210 | PK-10 | S-10 | | Present invention |
| 211 | PK-11 | S-11 | | Present invention |
| 212 | PK-12 | S-12 | | Present invention |
| 228 | PK-28 | S-28 | | Present invention |
| 213 | PK-13 | S-13 | | Present invention |
| 214 | PK-14 | S-14 | | Present invention |
| 215 | PK-15 | S-15 | Positive electrode sheet | Present invention |
| 216 | PK-16 | S-16 | | Present invention |
| 229 | PK-29 | S-29 | | Present invention |
| 217 | PK-17 | S-17 | | Present invention |
| 218 | PK-18 | S-18 | | Present invention |
| 219 | PK-19 | S-19 | | Present invention |
| 220 | PK-20 | S-20 | | Present invention |
| 230 | PK-30 | S-30 | | Present invention |
| 231 | PK-31 | S-31 | | Present invention |
| 232 | PK-32 | S-32 | | Present invention |
| 221 | PK-21 | S-21 | | Present invention |
| 222 | PK-22 | S-22 | | Present invention |
| 223 | PK-23 | S-23 | | Present invention |
| 224 | PK-24 | S-24 | | Present invention |
| 225 | PK-25 | S-25 | | Present invention |
| 226 | PK-26 | S-26 | | Present invention |
| 227 | PK-27 | S-27 | | Present invention |
| 233 | PK-33 | S-33 | | Present invention |

[Table 3-3]

| Sheet No. | Electrode composition No. | Binder composition No. | Note 1 | Note 2 |
|---|---|---|---|---|
| 301 | NK-1 | S-1 | | Present invention |
| 302 | NK-2 | S-2 | | Present invention |
| 303 | NK-3 | S-3 | | Present invention |
| 304 | NK-4 | S-4 | | Present invention |
| 305 | NK-5 | S-5 | | Present invention |
| 306 | NK-6 | S-6 | | Present invention |
| 307 | NK-7 | S-7 | | Present invention |
| 308 | NK-8 | S-8 | | Present invention |
| 309 | NK-9 | S-9 | | Present invention |
| 310 | NK-10 | S-10 | | Present invention |
| 311 | NK-11 | S-11 | | Present invention |

(continued)

| Sheet No. | Electrode composition No. | Binder composition No. | Note 1 | Note 2 |
|---|---|---|---|---|
| 312 | NK-12 | S-12 | | Present invention |
| 328 | NK-28 | S-28 | | Present invention |
| 313 | NK-13 | S-13 | | Present invention |
| 314 | NK-14 | S-14 | | Present invention |
| 315 | NK-15 | S-15 | Negative electrode sheet | Present invention |
| 316 | NK-16 | S-16 | | Present invention |
| 329 | NK-29 | S-29 | | Present invention |
| 317 | NK-17 | S-17 | | Present invention |
| 318 | NK-18 | S-18 | | Present invention |
| 319 | NK-19 | S-19 | | Present invention |
| 320 | NK-20 | S-20 | | Present invention |
| 330 | NK-30 | S-30 | | Present invention |
| 331 | NK-31 | S-31 | | Present invention |
| 332 | NK-32 | S-32 | | Present invention |
| 321 | NK-21 | S-21 | | Present invention |
| 322 | NK-22 | S-22 | | Present invention |
| 323 | NK-23 | S-23 | | Present invention |
| 324 | NK-24 | S-24 | | Present invention |
| 325 | NK-25 | S-25 | | Present invention |
| 326 | NK-26 | S-26 | | Present invention |
| 327 | NK-27 | S-27 | | Present invention |
| 333 | NK-33 | S-33 | | Present invention |

[Table 3-4]

| Sheet No. | Solid electrolyte composition No. | Binder polymer No. | Electrode composition No. | Binder polymer No. | Note 1 | Note 2 |
|---|---|---|---|---|---|---|
| c11 | Kc11 | T-1 | - | - | | Comparative Example |
| c12 | Kc12 | T-2 | - | - | | Comparative Example |
| c13 | Kc13 | T-3 | - | - | Solid electrolyte sheet | Comparative Example |
| c14 | Kc14 | T-4 | - | - | | Comparative Example |
| c15 | Kc15 | T-5 | - | - | | Comparative Example |
| c21 | - | - | PKc21 | T-1 | | Comparative Example |
| c22 | - | - | PKc22 | T-2 | | Comparative Example |
| c23 | - | - | PKc23 | T-3 | Positive electrode sheet | Comparative Example |
| c24 | - | - | PKc24 | T-4 | | Comparative Example |
| c25 | - | - | PKc25 | T-5 | | Comparative Example |

(continued)

| Sheet No. | Solid electrolyte composition No. | Binder polymer No. | Electrode composition No. | Binder polymer No. | Note 1 | Note 2 |
|---|---|---|---|---|---|---|
| c31 | - | - | NKc21 | T-1 | Negative electrode sheet | Comparative Example |
| c32 | - | - | NKc22 | T-2 | | Comparative Example |
| c33 | - | - | NKc23 | T-3 | | Comparative Example |
| c34 | - | - | NKc24 | T-4 | | Comparative Example |
| c35 | | | NKc25 | T-5 | | Comparative Example |

5. Manufacture of all-solid state secondary battery

First, each of a positive electrode sheet for an all-solid state secondary battery, including a solid electrolyte layer, and a negative electrode sheet for an all-solid state secondary battery, including a solid electrolyte layer, which would be used for manufacturing an all-solid state secondary battery, was produced.

- Production of positive electrode sheet for all-solid state secondary battery, which includes solid electrolyte layer -

The solid electrolyte sheet shown in the column of "Solid electrolyte layer (sheet No.)" of Table 4-1 and Table 4-3, prepared as described above, was overlaid on the positive electrode active material layer of each of the positive electrode sheets for an all-solid state secondary battery shown in the column of "Electrode active material layer (sheet No.)" of Table 4-1 and Table 4-3 so that it came into contact with the positive electrode active material layer, transferred (laminated) by being pressurized at 50 MPa and 25°C using a press machine, and then pressurized at 600 MPa and at 25°C, whereby each of positive electrode sheet Nos. 201 to 233, and c21 to c25 for an all-solid state secondary battery having a thickness of 25 $\mu$m (thickness of positive electrode active material layer: 50 $\mu$m) was produced.

- Production of negative electrode sheet for all-solid state secondary battery, which includes solid electrolyte layer -

Next, the solid electrolyte sheet shown in the column of "Solid electrolyte layer (sheet No.)" of Table 4-2 and Table 4-3, prepared as described above, was overlaid on the negative electrode active material layer of each of the negative electrode sheets for an all-solid state secondary battery shown in the column of "Electrode active material layer (sheet No.)" of Table 4-2 and Table 4-3 so that it came into contact with the negative electrode active material layer, transferred (laminated) by being pressurized at 50 MPa and 25°C using a press machine, and then pressurized at 600 MPa and at 25°C, whereby each of negative electrode sheets 301 to 333, and c31 to c35 for an all-solid state secondary battery having a thickness of 25 $\mu$m (thickness of negative electrode active material layer: 40 $\mu$m) was produced.

An all-solid state secondary battery No. 401 having a layer configuration illustrated in Fig. 1 was manufactured as follows.

The positive electrode sheet No. 201 for an all-solid state secondary battery (the aluminum foil of the solid electrolyte-containing sheet had been peeled off), which included the solid electrolyte layer obtained as described above, was cut out into a disk shape having a diameter of 14.5 mm and placed, as illustrated in Fig. 2, in a stainless 2032-type coin case 11 into which a spacer and a washer (not illustrated in Fig. 2) had been incorporated. Next, a lithium foil (thickness: 5 $\mu$m) cut out in a disk shape having a diameter of 15 mm was overlaid on the solid electrolyte layer. After further overlaying a stainless foil (thickness: 10 $\mu$m) thereon, the 2032-type coin case 11 was crimped to manufacture an all-solid state secondary battery 13 (No. 401), illustrated in Fig. 2.

The all-solid state secondary battery manufactured in this manner has a layer configuration illustrated in Fig. 1 (however, the lithium foil corresponds to a negative electrode active material layer 2 and a negative electrode collector 1).

Each of all-solid state secondary batteries Nos. 402 to 435 and c101 to c105 was manufactured in the same manner as in the manufacturing of the all-solid state secondary battery No. 401, except that in the manufacturing of the all-solid state secondary battery No. 401, a negative electrode sheet for an all-solid state secondary battery, which has a solid electrolyte layer and is indicated by No. shown in the column of "Electrode active material layer (sheet No.)" of Table 4-1 and Table 4-3 was used instead of the positive electrode sheet No. 201 for a secondary battery, which has a solid electrolyte layer.

An all-solid state secondary battery No. 501 having a layer configuration illustrated in Fig. 1 was manufactured as follows.

The negative electrode sheet No. 301 for an all-solid state secondary battery (the aluminum foil of the solid electrolyte-containing sheet had been peeled off), which included the solid electrolyte obtained as described above, was cut out into a disk shape having a diameter of 14.5 mm and placed, as illustrated in Fig. 2, in a stainless 2032-type coin case 11 into which a spacer and a washer (not illustrated in Fig. 2) had been incorporated. Next, a positive electrode sheet (a positive electrode active material layer) punched out from the positive electrode sheet for an all-solid state secondary battery produced below into a disk shape having a diameter of 14.0 mm was overlaid on the solid electrolyte layer. A stainless steel foil (a positive electrode collector) was further layered thereon to form a laminate 12 for an all-solid state secondary battery (a laminate consisting of stainless steel foil - aluminum foil - positive electrode active material layer - solid electrolyte layer - negative electrode active material layer - copper foil). Then, the 2032-type coin case 11 was crimped to manufacture an all-solid state secondary battery No. 501 illustrated in Fig. 2.

A positive electrode sheet for a solid state secondary battery to be used in the manufacturing of the all-solid state secondary battery No. 501 was prepared as follows.

- Preparation of positive electrode composition -

180 beads of zirconia beads having a diameter of 5 mm were put into a 45 mL container made of zirconia (manufactured by Fritsch Japan Co., Ltd.), 2.7 g of the LPS synthesized in the above Synthesis Example A, and 0.3 g of KYNAR FLEX 2500-20 (product name, PVdF-HFP: polyvinylidene fluoride - hexafluoropropylene copolymer, manufactured by Arkema S.A.) in terms of solid content mass and 22 g of butyl butyrate were put into the above container. The container was set in a planetary ball mill P-7 (product name, manufactured by Fritsch Japan Co., Ltd.) and the components were stirred for 60 minutes at 25°C and a rotation speed of 300 rpm. Then, 7.0 g of $LiNi_{1/3}Co_{1/3}Mn_{1/3}O_2$ (NMC) was put into the container as the positive electrode active material, and similarly, the container was set in a planetary ball mill P-7, mixing was continued at 25°C and a rotation speed of 100 rpm for 5 minutes to prepare a positive electrode composition.

- Production of positive electrode sheet for solid state secondary battery -

The positive electrode composition obtained as described above was applied onto an aluminum foil (a positive electrode collector) having a thickness of 20 $\mu$m with a baker type applicator (product name: SA-201, manufactured by Tester Sangyo Co., Ltd.), heating was carried out at 100°C for 2 hours to dry (to remove the dispersion medium) the positive electrode composition. Then, using a heat press machine, the dried positive electrode composition was pressurized (10 MPa, 1 minute) at 25°C to produce each of positive electrode sheets for an all-solid state secondary battery, having a positive electrode active material layer having a film thickness of 80 $\mu$m.

Each of all-solid state secondary batteries Nos. 502 to 535 and c201 to c205 was manufactured in the same manner as in the manufacturing of the all-solid state secondary battery No. 501, except that in the manufacturing of the all-solid state secondary battery No. 501, a negative electrode sheet for an all-solid state secondary battery, which has a solid electrolyte layer and is indicated by No. shown in the column of "Electrode active material layer (sheet No.)" of Table 4-2 and Table 4-3 was used instead of the negative electrode sheet No. 301 for a secondary battery, which has a solid electrolyte layer.

<Evaluation 1: Ion conductivity measurement>

The ion conductivity of each of the manufactured all-solid state secondary batteries was measured. Specifically, the alternating-current impedance of each of the all-solid state secondary batteries was measured in a constant-temperature tank (25°C) using a 1255B FREQUENCY RESPONSE ANALYZER (product name, manufactured by SOLARTRON Analytical) at a voltage magnitude of 5 mV and a frequency of 1 MHz to 1 Hz. From the measurement result, the resistance of the sample for measuring ion conductivity in the layer thickness direction was determined, and the ion conductivity was determined by the calculation according to Expression (C1). The results are shown in Tables 4-1 to Table 4-3 (collectively referred to as Table 4).

Ion conductivity $\sigma$ (mS/cm) = 1,000 $\times$ sample layer thickness (cm)/[resistance ($\Omega$) $\times$ sample area (cm$^2$)]    Expression (C1):

In Expression (C1), the sample layer thickness is a value obtained by measuring the thickness before placing the laminate 12 in the 2032-type coin case 11 and subtracting the thickness of the collector (the total layer thickness of the solid electrolyte layer and the electrode active material layer). The sample area is the area of the disk-shaped sheet having a diameter of 14.5 mm.

It was determined where the obtained ion conductivity $\sigma$ was included in any of the following evaluation standards.

In this test, in a case where the evaluation standard is "C" or higher, the ion conductivity σ is the pass level. It is noted that a large ion conductivity σ means a small resistance, which is evident from Expression (C1).

- Evaluation standards -

A: $0.30 \leq \sigma$

B: $0.25 \leq \sigma < 0.30$

C: $0.20 \leq \sigma < 0.25$

D: $0.15 \leq \sigma < 0.20$

E: $0.10 \leq \sigma < 0.15$

F: $\sigma < 0.10$

[Table 4-1]

| No. | Layer configuration | | Ion conductivity | Note |
|---|---|---|---|---|
| | Electrode active material layer (Sheet No.) | Solid electrolyte layer (Sheet No.) | | |
| 401 | 201 | 101 | C | Present invention |
| 402 | 202 | 102 | B | Present invention |
| 403 | 203 | 103 | A | Present invention |
| 404 | 204 | 104 | B | Present invention |
| 405 | 205 | 105 | C | Present invention |
| 406 | 206 | 106 | B | Present invention |
| 407 | 207 | 107 | C | Present invention |
| 408 | 208 | 108 | B | Present invention |
| 409 | 209 | 109 | B | Present invention |
| 410 | 210 | 110 | B | Present invention |
| 411 | 211 | 111 | B | Present invention |
| 412 | 212 | 112 | B | Present invention |
| 428 | 228 | 128 | C | Present invention |
| 413 | 213 | 113 | C | Present invention |
| 414 | 214 | 114 | B | Present invention |
| 415 | 215 | 115 | C | Present invention |
| 416 | 216 | 116 | B | Present invention |
| 429 | 229 | 129 | C | Present invention |
| 417 | 217 | 117 | C | Present invention |
| 418 | 218 | 118 | C | Present invention |
| 419 | 219 | 119 | C | Present invention |
| 420 | 220 | 120 | B | Present invention |
| 430 | 230 | 130 | B | Present invention |

(continued)

| No. | Layer configuration | | Ion conductivity | Note |
|---|---|---|---|---|
| | Electrode active material layer (Sheet No.) | Solid electrolyte layer (Sheet No.) | | |
| 431 | 231 | 131 | C | Present invention |
| 432 | 232 | 132 | B | Present invention |
| 421 | 221 | 121 | C | Present invention |
| 422 | 222 | 122 | A | Present invention |
| 423 | 223 | 123 | A | Present invention |
| 424 | 224 | 124 | A | Present invention |
| 425 | 225 | 125 | B | Present invention |
| 426 | 226 | 126 | B | Present invention |
| 427 | 227 | 127 | B | Present invention |
| 433 | 233 | 133 | C | Present invention |
| 434 | 227 | c11 | C | Present invention |
| 435 | c21 | 127 | C | Present invention |

[Table 4-2]

| No. | Laver configuration | | Ion conductivity | Note |
|---|---|---|---|---|
| | Electrode active material layer (Sheet No.) | Solid electrolyte layer (Sheet No.) | | |
| 501 | 301 | 101 | C | Present invention |
| 502 | 302 | 102 | B | Present invention |
| 503 | 303 | 103 | A | Present invention |
| 504 | 304 | 104 | B | Present invention |
| 505 | 305 | 105 | C | Present invention |
| 506 | 306 | 106 | B | Present invention |
| 507 | 307 | 107 | C | Present invention |
| 508 | 308 | 108 | B | Present invention |
| 509 | 309 | 109 | B | Present invention |
| 510 | 310 | 110 | B | Present invention |
| 511 | 311 | 111 | B | Present invention |
| 512 | 312 | 112 | B | Present invention |
| 528 | 328 | 128 | C | Present invention |
| 513 | 313 | 113 | C | Present invention |
| 514 | 314 | 114 | B | Present invention |
| 515 | 315 | 115 | C | Present invention |
| 516 | 316 | 116 | B | Present invention |
| 529 | 329 | 129 | C | Present invention |
| 517 | 317 | 117 | C | Present invention |
| 518 | 318 | 118 | C | Present invention |
| 519 | 319 | 119 | C | Present invention |

(continued)

| No. | Laver configuration | | Ion conductivity | Note |
| --- | --- | --- | --- | --- |
| | Electrode active material layer (Sheet No.) | Solid electrolyte layer (Sheet No.) | | |
| 520 | 320 | 120 | B | Present invention |
| 530 | 330 | 130 | B | Present invention |
| 531 | 331 | 131 | C | Present invention |
| 532 | 332 | 132 | B | Present invention |
| 521 | 321 | 121 | C | Present invention |
| 522 | 322 | 122 | A | Present invention |
| 523 | 323 | 123 | A | Present invention |
| 524 | 324 | 124 | A | Present invention |
| 525 | 325 | 125 | B | Present invention |
| 526 | 326 | 126 | B | Present invention |
| 527 | 327 | 127 | B | Present invention |
| 533 | 333 | 133 | C | Present invention |
| 534 | 327 | c11 | C | Present invention |
| 535 | c31 | 127 | C | Present invention |

[Table 4-3]

| No. | Laver configuration | | Ion conductivity | Note |
| --- | --- | --- | --- | --- |
| | Electrode active material layer (Sheet No.) | Solid electrolyte layer (Sheet No.) | | |
| c101 | c21 | c11 | D | Comparative Example |
| c102 | c22 | c12 | E | Comparative Example |
| c103 | c23 | c13 | F | Comparative Example |
| c104 | c24 | c14 | F | Comparative Example |
| c105 | c25 | c15 | F | Comparative Example |
| c201 | c31 | c11 | D | Comparative Example |
| c202 | c32 | c12 | E | Comparative Example |
| c203 | c33 | c13 | F | Comparative Example |
| c204 | c34 | c14 | F | Comparative Example |
| c205 | c35 | c15 | F | Comparative Example |

The following facts can be seen from the results of Table 1 to Table 4.

In the inorganic solid electrolyte-containing compositions obtained by using, as the binder component, binder compositions T-1 to T-5 that do not contain a polymer binder composed of a polymer containing less than 30% by mass of a constitutional component derived from (meth)acrylic acid in all the constitutional component of the polymer, and a metal element-containing component having a particle diameter of 10 $\mu$m or less at a content of $1.0 \times 10^{-3}$ to $1.0 \times 10^{4}$ ppm, a constitutional layer having a low resistance cannot be formed and the lower resistance of the all-solid state secondary battery cannot be sufficiently achieved.

Specifically, the compositions Kc11, PKc21, and NKc21, which are obtained by using the binder composition T-1 in which the metal element-containing component is not used in combination with the polymer binder, can reduce the resistance of the all-solid state secondary battery to some extent, but cannot meet the high demands in recent years.

On the other hand, in the compositions Kc12, PKc22, and NKc22, which are obtained by using the binder composition T-2 in which a large metal element-containing component having a particle diameter of 45 $\mu$m is used in combination with the polymer binder, the increase in the resistance of the all-solid state secondary battery cannot be suppressed.

In addition, in the compositions Kc13, PKc23, and NKc23 which are obtained by using the binder composition T-3 in which the polymer binder composed of a polymer having 35% by mass of a constitutional component derived from (meth)acrylic acid in all the constitutional components of the polymer is used in combination with the metal element-containing component, the polymer binder is considered to exhibit excessive aggregating properties, and as a result, the increase in resistance of the all-solid state secondary battery cannot be suppressed.

In the composition Kc14, PKc24, and NKc24, which are obtained by using the binder composition T-4 in which the content of the metal element-containing component having a particle diameter of 10 $\mu$m or less is too low, the effect of containing the metal element-containing component is not sufficient, and the increase in the resistance of the all-solid state secondary battery cannot be suppressed.

On the other hand, in the compositions Kc15, PKc25, and NKc25, which are obtained by using the binder composition T-5 in which the content of the metal element-containing component is too high even in a case where the particle diameter of the metal element-containing component is 10 $\mu$m or less, the polymer binder is considered to be likely to aggregate by the metal element-containing component existing excessively, and as a result, the increase in the resistance of the all-solid state secondary battery cannot be suppressed.

On the other hand, in a case where all of the compositions K-1 to K-33, PK-1 to PK-33, and NK-1 to NK-33, which are obtained by using, as a binder component, a binder composition S-1 to S-33 that contains a polymer binder composed of a polymer containing less than 30% by mass of a constitutional component derived from (meth)acrylic acid in all the constitutional components of the polymer, and a metal element-containing component having a particle diameter of 10 $\mu$m or less at a content of $1.0 \times 10^{-3}$ to $1.0 \times 10^{4}$ ppm, are used as a constitutional layer forming material that forms at least one material layer of a non-aqueous secondary battery, it is possible to realize an all-solid state secondary battery in which an increase in resistance is effectively suppressed and the resistance is sufficiently reduced (the ion conductivity is sufficiently increased). In addition, in a case where the binder forming polymer has a polar functional group such as a carboxy group, the interaction with the metal element-containing component is strengthened, the aggregating property of the polymer binder is further enhanced, and the battery resistance can be further reduced.

The present invention has been described with the embodiments thereof, any details of the description of the present invention are not limited unless described otherwise, and it is obvious that the present invention is widely construed without departing from the gist and scope of the present invention described in the accompanying claims.

This application claims priority based on JP2022-100913 filed in Japan on June 23, 2022, and JP2023-081754 filed in Japan on May 17, 2023, which are incorporated herein by reference as a part of the description of the present specification.

1: negative electrode collector
2: negative electrode active material layer
3: solid electrolyte layer
4: positive electrode active material layer
5: positive electrode collector
6: operation portion
10: all-solid state secondary battery
11: 2032-type coin case
12: laminate for all-solid state secondary battery
13: coin-type all-solid state secondary battery

**Claims**

**1.** A binder composition for a secondary battery, comprising:

a metal element-containing component having a particle diameter of 10 $\mu$m or less; and
a polymer binder,
wherein a content of the metal element-containing component in the composition is $1.0 \times 10^{-3}$ to $1.0 \times 10^{4}$ ppm, and
a polymer that forms the polymer binder contains less than 30% by mass of a constitutional component derived from an ethylenically unsaturated carboxylic acid in all constitutional components of the polymer.

**2.** The binder composition for a secondary battery according to claim 1,

wherein the metal element-containing component contains at least one metal element selected from Al, B, Ga, In, Si, or Ge.

3. The binder composition for a secondary battery according to claim 1 or 2,

wherein the polymer that forms the polymer binder contains a constitutional component having at least one polar functional group of the following group (a),
<polar functional group (a)>
a sulfonate group, a phosphate group, a phosphonate group, a hydroxy group, a carboxy group other than a carboxy group derived from the ethylenically unsaturated carboxylic acid, an oxetane group, an epoxy group, a dicarboxylic acid anhydride group, a thiol group, an ether group, a thioether group, a thioester group, a fluoroalkyl group, or a salt thereof.

4. The binder composition for a secondary battery according to any one of claims 1 to 3,
wherein the polymer that forms the polymer binder contains a carboxy group.

5. The binder composition for a secondary battery according to any one of claims 1 to 4,
wherein the polymer that forms the polymer binder contains 0.1% to 10 % by mass of a constitutional component having a carboxy group in all the constitutional components of the polymer.

6. The binder composition for a secondary battery according to any one of claims 1 to 5,
wherein a weight-average molecular weight of the polymer binder is $1.0 \times 10^4$ to $1.0 \times 10^6$.

7. A solid electrolyte-containing composition for a secondary battery, comprising:

the binder composition for a secondary battery according to any one of claims 1 to 6; and
an inorganic solid electrolyte having an ion conductivity of a metal belonging to Group 1 or Group 2 in the periodic table,
wherein a content of a metal element-containing component in the solid electrolyte-containing composition for a secondary battery is $1.0 \times 10^{-3}$ to $1.0 \times 10^4$ ppm.

8. The solid electrolyte-containing composition for a secondary battery according to claim 7, further comprising:
an active material.

9. The solid electrolyte-containing composition for a secondary battery according to claim 7 or 8, further comprising:
a conductive auxiliary agent.

10. A sheet for an all-solid state secondary battery, comprising:
a layer formed of the solid electrolyte-containing composition for a secondary battery according to any one of claims 7 to 9.

11. A sheet for an all-solid state secondary battery, comprising:
an active material layer formed of the solid electrolyte-containing composition for a secondary battery according to claim 8 or 9.

12. An all-solid state secondary battery comprising, in the following order:

a positive electrode active material layer;
a solid electrolyte layer; and
a negative electrode active material layer,
wherein at least one layer of the positive electrode active material layer, the solid electrolyte layer, or the negative electrode active material layer is a layer formed of the solid electrolyte-containing composition for a secondary battery according to any one of claims 7 to 9.

13. An all-solid state secondary battery comprising, in the following order:

a positive electrode active material layer;
a solid electrolyte layer; and

a negative electrode active material layer,
wherein at least one layer of the positive electrode active material layer or the negative electrode active material layer is an active material layer formed of the solid electrolyte-containing composition for a secondary battery according to claim 8 or 9.

# FIG. 1

# FIG. 2

## INTERNATIONAL SEARCH REPORT

International application No.

**PCT/JP2023/022773**

### A. CLASSIFICATION OF SUBJECT MATTER

*H01M 4/62*(2006.01)i; *C08K 3/08*(2006.01)i; *C08K 3/10*(2018.01)i; *C08L 101/00*(2006.01)i; *C08L 101/02*(2006.01)i; *C08L 101/08*(2006.01)i; *H01M 4/13*(2010.01)i; *H01M 4/139*(2010.01)i; *H01M 10/052*(2010.01)i; *H01M 10/0562*(2010.01)i

FI: H01M4/62 Z; C08K3/08; C08K3/10; C08L101/00; C08L101/02; C08L101/08; H01M4/13; H01M4/139; H01M10/052; H01M10/0562

According to International Patent Classification (IPC) or to both national classification and IPC

### B. FIELDS SEARCHED

Minimum documentation searched (classification system followed by classification symbols)

H01M4/62; C08K3/08; C08K3/10; C08L101/00; C08L101/02; C08L101/08; H01M4/13; H01M4/139; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/187273 A1 (JSR CORP) 23 September 2021 (2021-09-23) | 1-13 |
| A | WO 2022/085458 A1 (ZEON CORP ) 28 April 2022 (2022-04-28) | 1-13 |
| A | WO 2020/090694 A1 (TOAGOSEI CO LTD) 07 May 2020 (2020-05-07) | 1-13 |

☐ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 September 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/022773**

| Patent document cited in search report | | | Publication date (day/month/year) | Patent family member(s) | | | Publication date (day/month/year) |
|---|---|---|---|---|---|---|---|
| WO | 2021/187273 | A1 | 23 September 2021 | EP | 4122962 | A1 | |
| | | | | CN | 115362578 | A | |
| | | | | KR | 10-2022-0155590 | A | |
| WO | 2022/085458 | A1 | 28 April 2022 | (Family: none) | | | |
| WO | 2020/090694 | A1 | 07 May 2020 | US | 2021/0399306 | A1 | |
| | | | | CN | 112997341 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010032784 A
- WO 2020090694 A
- WO 2016103730 A
- JP 2013157086 A
- JP 2015088486 A
- JP 62022066 A
- JP S6222066 A
- JP 2006856 A
- JP H26856 A

- JP 3045473 A
- JP H345473 A
- JP 5090844 A
- JP H590844 A
- JP 6004516 A
- JP H64516 A
- JP 2022100913 A
- JP 2023081754 A

**Non-patent literature cited in the description**

- *ADVANCED MATERIALS*, 2018, vol. 30, 1803075
- **T. OHTOMO** ; **A. HAYASHI** ; **M. TATSUMISAGO** ; **Y. TSUCHIDA** ; **S. HAMA** ; **K. KAWAMOTO**. *Journal of Power Sources*, 2013, vol. 233, 231-235

- **A. HAYASHI** ; **S. HAMA** ; **H. MORIMOTO** ; **M. TATSUMISAGO** ; **T. MINAMI**. *Chem. Lett.*, 2001, 872-873